# EUROPEAN PATENT APPLICATION

(11) **EP 4 395 128 A1**
(43) Date of publication of application: **03.07.2024**
(21) Application number: 23747353.3
(22) Date of filing: 26.01.2023
(51) Int. Cl.: H02J 50/80, H02J 50/10, H02J 50/90, H05B 6/02

(54) **METHOD FOR OUTPUTTING INFORMATION ABOUT COOKING APPLIANCE AND WIRELESS POWER TRANSMISSION DEVICE THEREFOR**

(30) Priority: 27.01.2022 KR 20220012588
(71) Applicant: Samsung Electronics Co., Ltd., Suwon-si, Gyeonggi-do 16677 (KR)
(72) Inventor: KANG, Heejun, Suwon-si, Gyeonggi-do 16677 (KR); SEO, Byungduck, Suwon-si, Gyeonggi-do 16677 (KR); CHOI, Jiwoong, Suwon-si, Gyeonggi-do 16677 (KR); KIM, Yongwook, Suwon-si, Gyeonggi-do 16677 (KR); CHOI, Hana, Suwon-si, Gyeonggi-do 16677 (KR); CHOO, Hyunjoon, Suwon-si, Gyeonggi-do 16677 (KR)
(74) Representative: Walaski, Jan Filip
(86) International application number: PCT/KR2023/001215
(87) International publication number: WO 2023/146312

(57) **Abstract**

A wireless power transmission apparatus including at least one processor configured to drive a plurality of working coils to transmit power to drive a communication interface of a cooking appliance with which a communication connection has been released when the cooking appliance is moved from a first cooking zone; receive a first wireless communication signal including identification information from the cooking appliance, and drive the working coils to generate respectively corresponding magnetic fields according to a plurality of different power transmission patterns corresponding to a plurality of cooking zones; and output second cooking zone information through an output interface in response to receiving a second wireless communication signal including the identification information regarding the cooking appliance and information regarding the second cooking zone corresponding to one of the plurality of different power transmission patterns detected at a current location of the cooking appliance.

## Description

### TECHNICAL FIELD

The disclosure relates to a wireless power transmission apparatus including a plurality of cooking zones, and a method, performed by the wireless power transmission apparatus, of outputting information regarding a cooking appliance.

### BACKGROUND ART

Induction ranges are heating appliances for cooking using the principle of induction heating and are often called induction stoves. Compared to gas ranges, induction ranges do not consume oxygen and do not emit waste gas, and thus, indoor air pollution and an increase in indoor temperature may be reduced. In addition, induction ranges use an indirect method of inducing a to-be-heated object to generate heat by itself, and have high energy efficiency and stability. Because a contact surface is not heated even though the to-be-heated object generates heat by itself, the risk of burns is low, and accordingly, the demand for induction ranges has recently been increasing.

An induction range may include a plurality of burners. In this case, the induction range includes a separate operation button for each burner, and a user should check a burner on which a container is placed and use an operation button for a corresponding burner to cook. When the induction range includes many burners and various types of containers are placed on the induction range, user's manipulations may be complicated, and the number of times the user uses an operation button to cook using the induction range may increase. Also, in order to change a burner used by the user, the user has to turn off the power of the currently used burner, move a container to another burner, turn on again the power of the burner to which the container has been moved, and re-adjust a power level. Therefore, it is necessary to minimize user's manipulations of the induction range for increased user convenience.

### DESCRIPTION OF EMBODIMENTS

### SOLUTION TO PROBLEM

According to an embodiment of the disclosure, a wireless power transmission apparatus may include a plurality of cooking zones; a communication interface configured to communicate with a cooking appliance, an output interface configured to display information regarding the cooking appliance, a wireless power transmitter including a plurality of working coils respectively corresponding to the plurality of cooking zones, and an inverter circuit configured to drive the plurality of working coils, and at least one processor. The at least one processor of the wireless power transmission apparatus may be configured to in response to release of a communication connection with the cooking appliance that has been located in a first cooking zone among the plurality of cooking zones, control the inverter circuit to drive the plurality of working coils to transmit power to drive a communication interface of the cooking appliance. The at least one processor of the wireless power transmission apparatus may be configured to in response to receiving a first wireless communication signal including identification information regarding the cooking appliance from the cooking appliance through the communication interface of the wireless power transmission apparatus within a preset time after the communication connection is released, control the inverter circuit to drive the plurality of working coils to generate respectively corresponding magnetic fields according to a plurality of different power transmission patterns. The at least one processor of the wireless power transmission apparatus may be configured to in response to receiving a second wireless communication signal including the identification information regarding the cooking appliance and information regarding a second cooking zone among the plurality of cooking zones corresponding to one of the plurality of different power transmission patterns detected at a current location of the cooking appliance, from the cooking appliance through the communication interface of the wireless power transmission apparatus, outputting, through the output interface, the information regarding the second cooking zone.

According to an embodiment of the disclosure, a method of a wireless power transmission apparatus may include in a response to release of a communication connection with a cooking appliance that has been located in a first cooking zone among a plurality of cooking zones of the wireless power transmission apparatus, transmitting power to drive a communication interface of the cooking appliance, in response to receiving a first wireless communication signal including identification information regarding the cooking appliance from the cooking appliance within a preset time after the communication connection is released, transmitting power respectively through the plurality of cooking zones according to a plurality of different power transmission patterns, in response to receiving a second wireless communication signal including the identification information regarding the cooking appliance and information regarding a second cooking zone among the plurality of cooking zones corresponding to one of the plurality of different power transmission patterns detected at a current location of the cooking appliance, outputting, through an output interface of the wireless power transmission apparatus, the information regarding the second cooking zone.

### BRIEF DESCRIPTION OF DRAWINGS

These and/or other embodiments of the disclosure will become apparent and more readily appreciated from the following description of the embodiments, taken in conjunction with the accompanying drawings of which:
FIG. 1 is a diagram for describing a cooking system according to an embodiment of the disclosure.
FIG. 2A is a diagram for describing a type of a cooking appliance according to an embodiment of the disclosure.
FIG. 2B is a diagram for describing a type of a cooking appliance according to an embodiment of the disclosure.
FIG. 2C is a diagram for describing a type of a cooking appliance according to an embodiment of the disclosure.
FIG. 3 is a block diagram for describing a function of a wireless power transmission apparatus, according to an embodiment of the disclosure.
FIG. 4A is a block diagram for describing a function of a wireless power transmission apparatus, according to an embodiment of the disclosure.
FIG. 4B is a diagram for describing a wireless power transmitter of a wireless power transmission apparatus, according to an embodiment of the disclosure.
FIG. 5 is a flowchart for describing a method by which a wireless power transmission apparatus outputs information regarding a cooking appliance, according to an embodiment of the disclosure.
FIG. 6 is a diagram for describing power transmission patterns according to an embodiment of the disclosure.
FIG. 7 is a diagram for describing power transmission patterns according to an embodiment of the disclosure.
FIG. 8A is a flowchart for describing a method by which a wireless power transmission apparatus provides information regarding a location of a cooking appliance according to a type of the cooking appliance, according to an embodiment of the disclosure.
FIG. 8B is a flowchart for describing a method by which a wireless power transmission apparatus provides information regarding a location of a cooking appliance according to a type of the cooking appliance, according to an embodiment of the disclosure.
FIG. 9 is a diagram for describing an operation in which a wireless power transmission apparatus detects a cooking appliance, according to an embodiment of the disclosure.
FIG. 10 is a diagram for describing an operation performed by a wireless power transmission apparatus when a first type of cooking appliance (general induction-heating (IH) container) is placed on the wireless power transmission apparatus, according to an embodiment of the disclosure.
FIG. 11A is a diagram for describing an operation performed by a wireless power transmission apparatus when a second type of cooking appliance (small appliance) is placed on the wireless power transmission apparatus, according to an embodiment of the disclosure.
FIG. 11B is a diagram for describing an operation in which a wireless power transmission apparatus identifies a location of a second type of cooking appliance (small appliance), according to an embodiment of the disclosure.
FIG. 12 is a diagram for describing an operation performed by a wireless power transmission apparatus after a cooking appliance is detached from the wireless power transmission apparatus, according to an embodiment of the disclosure.
FIG. 13 is a diagram for describing an operation in which a wireless power transmission apparatus displays a notification after a cooking appliance is removed from the wireless power transmission apparatus, according to an embodiment of the disclosure.
FIG. 14 is a diagram for describing an operation performed by a wireless power transmission apparatus when a cooking appliance is placed in the same cooking zone within a preset time after the cooking appliance has been removed from the wireless power transmission apparatus, according to an embodiment of the disclosure.
FIG. 15 is a flowchart for describing a method by which a wireless power transmission apparatus displays information regarding a cooking appliance based on operation history information regarding the cooking appliance, according to an embodiment of the disclosure.
FIG. 16 is a diagram for describing an operation in which a wireless power transmission apparatus displays information regarding a cooking appliance based on operation history information regarding the cooking appliance according to an embodiment of the disclosure.
FIG. 17 is a diagram for describing an operation in which a wireless power transmission apparatus displays product type information and location information regarding a plurality of cooking appliances when locations of the plurality of cooking appliances are exchanged with each other according to an embodiment of the disclosure.
FIG. 18 is a flowchart for describing a method by which a wireless power transmission apparatus controls power transmission according to a location movement of a cooking appliance, according to an embodiment of the disclosure.
FIG. 19 is a diagram for describing an operation in which a wireless power transmission apparatus transmits power corresponding to a previous power level value to a cooking appliance in response to a communication reconnection with the cooking appliance according to an embodiment of the disclosure.
FIG. 20 is a flowchart for describing a method by which a wireless power transmission apparatus transmits power according to a power level adjusted based on a temperature increase rate of a cooking appliance, according to an embodiment of the disclosure.
FIG. 21 is a diagram for describing an operation in which a wireless power transmission apparatus transmits power according to a power level adjusted based on a temperature increase rate of a cooking appliance, according to an embodiment of the disclosure.
FIG. 22 is a flowchart for describing a method by which a wireless power transmission apparatus identifies a location of a cooking appliance by using a near-field communication (NFC) tag included in the cooking appliance, according to an embodiment of the disclosure.
FIG. 23 is a diagram for describing an operation in which a wireless power transmission apparatus identifies a location of a cooking appliance by using an NFC tag included in the cooking appliance, according to an embodiment of the disclosure.
FIG. 24 is a flowchart for describing a method by which a wireless power transmission apparatus identifies a location of a cooking appliance by using NFC, according to an embodiment of the disclosure.
FIG. 25 is a diagram for describing an operation in which a wireless power transmission apparatus identifies a location of a cooking appliance by using NFC, according to an embodiment of the disclosure.
FIG. 26 is a flowchart for describing a method by which a wireless power transmission apparatus determines a location of a cooking appliance, according to an embodiment of the disclosure.
FIG. 27 is a diagram for describing an operation in which a wireless power transmission apparatus interworks with a server apparatus, according to an embodiment of the disclosure.
FIG. 28 is a diagram for describing an operation in which a server apparatus provides information regarding a wireless power transmission apparatus through a display apparatus, according to an embodiment of the disclosure.
FIG. 29 is a diagram for describing an operation in which a server apparatus provides information regarding a wireless power transmission apparatus through a display apparatus, according to an embodiment of the disclosure.
FIG. 30 is a diagram for describing an operation in which a cooking appliance adds recipe information based on a user input, according to an embodiment of the disclosure.
FIG. 31 is a diagram for describing an operation in which a cooking appliance adds coffee recipe information based on a user input, according to an embodiment of the disclosure.
FIG. 32 is a diagram for describing an operation in which a cooking appliance adds coffee recipe information based on a user input, according to an embodiment of the disclosure.
FIG. 33 is a diagram for describing an operation in which a cooking appliance deletes recipe information based on a user input, according to an embodiment of the disclosure.
FIG. 34 is a diagram for describing an operation in which a wireless power transmission apparatus interworks with a plurality of cooking appliances based on recipe information, according to an embodiment of the disclosure.

### MODE OF DISCLOSURE

Hereinafter, the terms used herein will be briefly described, and then, embodiments of the disclosure will be described in detail.

The terms used herein are those general terms currently widely used in the art in consideration of functions in regard to the embodiments of the disclosure, but the terms may vary according to the intention of those of ordinary skill in the art, precedents, or new technology in the art. In addition, in a specific case, the applicant voluntarily may select terms, and in this case, the meanings of the terms are disclosed in corresponding description parts of the embodiments of the disclosure. Thus, the terms used herein have to be defined based on the meanings of the terms together with the description throughout the disclosure.

Throughout the disclosure, the expression "at least one of a, b or c" indicates only a, only b, only c, both a and b, both a and c, both b and c, all of a, b, and c, or variations thereof.

Throughout the disclosure, when a certain part "includes" or "comprises" a certain component, unless there is a particular description contrary thereto, the part may further include or comprise other components, not excluding the other components. In addition, terms such as "...er/or" and "module" used herein refer to units that perform at least one function or operation, and the units may be implemented as hardware or software or as a combination of hardware and software.

Embodiments of the disclosure will now be described in detail with reference to accompanying drawings to be readily practiced by those of ordinary skill in the art. The embodiments of the disclosure may, however, be embodied in many different forms and should not be construed as limited to the embodiments set forth herein. Also, in order to clearly describe the embodiments of the disclosure, parts not related to description are omitted in the drawings, and like reference numerals in the drawings denote like parts throughout the disclosure.

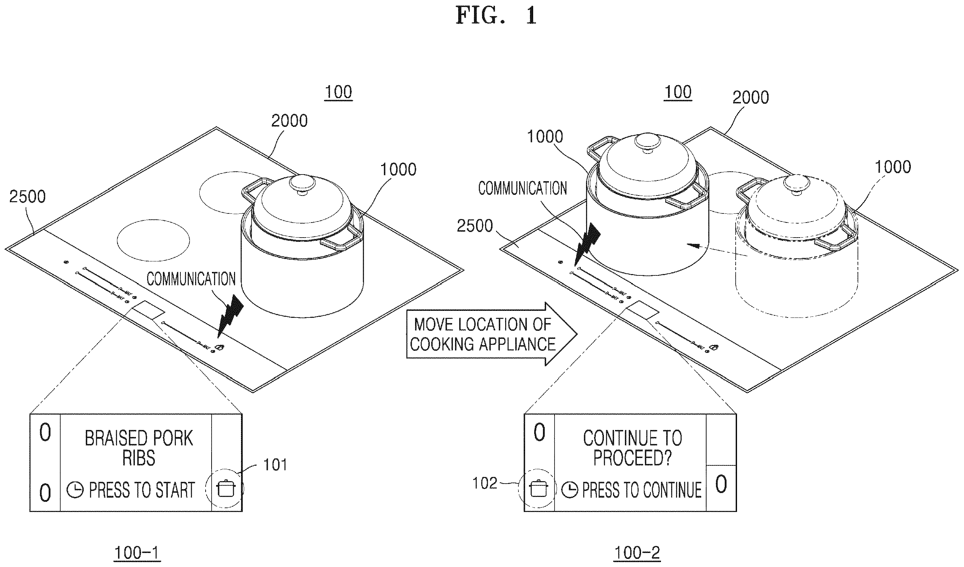

FIG. 1 is a diagram for describing a cooking system according to an embodiment of the disclosure.

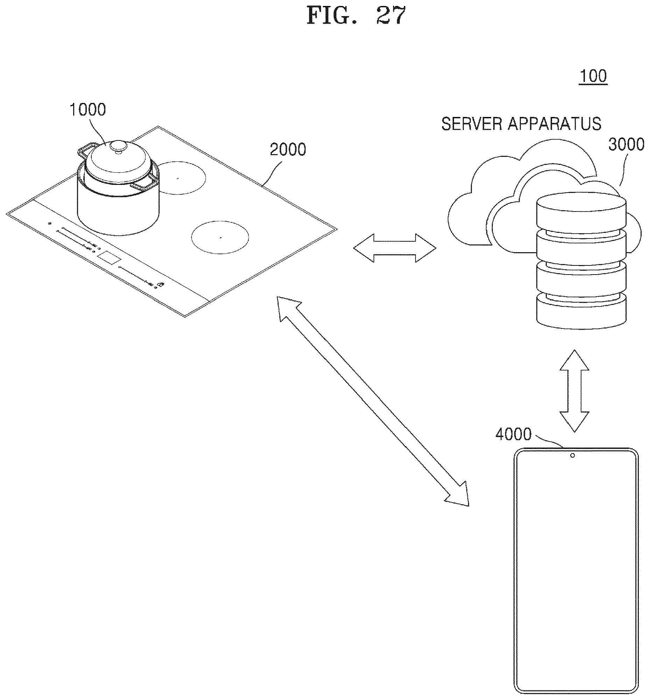

Referring to FIG. 1, according to an embodiment of the disclosure, a cooking system 100 may include a cooking appliance 1000 and a wireless power transmission apparatus 2000. However, all of the illustrated components may not be essential components. The cooking system 100 may be implemented by more components than the illustrated components, or may also be implemented by fewer components. For example, the cooking system 100 may be implemented with the cooking appliance 1000, the wireless power transmission apparatus 2000, and a server apparatus (not shown). An embodiment in which the cooking system 100 includes the server apparatus will be described below in detail with reference to FIG. 27. Hereinafter, each component of the cooking system 100 is described.

The cooking appliance 1000 may be an apparatus for heating up contents inside the cooking appliance 1000. The contents inside the cooking appliance 1000 may include liquids, such as water, tea, coffee, soup, juice, wine, and oil, or may include solids, such as butter, meat, vegetables, bread, and rice, but are not limited thereto.

According to an embodiment of the disclosure, the cooking appliance 1000 may wirelessly receive power from the wireless power transmission apparatus 2000 by using electromagnetic induction. Therefore, according to an embodiment of the disclosure, the cooking appliance 1000 may not include a power line connected to a power outlet.

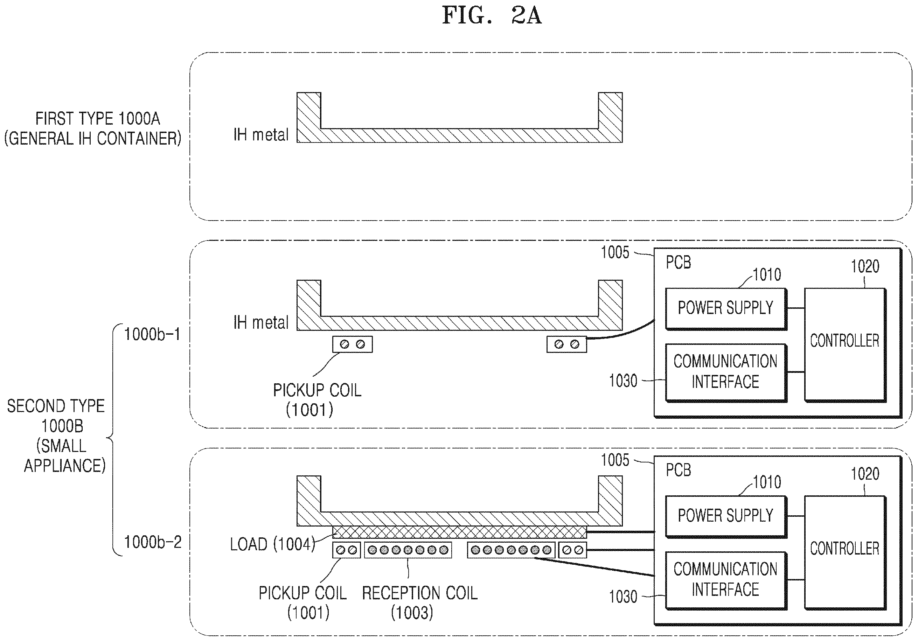

According to an embodiment of the disclosure, there may be various types of cooking appliances 1000 that wirelessly receive power from the wireless power transmission apparatus 2000. The cooking appliance 1000 may include a first type of cooking appliance 1000a (see FIG. 2A), which is a general induction-heating (IH) container including a magnetic material, or may include a second type of cooking appliance 1000b (see FIG. 2A) including a communication interface. Hereinafter, the second type of cooking appliance 1000b including the communication interface may be defined as a small appliance (or small object). According to an embodiment of the disclosure, the second type of cooking appliance 1000b may include a second-first type of cooking appliance 1000b-1 including a magnetic material (IH metal) (e.g., an iron component), and a second-second type of cooking appliance 1000b-2 including a reception coil. In the second-first type of cooking appliance 1000b-1, a magnetic field may be induced in a container (IH metal) itself, and in the second-second type of cooking appliance 1000b-2, a magnetic field may be induced in the reception coil. Types of the cooking appliance 1000 will be described below in a little more detail with reference to FIGS. 2A to 2C.

The cooking appliance 1000 may include a general IH container, such as a pot, a frying pan, and a steamer, or may include a small appliance, such as an electric kettle, a teapot, a coffee maker (or coffee machine, coffee dripper), a toaster, a blender, an electric rice cooker, an oven, and an air fryer, but is not limited thereto. The cooking appliance 1000 may include a cooker apparatus. The cooker apparatus may be an apparatus into or from which a general IH container may be inserted or detached. According to an embodiment of the disclosure, the cooker apparatus may be an apparatus capable of automatically cooking contents according to a recipe. The cooker apparatus may also be referred to as a pot, a rice cooker, or a steamer depending on an intended use thereof. For example, when an inner pot capable of cooking rice is inserted into the cooker apparatus, the cooker apparatus may be referred to as a rice cooker. Hereinafter, the cooker apparatus may be defined as a smart pot.

According to an embodiment of the disclosure, when the cooking appliance 1000 is a small appliance including a communication interface, the cooking appliance 1000 may communicate with the wireless power transmission apparatus 2000. The communication interface may include a short-range wireless communication interface, a long-distance wireless communication interface, etc. The short-range wireless communication interface may include a Bluetooth communication interface, a Bluetooth low energy (BLE) communication interface, a near-field communication (NFC) interface, a wireless local area network (WLAN) (e.g., Wi-Fi) communication interface, a Zigbee communication interface, an infrared data association (IrDA) communication interface, a Wi-Fi direct (WFD) communication interface, an ultra-wideband (UWB) communication interface, an Ant+ communication interface, etc., but is not limited thereto. When the cooking appliance 1000 is remotely controlled by the server apparatus (not shown) in an Internet-of-things (IoT) environment, the long-distance wireless communication interface may be used to communicate with the server apparatus. The long-distance wireless communication interface may include the Internet, a computer network (e.g., a local area network (LAN) or a wide area network (WAN)), a mobile communication interface, etc. The mobile communication interface may include a 3^{rd} generation (3G) module, a 4^{th} generation (4G) module, a 5^{th} generation (5G) module, a long-term evolution (LTE) module, a narrowband (NB)-loT module, an LTE-M module, etc., but is not limited thereto.

According to an embodiment of the disclosure, the cooking appliance 1000 may transmit identification information regarding the cooking appliance 1000 to the wireless power transmission apparatus 2000 through the communication interface. The identification information regarding the cooking appliance 1000 is unique information for identifying the cooking appliance 1000, and may include at least one of a medium access control (MAC) address, a model name, device type information (e.g., an IH type ID, a heater type ID, a motor type ID, or a small appliance type ID), manufacturer information (e.g., a manufacturer ID), a serial number, or manufacture time information (e.g., a date of manufacture), but is not limited thereto. According to an embodiment of the disclosure, the identification information regarding the cooking appliance 1000 may be expressed as a series of identification numbers or a combination of numbers and alphabets. Also, according to an embodiment of the disclosure, the cooking appliance 1000 may transmit location information regarding the cooking appliance 1000 to the wireless power transmission apparatus 2000 through the communication interface. The location information regarding the cooking appliance 1000 may include information regarding a cooking zone (also referred to as a burner) in which the cooking appliance 1000 is located.

According to an embodiment of the disclosure, the cooking appliance 1000 may transmit information to the server apparatus through the wireless power transmission apparatus 2000. For example, the cooking appliance 1000 may transmit information (e.g., temperature information regarding contents) obtained from the cooking appliance 1000 to the wireless power transmission apparatus 2000 through short-range wireless communication (e.g., Bluetooth or BLE). In this case, the wireless power transmission apparatus 2000 may access the server apparatus by using the WLAN (Wi-Fi) communication interface or the long-distance wireless communication interface (e.g., the Internet), and may transmit the information obtained from the cooking appliance 1000 to the server apparatus. Moreover, the server apparatus may provide the information obtained from the cooking appliance 1000, received from the wireless power transmission apparatus 2000, to a user through a mobile terminal connected to the server apparatus. According to an embodiment of the disclosure, the wireless power transmission apparatus 2000 may also directly transmit the information obtained from the cooking appliance 1000 to a user's mobile terminal through device-to-device (D2D) communication (e.g., WFD communication or BLE communication).

According to an embodiment of the disclosure, the cooking appliance 1000 may also directly transmit the information (e.g., temperature information regarding contents) obtained from the cooking appliance 1000 to the server apparatus through the communication interface (e.g., the WLAN (Wi-Fi) communication interface). Also, the cooking appliance 1000 may directly transmit the information (e.g., temperature information regarding contents) obtained from the cooking appliance 1000 to the user's mobile terminal through short-range wireless communication (e.g., Bluetooth or BLE) or D2D communication (e.g., WFD communication).

According to an embodiment of the disclosure, the cooking appliance 1000 may store recipe information for cooking contents. The recipe information may be different depending on the type of the cooking appliance 1000 and may include a list of a plurality of recipes. For example, when the cooking appliance 1000 is a coffee maker, the recipe information may include a list of coffee bean recipes, when the cooking appliance 1000 is a smart pot, the recipe information may include a list of food recipes, and when the cooking appliance 1000 is a blender, the recipe information may include a list of beverage recipes.

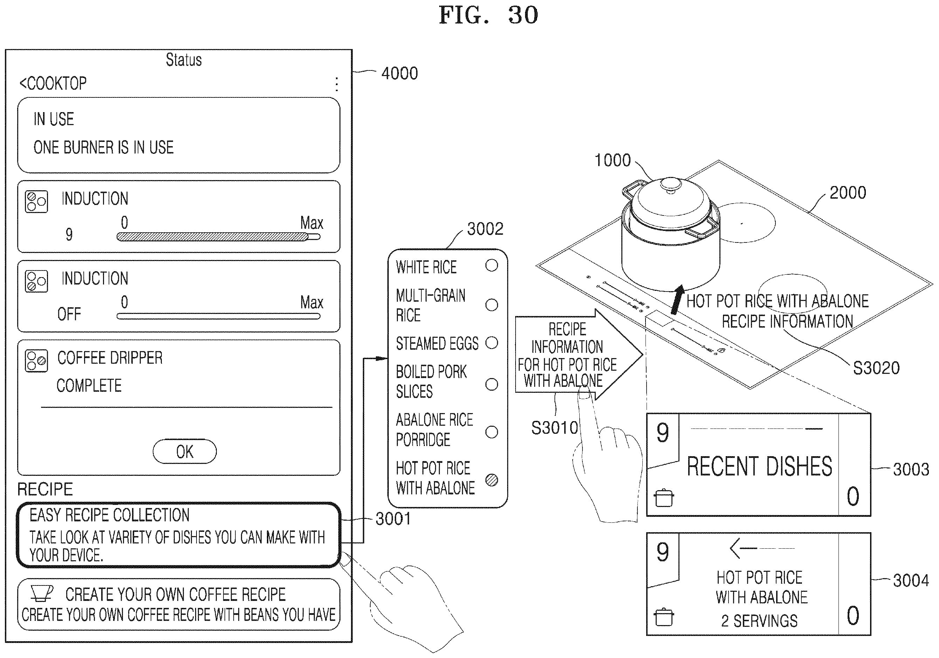

In addition, the recipe information may include basic recipe information, which is stored in the memory as a default at the time of manufacture of the cooking appliance 1000, and additional recipe information added by the user. According to an embodiment of the disclosure, the cooking appliance 1000 may receive the additional recipe information added by the user through the mobile terminal. For example, when the user adds recipe information to the cooking appliance 1000 through the mobile terminal, the server apparatus may obtain additional recipe information added by the user, and the cooking appliance 1000 may receive the additional recipe information from the server apparatus through the wireless power transmission apparatus 2000. Also, the cooking appliance 1000 may receive the additional recipe information from the user's mobile terminal through short-range wireless communication (e.g., Bluetooth or BLE) or D2D communication (e.g., WFD communication). An embodiment in which the user adds recipe information to the cooking appliance 1000 through the mobile terminal will be further described below with reference to FIGS. 30 to 33.

According to an embodiment of the disclosure, the wireless power transmission apparatus 2000 may be an apparatus that wirelessly transmits power to a to-be-heated object (e.g., the cooking appliance 1000) located on a top plate by using electromagnetic induction. The wireless power transmission apparatus 2000 may also be expressed as an induction heating apparatus, an induction range, a cooktop, or an electric range. The wireless power transmission apparatus 2000 may include a working coil that generates a magnetic field for inductively heating the cooking appliance 1000. When the cooking appliance 1000 is the second-second type of cooking appliance 1000b-2 (see FIG. 2A) including the reception coil, the working coil may also be referred to as a transmission coil.

When power is wirelessly transmitted, it may mean that power is transmitted by using a magnetic field induced in a reception coil or an IH metal (e.g., an iron component) in a magnetic induction method. For example, the wireless power transmission apparatus 2000 may cause a current to flow in the working coil (transmission coil) to form a magnetic field, and thus may generate an eddy current in the cooking appliance 1000 or induce a magnetic field in the reception coil of the cooking appliance 1000.

According to an embodiment of the disclosure, the wireless power transmission apparatus 2000 may include a plurality of working coils. For example, when the top plate of the wireless power transmission apparatus 2000 includes a plurality of cooking zones, the wireless power transmission apparatus 2000 may include a plurality of working coils respectively corresponding to the plurality of cooking zones. Also, the wireless power transmission apparatus 2000 may include a high-power cooking zone in which a first working coil is provided inside thereof and a second working coil is provided outside thereof. The high-power cooking zone may include three or more working coils.

According to an embodiment of the disclosure, the top plate of the wireless power transmission apparatus 2000 may include tempered glass, such as ceramic glass, such that the top plate is not easily damaged. Also, a guide mark may be provided on the top plate of the wireless power transmission apparatus 2000 to guide a cooking zone in which the cooking appliance 1000 needs to be located.

According to an embodiment of the disclosure, the wireless power transmission apparatus 2000 may detect that the cooking appliance 1000 (e.g., the first type of cooking appliance 1000a or the second-first type of cooking appliance 1000b-1) including the magnetic material is placed on the top plate. For example, based on a change in a current value (inductance) of the working coil due to approach of the cooking appliance 1000, the wireless power transmission apparatus 2000 may detect that the cooking appliance 1000 is located on the top plate of the wireless power transmission apparatus 2000. Hereinafter, a mode in which the wireless power transmission apparatus 2000 detects the cooking appliance 1000 including the magnetic material (IH metal) is defined as an "IH container detection mode".

According to an embodiment of the disclosure, the wireless power transmission apparatus 2000 may include a communication interface for communicating with an external apparatus. For example, the wireless power transmission apparatus 2000 may communicate with the cooking appliance 1000 or the server apparatus through the communication interface. The communication interface may include a short-range wireless communication interface (e.g., an NFC communication interface, a Bluetooth communication interface, a BLE communication interface, etc.) and a mobile communication interface.

According to an embodiment of the disclosure, the wireless power transmission apparatus 2000 may detect the cooking appliance 1000 located on the top plate through the communication interface. For example, when the cooking appliance 1000 is the second type of cooking appliance 1000b including the communication interface, the wireless power transmission apparatus 2000 may detect the second type of cooking appliance 1000b by receiving a packet transmitted from the second type of cooking appliance 1000b located on the top plate by using short-range wireless communication (e.g., BLE or Bluetooth). Because the second type of cooking appliance 1000b including the communication interface may be defined as a small appliance (small object), hereinafter, a mode in which the wireless power transmission apparatus 2000 detects the cooking appliance 1000 through the communication interface is defined as a "small appliance detection mode". The wireless power transmission apparatus 2000 may transmit power for activating the communication interface of the cooking appliance 1000 through the plurality of cooking zones in the small appliance detection mode.

According to an embodiment of the disclosure, the wireless power transmission apparatus 2000 may receive, from the cooking appliance 1000, identification information (e.g., a MAC address) regarding the cooking appliance 1000 through short-range wireless communication (e.g., BLE communication or Bluetooth communication) in the small appliance detection mode. When the identification information regarding the cooking appliance 1000 is received, the wireless power transmission apparatus 2000 may determine the cooking appliance 1000 as the second type of cooking appliance 1000b (small appliance) and output power according different power transmission patterns for respective cooking zones. Hereinafter, a mode in which the wireless power transmission apparatus 2000 outputs power according to different power transmission patterns for the respective cooking zones may be defined as a cooking zone determination mode. The wireless power transmission apparatus 2000 may receive information regarding a first cooking zone corresponding to a first power transmission pattern detected by the cooking appliance 1000, together with the identification information regarding the cooking appliance 1000. In this case, the first cooking zone may be a cooking zone in which the cooking appliance 1000 is located, among the plurality of cooking zones included in the wireless power transmission apparatus 2000. Referring to 100-1 of FIG. 1, the first cooking zone may be a cooking zone at the right center in which the cooking appliance 1000 is located.

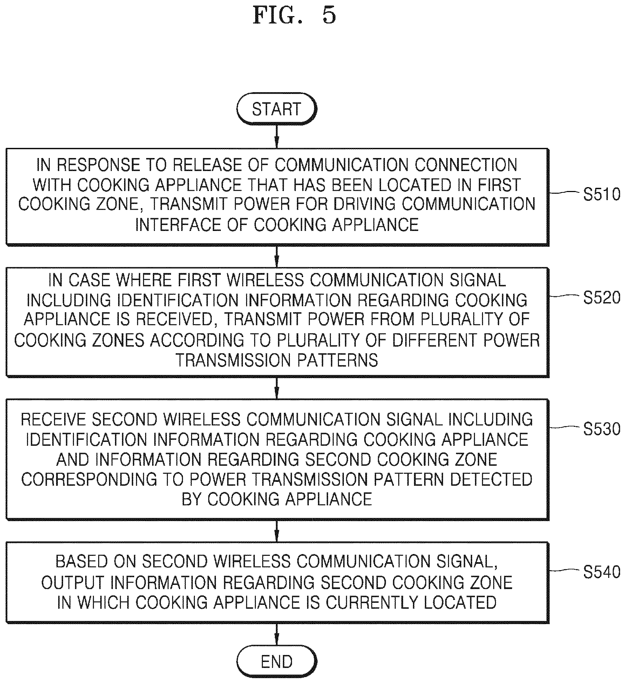

In addition, according to an embodiment of the disclosure, the user may move the cooking appliance 1000 placed in the first cooking zone to a second cooking zone, as necessary. Referring to 100-2 of FIG. 1, the user may move the cooking appliance 1000 placed in the first cooking zone (cooking zone at the right center) to the second cooking zone (cooking zone in the lower left corner). In this case, the wireless power transmission apparatus 2000 may automatically detect a location movement of the cooking appliance 1000. For example, when the wireless power transmission apparatus 2000 detects that short-range wireless communication with the cooking appliance 1000 is released, the wireless power transmission apparatus 2000 may operate in the small appliance detection mode and the cooking zone determination mode, and detect a location to which the cooking appliance 1000 is moved. For example, the wireless power transmission apparatus 2000 may receive information regarding the second cooking zone corresponding to a second power transmission pattern detected by the cooking appliance 1000, together with the identification information regarding the cooking appliance 1000. In this case, the wireless power transmission apparatus 2000 may further receive information (hereinafter, referred to as type information) regarding a type of the cooking appliance 1000. A method by which the wireless power transmission apparatus 2000 detects the location movement of the cooking appliance 1000 will be described below in detail with reference to FIG. 5.

According to an embodiment of the disclosure, the wireless power transmission apparatus 2000 may display information related to the cooking appliance 1000 through a user interface 2500. For example, when the cooking appliance 1000 is detected, the wireless power transmission apparatus 2000 may display, on a display unit included in the user interface 2500, identification information regarding the cooking appliance 1000, product type information (e.g., a product type image or product type text) regarding the cooking appliance 1000, or location information regarding the cooking appliance 1000. The product type information is information indicating a product type of the cooking appliance 1000, and the product type may include a smart pot, a smart kettle, a coffee maker, a toaster, or a blender. Referring to 100-1 of FIG. 1, when the user puts the cooking appliance 1000 (e.g., a smart pot) on the top plate of the wireless power transmission apparatus 2000, the wireless power transmission apparatus 2000 may display a smart pot icon at a location 101 corresponding to the cooking zone at the right center and provide, to the user, the product type information (e.g., the smart pot) regarding the cooking appliance 1000 and the location information (e.g., located in the cooking zone at the right center) regarding the cooking appliance 1000. Referring to 100-2 of FIG. 1, when the user moves a location of the cooking appliance 1000 from the cooking zone at the right center to the cooking zone in the lower left corner during cooking, the wireless power transmission apparatus 2000 may display the smart pot icon at a location 102 corresponding to the cooking zone in the lower left corner and provide, to the user, the product type information (e.g., the smart pot) regarding the cooking appliance 1000 and changed location information (e.g., located in the cooking zone in the lower left corner) regarding the cooking appliance 1000.

According to an embodiment of the disclosure, the wireless power transmission apparatus 2000 may also provide, through the user interface 2500, a graphical user interface (GUI) corresponding to the identification information or the product type information regarding the cooking appliance 1000. For example, when the cooking appliance 1000 is a smart pot, the wireless power transmission apparatus 2000 may output a menu being cooked or recipe information regarding the menu being cooked. Referring to 100-1 of FIG. 1, the wireless power transmission apparatus 2000 may display a menu (braised pork ribs) currently being cooked in the smart pot.

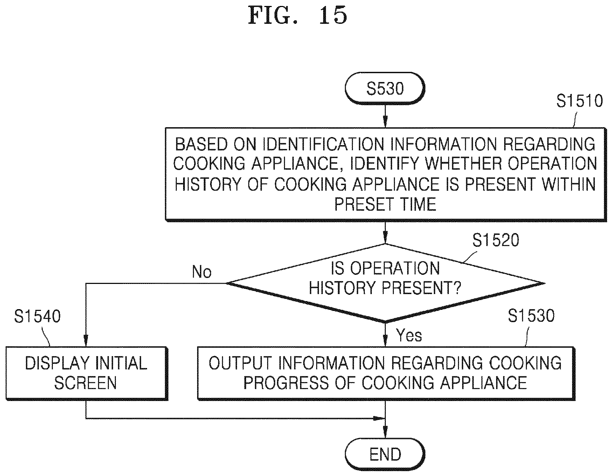

In addition, according to an embodiment of the disclosure, when the location of the cooking appliance 1000 is changed during cooking, the wireless power transmission apparatus 2000 may continue outputting information regarding a cooking progress of the cooking appliance 1000. Referring to 100-2 of FIG. 1, when the movement of the cooking appliance 1000 is detected, the wireless power transmission apparatus 2000 may ask the user whether to continue the operation. When the user wishes to continue the operation before the movement of the cooking appliance 1000 even after the movement is made, the wireless power transmission apparatus 2000 may continue outputting information regarding a cooking progress of the cooking appliance 1000 corresponding to a time (e.g., a time when the cooking appliance 1000 is removed from the cooking zone at the right center) when a communication connection with the cooking appliance 1000 is released. For example, the wireless power transmission apparatus 2000 may continue displaying a screen (e.g., braised pork ribs) displayed when the cooking appliance 1000 is located in the cooking zone at the right center. An operation in which the wireless power transmission apparatus 2000 continues outputting the information regarding the cooking progress of the cooking appliance 1000 will be described below in detail with reference to FIGS. 15 to 17.

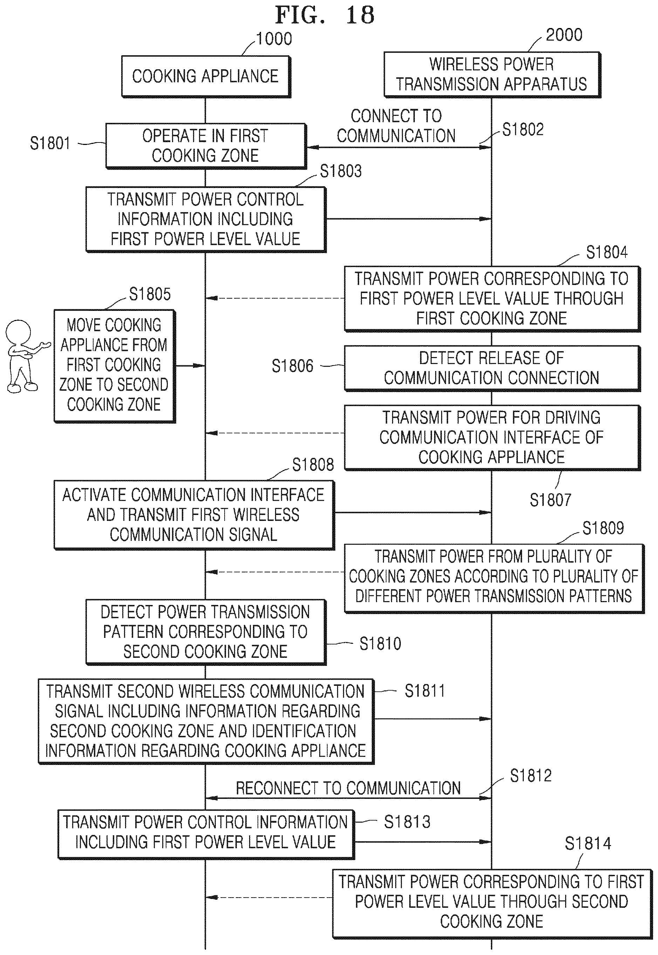

Also, according to an embodiment of the disclosure when the user wishes to continue the operation before the movement of the cooking appliance 1000 even after the movement is made, the wireless power transmission apparatus 2000 may continue transmitting power to the cooking appliance 1000. Referring to 100-2 of FIG. 1, the wireless power transmission apparatus 2000 may transmit power to the cooking appliance 1000 through the cooking zone in the lower left corner according to a power level at which power has been transmitted to the cooking appliance 1000 through the cooking zone at the right center. An operation in which the wireless power transmission apparatus 2000 transmits power after the location movement of the cooking appliance 1000 will be described below in detail with reference to FIG. 18.

According to the cooking system 100 according to an embodiment of the disclosure, even though the user simply puts the cooking appliance 1000 on the wireless power transmission apparatus 2000, the wireless power transmission apparatus 2000 may automatically identify the product type of the cooking appliance 1000 and the location of the cooking appliance 1000, and provide information regarding the cooking appliance 1000 to the user, such that user convenience is enhanced. Also, even though a cooking zone in which the cooking appliance 1000 is located is changed, the wireless power transmission apparatus 2000 automatically identifies a location to which the cooking appliance 1000 is moved, and supports the cooking appliance 1000 to continue performing the operation before the movement even after the movement is made, and thus, convenience of cooking is enhanced. Hereinafter, types of the cooking appliance 1000 according to an embodiment of the disclosure are described in detail with reference to FIGS. 2A to 2C.

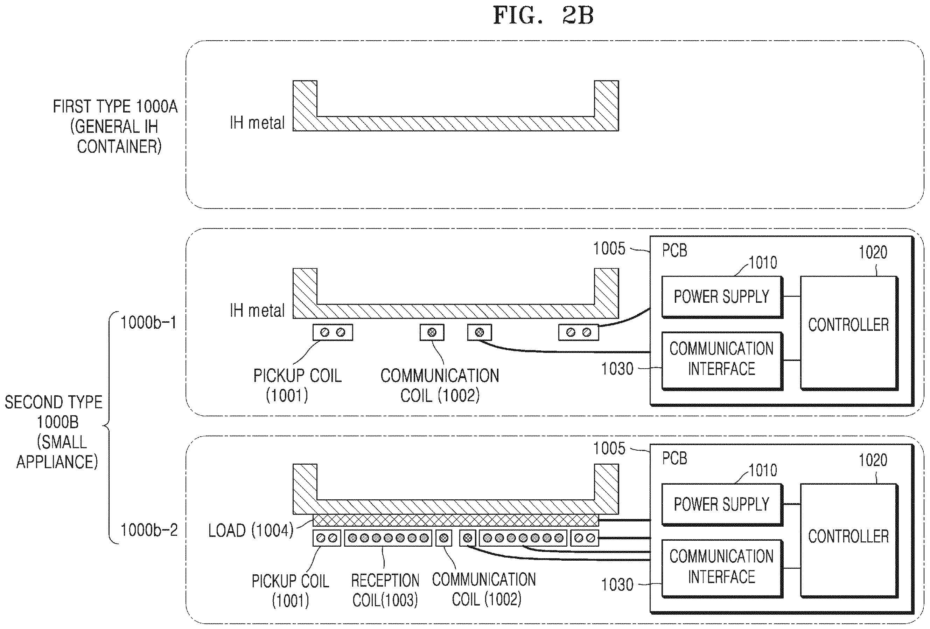

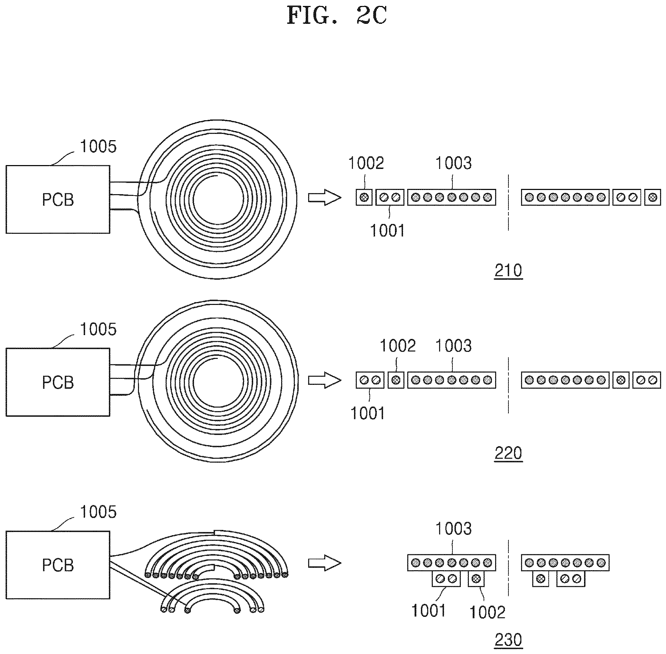

FIG. 2A is a diagram for describing a type of the cooking appliance 1000 according to an embodiment of the disclosure. FIG. 2B is a diagram for describing a type of the cooking appliance 1000 according to an embodiment of the disclosure. FIG. 2C is a diagram for describing a type of the cooking appliance 1000 according to an embodiment of the disclosure.

Referring to FIG. 2A, the cooking appliance 1000 may include the first type of cooking appliance 1000a, which is a general IH container including a magnetic material (e.g., an IH metal), and the second type of cooking appliance 1000b capable of communicating with the wireless power transmission apparatus 2000. The second type of cooking appliance 1000b capable of communicating with the wireless power transmission apparatus 2000 may be defined as a small appliance. According to an embodiment of the disclosure, the second type of cooking appliance 1000b may be classified into the second-first type of cooking appliance 1000b-1 including an IH metal (e.g., an iron component), and a second-second type of cooking appliance 1000b-2 including a reception coil 1003. Each type is now described.

The first type of cooking appliance 1000a may be inductively heated by the wireless power transmission apparatus 2000 and may include various types of containers including a magnetic material. IH is a method of heating an IH metal by using electromagnetic induction. For example, when an alternating current (AC) is supplied to a working coil of the wireless power transmission apparatus 2000, a temporally changing magnetic field is induced inside the working coil. The magnetic field generated by the working coil passes through the bottom surface of the first type of cooking appliance 1000a. When the temporarily changing magnetic field passes through the IH metal (e.g., iron, steel, nickel, or various types of alloys) included in the bottom surface of the first type of cooking appliance 1000a, a current rotating around the magnetic field is generated in the IH metal. A rotating current is referred to as an eddy current, and a phenomenon in which a current is induced by a temporally changing magnetic field is referred to as electromagnetic induction. When the cooking appliance 1000 is the first type of cooking appliance 1000a, heat is generated at the bottom surface of the first type of cooking appliance 1000a by resistance of the eddy current and the IH metal (e.g., iron). Contents inside the first type of cooking appliance 1000a may be heated by the generated heat.

The second type of cooking appliance 1000b may include a pickup coil 1001, a power supply 1010, a controller 1020, and a communication interface 1030. In this case, the power supply 1010, the controller 1020, and the communication interface 1030 may be mounted on a printed circuit board (PCB) 1005. The pickup coil 1001 may be a lowpower coil that generates power for operating the PCB 1005. When power is supplied to the PCB 1005 through the pickup coil 1001, components mounted on the PCB 1005 may be activated. For example, when power is supplied to the PCB 1005 through the pickup coil 1001, the power supply 1010, the controller 1020, and the communication interface 1030 may be activated. The power supply 1010, the controller 1020, and the communication interface 1030 may be mounted on a single PCB or may be separately mounted on a plurality of PCBs. For example, the power supply 1010 may be mounted on a first PCB, and the controller 1020 and the communication interface 1030 may be mounted on a second PCB.

Referring to FIG. 2B, the second type of cooking appliance 1000b may further include a communication coil 1002. The communication coil 1002 may be a coil for performing short-range wireless communication with the wireless power transmission apparatus 2000. For example, the communication coil 1002 may include an NFC antenna coil for NFC communication. In FIG. 2B, the number of windings of the communication coil 1002 is expressed as one, but the disclosure is not limited thereto. The communication coil 1002 may be provided with a plurality of windings. For example, the communication coil 1002 may be wound in 5 to 6 turns. An NFC circuit connected to the NFC antenna coil may receive power through the pickup coil 1001. Hereinafter, the above components are described in order.

The power supply 1010 may include a switched mode power supply (SMPS) that receives AC power from the pickup coil 1001 and supplies direct current (DC) power to the controller 1020 or the communication interface 1030. Also, when the controller 1020, the communication interface 1030, and other components in the second type of cooking appliance 1000b require AC power or DC power in forms other than commercial AC power, the power supply 1010 may include an inverter and/or a converter that supplies the AC power or the DC power.

The power supply 1010 may include a rectifier (rectifying circuit) that converts AC power into DC power. The rectifier may convert an AC voltage of which magnitude and polarity (a positive voltage or a negative voltage) change over time into a DC voltage with a constant magnitude and polarity, and may convert an AC of which magnitude and direction (a positive current or a negative current) change over time into a DC with a constant magnitude. The rectifier may include a bridge diode. The bridge diode may convert an AC voltage of which polarity changes over time into a positive voltage with a constant polarity, and may convert an AC of which direction changes over time into a positive current with a constant direction. The rectifier may include a DC link capacitor. The DC link capacitor may convert a positive voltage of which magnitude changes over time into a DC voltage with a constant magnitude. The inverter connected to the DC link capacitor may generate AC power of various frequencies and magnitudes required by the second type of cooking appliance 1000b, and the converter may generate DC power of various magnitudes required by the second type of cooking appliance 1000b.

The controller 1020 may include at least one processor, and the at least one processor controls the overall operation of the second type of cooking appliance 1000b. For example, the at least one processor included in the controller 1020 may control the power supply 1010 and the communication interface 1030.

According to an embodiment of the disclosure, the controller 1020 may identify a current location of the second type of cooking appliance 1000b by detecting a power transmission pattern of power received from the wireless power transmission apparatus 2000 through the power supply 1010. For example, the controller 1020 may compare the detected power transmission pattern with pre-stored power transmission patterns for respective cooking zones, and determine from which cooking zone the power transmission pattern is detected. In this case, the second type of cooking appliance 1000b may further include a voltage sensor for detecting the power transmission pattern.

The controller 1020 may control the communication interface 1030 to transmit or receive data. For example, the controller 1020 may control the communication interface 1030 to transmit, to the wireless power transmission apparatus 2000, at least one of identification information regarding the second type of cooking appliance 1000b, location information regarding the second type of cooking appliance 1000b, or communication connection information regarding the second type of cooking appliance 1000b.

According to an embodiment of the disclosure, when the second type of cooking appliance 1000b includes a temperature sensor, the controller 1020 may also control the temperature sensor. For example, the controller 1020 may control the temperature sensor to measure a temperature of contents inside the second type of cooking appliance 1000b and to transmit a result of the measurement to the controller 1020. Also, the controller 1020 may control the temperature sensor to monitor the temperature of the contents at regular intervals. In addition, the controller 1020 may control the communication interface 1030 to transmit temperature information regarding the contents to the wireless power transmission apparatus 2000 through short-range wireless communication.

The communication interface 1030 may include one or more components that enable communication between the second type of cooking appliance 1000b and the wireless power transmission apparatus 2000, between the second type of cooking appliance 1000b and a server apparatus (not shown), and between the second type of cooking appliance 1000b and a mobile terminal (not shown). For example, the communication interface 1030 may include a short-range wireless communication interface, a long-distance wireless communication interface, etc.

The short-range wireless communication interface may include a Bluetooth communication interface, a BLE communication interface, an NFC interface, a WLAN (Wi-Fi) communication interface, a Zigbee communication interface, an IrDA communication interface, a WFD communication interface, a UWB communication interface, an Ant+ communication interface, etc., but is not limited thereto. When the second type of cooking appliance 1000b is remotely controlled by the server apparatus (not shown) in an loT environment, the long-distance wireless communication interface may be used to communicate with the server apparatus. The long-distance wireless communication interface may include the Internet, a computer network (e.g., a local area network (LAN) or a wide area network (WAN)), a mobile communication interface, etc. The mobile communication interface may include a 3G module, a 4G module, a 5G module, an LTE module, an NB-loT module, an LTE-M module, etc., but is not limited thereto.

According to an embodiment of the disclosure, the second type of cooking appliance 1000b may transmit information to the server apparatus through the wireless power transmission apparatus 2000. For example, the second type of cooking appliance 1000b may transmit information (e.g., temperature information regarding contents) obtained from the second type of cooking appliance 1000b to the wireless power transmission apparatus 2000 through short-range wireless communication (e.g., Bluetooth or BLE). In this case, the wireless power transmission apparatus 2000 may access the server apparatus through the WLAN (Wi-Fi) communication interface or the long-distance wireless communication interface (Internet), and may transmit the information (e.g., temperature information regarding contents) obtained from the second type of cooking appliance 1000b to the server apparatus. Moreover, the server apparatus may provide the information obtained from the second type of cooking appliance 1000b, received from the wireless power transmission apparatus 2000, to a user through the mobile terminal connected to the server apparatus. According to an embodiment of the disclosure, the wireless power transmission apparatus 2000 may also directly transmit the information obtained from the second type of cooking appliance 1000b to the user's mobile terminal through D2D communication (e.g., WFD communication or BLE communication).

Moreover, all of the components illustrated in FIGS. 2A and 2B may not be essential components. The second type of cooking appliance 1 000b may be implemented by more components than the components illustrated in FIGS. 2A and 2B, or may be implemented by fewer components. For example, the second type of cooking appliance 1000b may further include a sensor unit, a user interface, a memory, a battery, etc., in addition to the power supply 1010, the controller 1020, and the communication interface 1030. In this case, the user interface may include an input interface that receives a user input, and an output interface that outputs information. The output interface is to output a video signal or an audio signal. The output interface may include a display unit, a sound output unit, a vibration motor, etc. When the display unit and a touch pad form a layered structure and constitute a touch screen, the display unit may also be used as the input interface in addition to the output interface. The sound output unit may output audio data received through the communication interface 1030 or stored in a memory (not shown).

According to an embodiment of the disclosure, when the second type of cooking appliance 1000b includes a battery, the battery may be used as auxiliary power. For example, when the second type of cooking appliance 1000b provides a keep warm function, even though power transmission from the wireless power transmission apparatus 2000 is interrupted, the second type of cooking appliance 1000b may monitor the temperature of the contents by using power of the battery. When the temperature of the contents decreases to a threshold temperature or below, the second type of cooking appliance 1000b may transmit a notification to the mobile terminal or request power transmission from the wireless power transmission apparatus 2000 by using power of the battery.

Also, before the second type of cooking appliance 1000b receives power from the wireless power transmission apparatus 2000, the second type of cooking appliance 1000b may drive the communication interface 1030 and transmit a wireless communication signal to the wireless power transmission apparatus 2000 by using the power of the battery, and thus may allow the wireless power transmission apparatus 2000 to identify the second type of cooking appliance 1000b in advance. The battery may include a secondary battery (e.g., a lithium ion battery, a nickel-cadmium battery, a polymer battery, and a nickel hydride battery), a super-capacitor, etc., but is not limited thereto. The super-capacitor is a capacitor with significantly large capacitance and is referred to as an ultra-capacitor or an ultra-high-capacity capacitor.

According to an embodiment of the disclosure, when the second type of cooking appliance 1000b includes a memory, the memory may store programs for processing and controlling the processor, and may also store input/output data (e.g., power transmission pattern information for respective cooking zones, identification information regarding the second type of cooking appliance 1000b, or recipe information).

The memory may include at least one type of storage medium including a flash memory, a hard disk-type memory, a multimedia card micro-type memory, a card-type memory (e.g., a secure digital (SD) card or an extreme digital (XD) memory), random access memory (RAM), static RAM (SRAM), read-only memory (ROM), electrically erasable programmable ROM (EEPROM), PROM, a magnetic memory, a magnetic disk, or an optical disc. The programs stored in the memory may be classified into a plurality of modules according to functions thereof. At least one artificial intelligence (Al) model may also be stored in the memory.

According to an embodiment of the disclosure, the second type of cooking appliance 1000b may include the second-first type of cooking appliance 1000b-1 including the IH metal (e.g., an iron component), and the second-second type of cooking appliance 1000b-2 including the reception coil 1003. In the case of the second-first type of cooking appliance 1000b-1, as in the first type of cooking appliance 1000a, which is a general IH container, an eddy current is generated in the IH metal of the second-first type of cooking appliance 1000b-1, and accordingly, contents inside the second-first type of cooking appliance 1000b-1 may be heated. The second-first type of cooking appliance 1000b-1 may include a smart kettle, an electric rice cooker (smart pot), etc., but is not limited thereto.

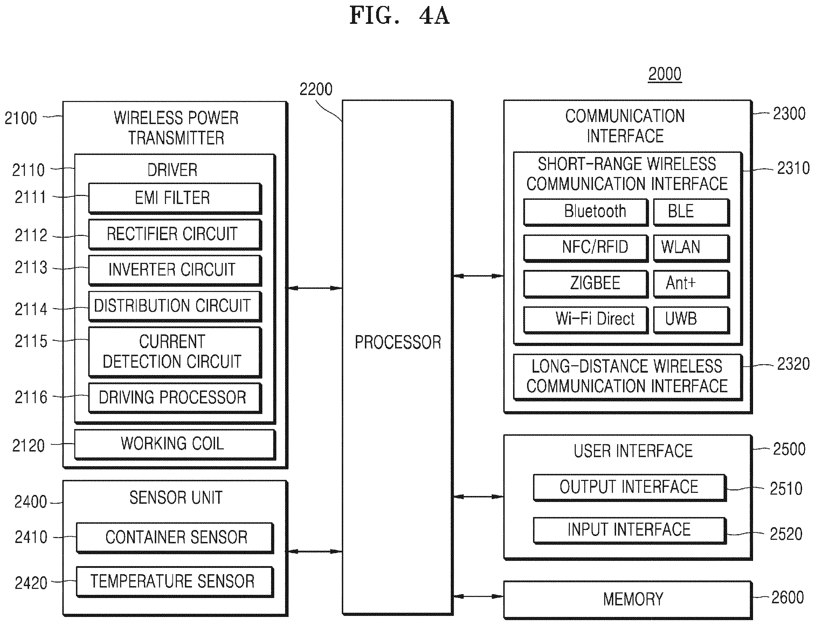

The second-second type of cooking appliance 1000b-2 may further include more components, that is, the reception coil 1003 and a load 1004, than the second-first type of cooking appliance 1000b-1. The reception coil 1003 may be a coil that drives the load 1004 by receiving wireless power transmitted from the wireless power transmission apparatus 2000. For example, a magnetic field generated from a current flowing in a transmission coil (a working coil 2120 of FIG. 4A) of the wireless power transmission apparatus 2000 passes through the reception coil 1003, and an induced current flows in the reception coil 1003, such that power (energy) may be supplied to the load 1004. Hereinafter, the induced current flowing in the reception coil 1003 by the magnetic field generated in the transmission coil (the working coil 2120) may be expressed as that the reception coil 1003 receives wireless power from the transmission coil (the working coil 2120). According to an embodiment of the disclosure, the reception coil 1003 may have a concentric circle shape or an elliptical shape, but is not limited thereto. According to an embodiment of the disclosure, a plurality of reception coils 1003 may also be provided. For example, the second-second type of cooking appliance 1000b-2 may include a reception coil for a warming heater and a reception coil for a heating heater. In this case, the reception coil for the heating heater may drive the heating heater, and the reception coil for the warming heater may drive the warming heater.

According to an embodiment of the disclosure, in the second-second type of cooking appliance 1000b-2, the pickup coil 1001, the communication coil 1002, and the reception coil 1003 may be arranged on the same layer. For example, referring to FIG. 2B, the communication coil 1002 may be arranged on the innermost side, the reception coil 1003 may be arranged in the middle, and the pickup coil 1001 may be arranged on the outermost side, but the disclosure is not limited thereto. Referring to 210 of FIG. 2C, the reception coil 1003 may be arranged on the innermost side, the pickup coil 1001 may be arranged in the middle, and the communication coil 1002 may be arranged on the outermost side. Also, referring to 220 of FIG. 2C, the reception coil 1003 may be arranged on the innermost side, the communication coil 1002 may be arranged in the middle, and the pickup coil 1001 may be arranged on the outermost side. In addition, although not shown, the coils may be arranged in the following order from the innermost side.
1) Pickup coil 1001 - Reception coil 1003 - Communication coil 1002
2) Pickup coil 1001 - Communication coil 1002 - Reception coil 1003
3) Communication coil 1002 - Pickup coil 1001 - Reception coil 1003

According to an embodiment of the disclosure, in the second-second type of cooking appliance 1000b-2, the pickup coil 1001, the communication coil 1002, and the reception coil 1003 may also be arranged in a stacked structure. For example, referring to 230 of FIG. 2C, the pickup coil 1001 and the communication coil 1002, which do not have many windings, form one layer, and the reception coil 1003 forms another layer, such that two layers may be stacked.

The load 1004 may include a heater, a motor, or a battery to be recharged, but is not limited thereto. The heater is to heat the contents inside the second-second type of cooking appliance 1000b-2. The heater may have various shapes, and an external cover of the heater may also have various materials (e.g., iron, stainless steel, copper, aluminum, Incoloy, Incotel, etc.). According to an embodiment of the disclosure, the second-second type of cooking appliance 1000b-2 may also include a plurality of heaters. For example, the second-second type of cooking appliance 1000b-2 may include a warming heater and a heating heater. The warming heater and the heating heater may produce different levels of heating output. For example, a heating level of the warming heater may be lower than a heating level of the heating heater.

According to an embodiment of the disclosure, the second-second type of cooking appliance 1000b-2 may further include a resonance capacitor (not shown) between the reception coil 1003 and the load 1004. In this case, a resonance value may be differently set according to an amount of power required by the load 1004. Also, according to an embodiment of the disclosure, the second-second type of cooking appliance 1000b-2 may further include a switch unit (not shown) (e.g., a relay switch or a semiconductor switch) for turning on/off the operation of the load 1004.

According to an embodiment of the disclosure, the second-second type of cooking appliance 1000b-2 may include a heater-applied product (e.g., a coffee maker (coffee dripper) and a toaster), a motor-applied product (e.g., a blender), etc., but is not limited thereto.

According to an embodiment of the disclosure, because the first type of cooking appliance 1000a includes an IH metal, detection is possible in an IH container detection mode of the wireless power transmission apparatus 2000, but the first type of cooking appliance 1000a is unable to communicate with the wireless power transmission apparatus 2000, and thus, detection may not be possible in a small appliance detection mode of the wireless power transmission apparatus 2000. Because the second-first type of cooking appliance 1000b-1 includes an IH metal, detection is possible in the IH container detection mode of the wireless power transmission apparatus 2000, and the second-first type of cooking appliance 1000b-1 is also able to communicate with the wireless power transmission apparatus 2000, and thus, detection may be possible even in the small appliance detection mode of the wireless power transmission apparatus 2000. Because the second-second type of cooking appliance 1000b-2 does not include an IH metal, detection is not performed in the IH container detection mode of the wireless power transmission apparatus 2000, but the second-second type of cooking appliance 1000b-2 is able to communicate with the wireless power transmission apparatus 2000, and thus, detection may be possible in the small appliance detection mode of the wireless power transmission apparatus 2000.

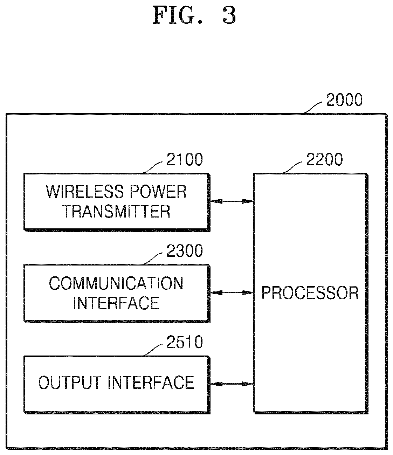

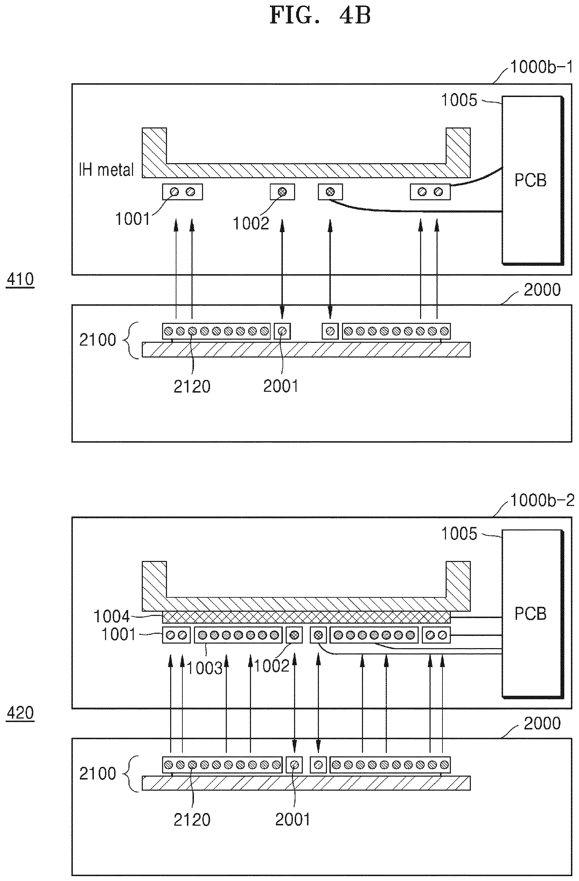

Hereinafter, the wireless power transmission apparatus 2000 for transmitting power to the cooking appliance 1000 is described in detail with reference to FIGS. 3, 4A, and 4B.

FIG. 3 is a block diagram for describing a function of the wireless power transmission apparatus 2000, according to an embodiment of the disclosure. FIG. 4A is a block diagram for describing a function of the wireless power transmission apparatus 2000, according to an embodiment of the disclosure.

As shown in FIG. 3, according to an embodiment of the disclosure, the wireless power transmission apparatus 2000 may include a wireless power transmitter 2100, a processor 2200, a communication interface 2300, and an output interface 2510. However, all of the components illustrated in FIG. 3 may not be essential components. The wireless power transmission apparatus 2000 may be implemented by more components than the components illustrated in FIG. 3, or may be implemented by fewer components. As shown in FIG. 4A, according to an embodiment of the disclosure, the wireless power transmission apparatus 2000 may include the wireless power transmitter 2100, the processor 2200, the communication interface 2300, a sensor unit 2400, the user interface 2500, and a memory 2600.

Hereinafter, the above components are described in order.

The wireless power transmitter 2100 may include a driver 2110 and the working coil 2120, but is not limited thereto. The driver 2110 may receive power from an external power source and supply a current to the working coil 2120 in response to a driving control signal of the processor 2200. The driver 2110 may include an electromagnetic interference (EMI) filter 2111, a rectifier circuit 2112, an inverter circuit 2113, a distribution circuit 2114, a current sensing circuit 2115, and a driving processor 2116, but is not limited thereto.

The EMI filter 2111 may block high-frequency noise included in AC power supplied from the external power source, and pass an AC voltage and an AC of a preset frequency (e.g., 50 Hz or 60 Hz). A fuse and a relay for blocking an overcurrent may be provided between the EMI filter 2111 and the external power source. The AC power from which high-frequency noise is filtered out by the EMI filter 2111 is supplied to the rectifier circuit 2112.

The rectifier circuit 2112 may covert AC power into DC power. For example, the rectifier circuit 2112 may convert an AC voltage of which magnitude and polarity (a positive voltage or a negative voltage) change over time into a DC voltage with a constant magnitude and polarity, and may convert an AC of which magnitude and direction (a positive current or a negative current) change over time into a DC with a constant magnitude. The rectifier circuit 2112 may include a bridge diode. For example, the rectifier circuit 2112 may include four diodes. The bridge diode may convert an AC voltage of which polarity changes over time into a positive voltage with a constant polarity, and may convert an AC of which direction changes over time into a positive current with a constant direction. The rectifier circuit 2112 may include a DC link capacitor. The DC link capacitor may convert a positive voltage of which magnitude changes over time into a DC voltage with a constant magnitude.

The inverter circuit 2113 may include a switching circuit that supplies or blocks a driving current to the working coil 2120, and a resonance circuit that generates resonance, together with the working coil 2120. The switching circuit may include a first switch and a second switch. The first switch and the second switch may be connected in series between a plus line and a minus line, which are output from the rectifier circuit 2112. The first switch and the second switch may be turned on or off in response to a driving control signal of the driving processor 2116.

The inverter circuit 2113 may control a current supplied to the working coil 2120. For example, a magnitude and a direction of the current flowing in the working coil 2120 may be changed in response to turning on/off of the first switch and the second switch, which are included in the inverter circuit 2113. In this case, an AC may be supplied to the working coil 2120. An AC in the form of sine waves is supplied to the working coil 2120 in response to a switching operation of the first switch and the second switch. Also, as a switching interval between the first switch and the second switch increases (e.g., as a switching frequency between the first switch and the second switch decreases), the current supplied to the working coil 2120 may be increased, and the strength of a magnetic field (output of the wireless power transmission apparatus 2000) output from the working coil 2120 may be increased.

When the wireless power transmission apparatus 2000 includes a plurality of working coils 2120, the driver 2110 may include the distribution circuit 2114. The distribution circuit 2114 may include a plurality of switches that pass or block a current supplied to the plurality of working coils 2120, and the plurality of switches may be turned on or off in response to a distribution control signal of the driving processor 2116.

The current sensing circuit 2115 may include a current sensor that measures a current output from the inverter circuit 2113. The current sensor may transmit an electrical signal corresponding to a value of the measured current to the driving processor 2116.

The driving processor 2116 may determine, based on an output strength (power level) of the wireless power transmission apparatus 2000, a switching frequency (turn- on/off frequency) of the switching circuit included in the inverter circuit 2113. The driving processor 2116 may generate a driving control signal for turning on/off the switching circuit according to the determined switching frequency.

The working coil 2120 may generate a magnetic field for heating the cooking appliance 1000. For example, when a driving current is supplied to the working coil 2120, a magnetic field may be induced around the working coil 2120. When a current of which magnitude and direction change over time, i.e., an AC, is supplied to the working coil 2120, a magnetic field of which magnitude and direction change overtime may be induced around the working coil 2120. The magnetic field around the working coil 2120 may pass through a top plate including tempered glass, and may reach the cooking appliance 1000 placed on the top plate. Due to the magnetic field of which magnitude and direction change over time, an eddy current rotating around the magnetic field may be generated in the cooking appliance 1000, and electrical resistance heat may be generated in the cooking appliance 1000 due to the eddy current. The electrical resistance heat is heat generated in a resistor when a current flows therethrough, and is also referred to as Joule heat. The cooking appliance 1000 may be heated by the electrical resistance heat, and accordingly, contents inside the cooking appliance 1000 may be heated. In addition, when the cooking appliance 1000 is the second-second type of cooking appliance 1000b-2 including the reception coil 1003, a magnetic field around the working coil 2120 may be induced in the reception coil 1003. A structure of the wireless power transmitter 2100 will be described below in a little more detail with reference to FIG. 4B.

The processor 2200 controls the overall operation of the wireless power transmission apparatus 2000. The processor 2200 may control the wireless power transmitter 2100, the communication interface 2300, the sensor unit 2400, the user interface 2500, and the memory 2600 by executing the programs stored in the memory 2600.

According to an embodiment of the disclosure, an Al processor may be mounted in the wireless power transmission apparatus 2000. The AI processor may be manufactured into the form of an AI-only hardware chip or may be manufactured as a part of an existing general-purpose processor (e.g., a central processing unit (CPU) or an application processor) or a graphics-only processor (e.g., a graphics processing unit (GPU)) and mounted in the wireless power transmission apparatus 2000.

According to an embodiment of the disclosure, the processor 2200 may control the inverter circuit 2113 to supply power of a preset level to the cooking appliance 1000 to drive the communication interface 1030 of the cooking appliance 1000, and when the communication interface 1030 of the cooking appliance 1000 is driven, may receive a first wireless communication signal transmitted from the communication interface 1030 of the cooking appliance 1000. The first wireless communication signal may include identification information (e.g., a MAC address) regarding the cooking appliance 1000 or information indicating that a current location of the cooking appliance 1000 may not be identified, but is not limited thereto.

When the first wireless communication signal transmitted from the cooking appliance 1000 is detected, the processor 2200 may control the inverter circuit 2113 to drive the plurality of working coils 2120 to generate a magnetic field according to a plurality of different power transmission patterns. The plurality of power transmission patterns may be set differently from each other based on at least one of a duration of a power transmission interval, a duration of a power cut-off interval, a power level, or an operating frequency. For example, the processor 2200 may control the inverter circuit 2113 to transmit power by differently combining, for respective cooking zones, the duration of the power transmission interval, the duration of the power cut-off interval, or the power level (or operating frequency).

Also, the processor 2200 may receive, from the cooking appliance 1000, through the communication interface 1300, a second wireless communication signal including identification information (or product type information) regarding the cooking appliance 1000 and information regarding the first cooking zone corresponding to a first power transmission pattern detected at a location of the cooking appliance 1000, among the plurality of power transmission patterns, and may output, based on the second wireless communication signal, through the output interface 2510, the information regarding the first cooking zone in which the cooking appliance 1000 is located, among the plurality of cooking zones, and the identification information (or product type information) regarding the cooking appliance 1000.

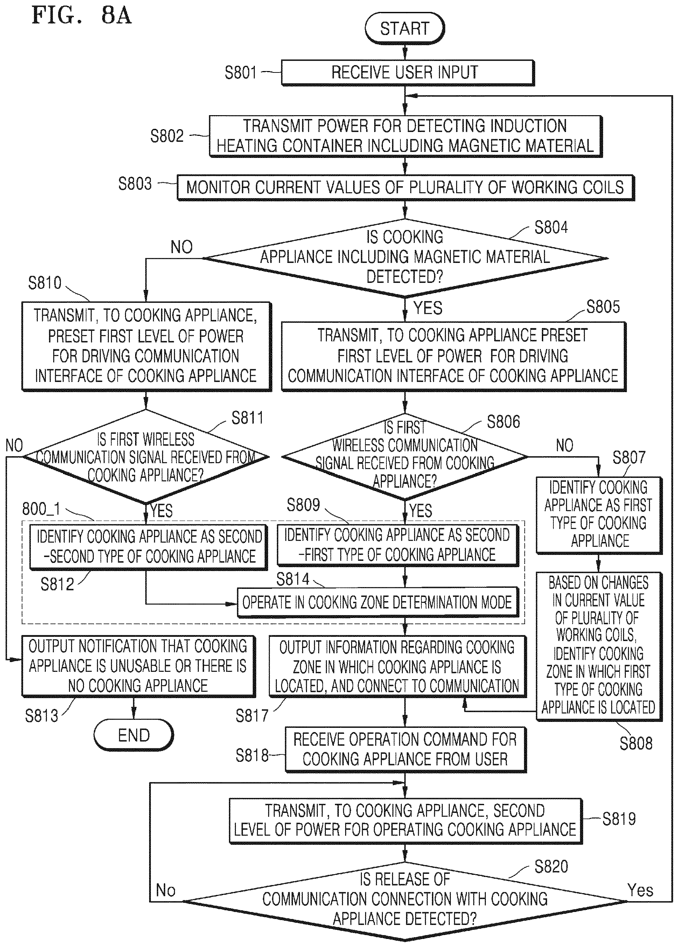

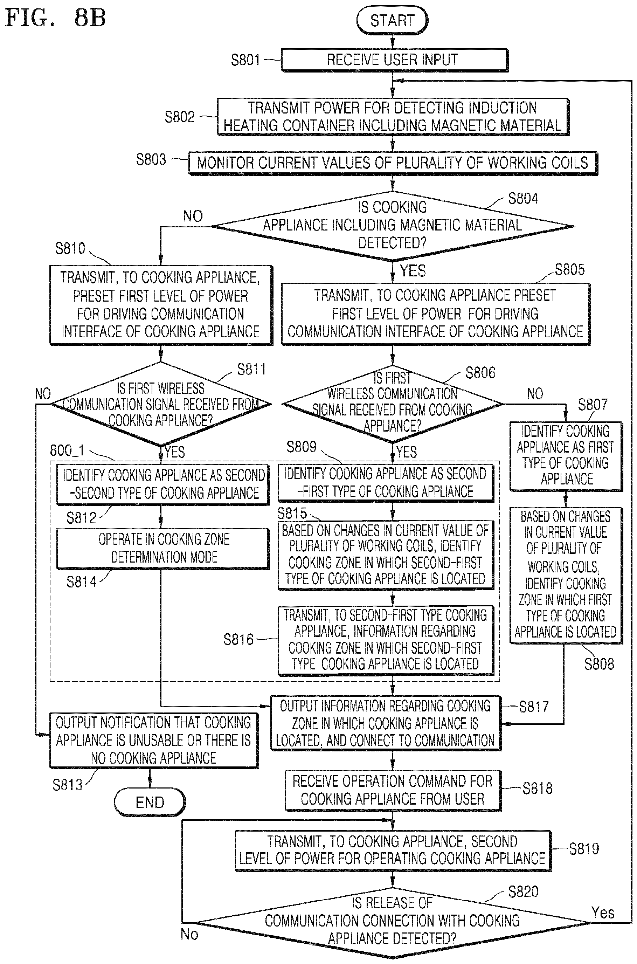

According to an embodiment of the disclosure, when the processor 2200 does not receive the first wireless communication signal from the cooking appliance 1000 within a preset time after it is detected that the cooking appliance 1000 is located on the top plate of the wireless power transmission apparatus 2000, the processor 2200 may identify the cooking appliance 1000 as the first type of cooking appliance 1000a, which is a general IH container. In response to detection of the first wireless communication signal transmitted from the communication interface 1030 of the cooking appliance 1000, the processor 2200 may identify the cooking appliance 1000 as the second type of cooking appliance 1000b capable of performing communication. An operation in which the wireless power transmission apparatus 2000 identifies the type of the cooking appliance 1000 will be described below in detail with reference to FIGS. 8A and 8B.

In addition, the processor 2200 may detect that the location of the cooking appliance 1000 is changed from the first cooking zone to the second cooking zone. For example, in response to release of a communication connection with the cooking appliance 1000 that has been located in the first cooking zone among the plurality of cooking zones, the processor 2200 may control the inverter circuit 2113 to transmit power for driving the communication interface 1030 of the cooking appliance 1000. When the first wireless communication signal including the identification information regarding the cooking appliance 1000 is received through the communication interface 2300 within a preset time after the communication connection is released, the processor 2200 may control the inverter circuit 2113 to drive the plurality of working coils 2120 to generate a magnetic field according to the plurality of different power transmission patterns. The processor 2200 may receive, from the cooking appliance 1000, through the communication interface 2300, a second wireless communication signal including the identification information regarding the cooking appliance 1000 and information regarding the second cooking zone corresponding to a power transmission pattern detected at a location of the cooking appliance 1000, among the plurality of power transmission patterns, and may output, based on the second wireless communication signal, through the output interface 2510, the information regarding the second cooking zone in which the cooking appliance 1000 is currently located, among the plurality of cooking zones. Hereinafter, for convenience of description, the communication interface 2300 of the wireless power transmission apparatus 2000 may be defined as a first communication interface, and the communication interface 1030 of the cooking appliance 1000 may be defined as a second communication interface.

The processor 2200 may control the output interface 2510 to display the product type information (e.g., an icon) of the cooking appliance 1000 at a first location indicating the first cooking zone in a GUI screen while the cooking appliance 1000 is located in the first cooking zone, and to display the product type information (e.g., an icon) regarding the cooking appliance 1000 at a second location indicating the second cooking zone in the GUI screen when the cooking appliance 1000 is moved from the first cooking zone to the second cooking zone.

The processor 2200 may identify, based on the identification information regarding the cooking appliance 1000, whether an operation history of the cooking appliance 1000 is present within a preset time after the second wireless communication signal is received, and when the operation history of the cooking appliance 1000 is present, may control the output interface 2510 to output information regarding a cooking progress of the cooking appliance 1000 corresponding to a time when the communication connection with the cooking appliance 1000 is released. The information regarding the cooking progress of the cooking appliance 1000 may include at least one of a cooking menu, an elapsed cooking time, or a cooking stage when the communication connection with the cooking appliance 1000 is released. In addition, the processor 2200 may receive the information regarding the cooking progress of the cooking appliance 1000 from the memory 2600 or from the cooking appliance 1000.

According to an embodiment of the disclosure, the processor 2200 may control the inverter circuit 2113 to perform a communication connection with the cooking appliance 1000 based on communication connection information included in the second wireless communication signal and to transmit first level of power (low power) for maintaining the communication connection with the cooking appliance 1000 to the pickup coil 1001 of the cooking appliance 1000. Also, in response to receipt of an operation command for the cooking appliance 1000 from a user, the processor 2200 may control the inverter circuit 2113 to transmit, to the cooking appliance 1000, second level of power (high power) for operating the cooking appliance 1000. In this case, the first level of power is lower than the second level of power. Also, the processor 2200 may control power transmission to the cooking appliance 1000 based on power control information (e.g., a power level value or duration information) received from the cooking appliance 1000. In this case, the power control information may be determined based on recipe information applied to the cooking appliance 1000.

The communication interface 2300 may include one or more components to enable communication between the wireless power transmission apparatus 2000 and the cooking appliance 1000 or between the wireless power transmission apparatus 2000 and the server apparatus. For example, the communication interface 2300 may include a short-range wireless communication interface 2310 and a long-distance wireless communication interface 2320. The short-range wireless communication interface 2310 may include a Bluetooth communication interface, a BLE communication interface, an NFC interface, a WLAN (Wi-Fi) communication interface, a Zigbee communication interface, an IrDA communication interface, a WFD communication interface, an UWB communication interface, an Ant+ communication interface, etc., but is not limited thereto. When a cooking appliance is remotely controlled by a server apparatus (not shown) in an loT environment, the long-distance wireless communication interface 2320 may be used to communicate with the server apparatus. The long-distance wireless communication interface 2320 may include the Internet, a computer network (e.g., a local area network (LAN) or a wide area network (WAN)), a mobile communication interface, etc. The mobile communication interface transmits or receives wireless signals to or from at least one of a base station, an external terminal, or a server, through a mobile communication network. In this case, the wireless signals may include a voice call signal, a video call signal, or various types of data according to transmission or reception of text/multimedia messages. The mobile communication interface may include a 3G module, a 4G module, an LTE module, a 5G module, a 6G module, an NB-loT module, an LTE-M module, etc., but is not limited thereto.

The sensor unit 2400 may include a container sensor 2410 and a temperature sensor 2420, but is not limited thereto.

The container sensor 2410 may be a sensor which detects that the cooking appliance 1000 is placed on the top plate. For example, the container sensor 2410 may be implemented as a current sensor, but is not limited thereto. The container sensor 2410 may be implemented as at least one of a proximity sensor, a touch sensor, a weight sensor, a temperature sensor, an illuminance sensor, or a magnetic sensor.

The temperature sensor 2420 may detect a temperature of the cooking appliance 1000 placed on the top plate or a temperature of the top plate. The cooking appliance 1000 may be inductively heated by the working coil 2120 and may be overheated depending on a material thereof. Accordingly, the wireless power transmission apparatus 2000 may detect the temperature of the cooking appliance 1000 placed on the top plate or the temperature of the top plate, and when the cooking appliance 1000 is overheated, may block the operation of the working coil 2120. The temperature sensor 2420 may be mounted in the vicinity of the working coil 2120. For example, the temperature sensor 2420 may be located at the center of the working coil 2120.

According to an embodiment of the disclosure, the temperature sensor 2420 may include a thermistor of which electrical resistance value changes according to temperature. For example, the temperature sensor may include a negative temperature coefficient (NTC) temperature sensor, but is not limited thereto. The temperature sensor may also include a positive temperature coefficient (PTC) temperature sensor.

The user interface 2500 may include the output interface 2510 and an input interface 2520. The output interface 2510 is to output an audio signal or a video signal, and may include a display unit and a sound output unit.

When the display unit and a touch pad form a layered structure and constitute a touch screen, the display unit may also be used as an input interface in addition to an output interface. The display unit may include at least one of a liquid crystal display, a thin film transistor-liquid crystal display, a light-emitting diode (LED), an organic LED (OLED), a flexible display, a three-dimensional (3D) display, or an electrophoretic display. In addition, the wireless power transmission apparatus 2000 may include two or more display units according to an implementation type of the wireless power transmission apparatus 2000.

The sound output unit may output audio data received from the communication interface 2300 or stored in the memory 2600. Also, the sound output unit may output a sound signal related to a function performed by the wireless power transmission apparatus 2000. The sound output unit may include a speaker, a buzzer, etc.

According to an embodiment of the disclosure, the output interface 2510 may display information regarding the cooking appliance 1000. For example, the output interface 2510 may output a GUI corresponding to the identification information or the product type information regarding the cooking appliance 1000. Also, the output interface 2510 may output information regarding the current location of the cooking appliance 1000.

According to an embodiment of the disclosure, when the processor 2200 does not receive information regarding a cooking zone, in which the cooking appliance 1000 is located, within a preset time after the inverter circuit 2113 is controlled to drive the plurality of working coils 2120 to generate a magnetic field according to the plurality of different power transmission patterns, the output interface 2510 may output a notification to check the location of the cooking appliance 1000. Also, according to an embodiment of the disclosure, in response to release of the communication connection with the cooking appliance 1000, the output interface 2510 may output a notification to check the location of the cooking appliance 1000.

The input interface 2520 is to receive an input from a user. For example, the input interface 2520 may include at least one of a key pad, a dome switch, a touch pad (using a touch capacitance method, a pressure-resistive layer method, an infrared sensing method, a surface ultrasonic conductive method, an integral tension measuring method, a piezo effect method, etc.), a jog wheel, or a jog switch, but is not limited thereto.

The input interface 2520 may include a speech recognition module. For example, the wireless power transmission apparatus 2000 may receive a speech signal, which is an analog signal, through a microphone and may convert a speech part into computerreadable text by using an automatic speech recognition (ASR) model. The wireless power transmission apparatus 2000 may obtain a user's intention to speak by interpreting the converted text using a natural language understanding (NLU) model. In this case, the ASR model or the NLU model may be an Al model. The AI model may be processed by an AI-only processor that is designed in a hardware structure specialized for processing the Al model. The AI model may be created through learning. Creating the AI model through learning means that a basic AI model is trained using a plurality of pieces of training data by a learning algorithm such that a predefined operation rule or AI model set to perform a desired characteristic (or purpose) is created. The AI model may include a plurality of neural network layers. Each of the plurality of neural network layers has a plurality of weight values, and may perform a neural network operation through an operation between an operation result of a previous layer and the plurality of weight values.

Linguistic understanding is a technique that identifies and applies/processes human language/characters, and includes natural language processing, machine translation, a dialog system, question answering, speech recognition/synthesis, etc.

The memory 2600 may store programs for processing and controlling the processor 2200 or may store pieces of input/output data (e.g., a plurality of power transmission patterns or cooking progress information regarding the cooking appliance 1000). The memory 2600 may also store the Al model.

The memory 2600 may include at least one type of storage medium including a flash memory, a hard disk-type memory, a multimedia card micro-type memory, a card-type memory (e.g., an SD or XD memory), RAM, SRAM, ROM, EEPROM, PROM, a magnetic memory, a magnetic disk, or an optical disk. Also, the wireless power transmission apparatus 2000 may operate a web storage or a cloud server that performs a storage function on the Internet.

FIG. 4B is a diagram for describing a wireless power transmitter of the wireless power transmission apparatus 2000, according to an embodiment of the disclosure.

Referring to FIG. 4B, the wireless power transmission apparatus 2000 may further include a communication coil 2001 on the same plane as a transmission coil (the working coil 2120). In this case, the communication coil 2001 may include an NFC antenna coil for NFC communication. In FIG. 4B, the number of windings of the communication coil 2001 is expressed as one, but the disclosure is not limited thereto. The communication coil 2001 may be provided with a plurality of windings. For example, the communication coil 2001 may be wound in 5 to 6 turns.

According to an embodiment of the disclosure, the communication coil 2001 included in the wireless power transmission apparatus 2000 and the communication coil 1002 included in the cooking appliance 1000 may be arranged at locations corresponding to each other. For example, when the communication coil 2001 included in the wireless power transmission apparatus 2000 is arranged at the center of each cooking zone, the communication coil 1002 included in the cooking appliance 1000 may be arranged at the bottom center of the cooking appliance 1000.

Referring to 410 of FIG. 4B, when the second-first type of cooking appliance 1000b-1 is placed on the wireless power transmission apparatus 2000, the wireless power transmission apparatus 2000 may supply power to the pickup coil 1001 through the transmission coil 2120. Also, when the wireless power transmission apparatus 2000 wirelessly transmits power through the transmission coil 2120, an eddy current is generated in the second-first type of cooking appliance 1000b-1, and accordingly, contents inside the second-first type of cooking appliance 1000b-1 may be heated.

Referring to 420 of FIG. 4B, when the second-second type of cooking appliance 1000b-2 is placed on the wireless power transmission apparatus 2000, the wireless power transmission apparatus 2000 may supply power to the pickup coil 1001 through the transmission coil 2120. Also, when the wireless power transmission apparatus 2000 wirelessly transmits power through the transmission coil 2120, an induced current flows in the reception coil 1003 of the second-second type of cooking appliance 1000b-2, such that power (energy) may be supplied to the load 1004. The load 1004 may include a motor or a heater, and the load 1004 may be arranged at a location spaced apart from the reception coil 1003. For example, power generated by the induced current may drive a motor of a blender or may be supplied to a heater of a coffee dripper.

In FIG. 4B, a case in which the wireless power transmission apparatus 2000 includes the communication coil 2001 has been described as an example, but when the cooking appliance 1000 does not include the communication coil 1002 (see FIG. 2A), the wireless power transmission apparatus 2000 may also not include the communication coil 2001.

Hereinafter, a method by which the wireless power transmission apparatus 2000 provides, in response to a change of the location of cooking appliance 1000, information regarding the changed location of the cooking appliance 1000 is described in detail with reference to FIG. 5.

FIG. 5 is a flowchart for describing a method by which the wireless power transmission apparatus 2000 outputs information regarding the cooking appliance 1000, according to an embodiment of the disclosure. In FIG. 5, a case in which the location of the cooking appliance 1000 is changed from the first cooking zone to the second cooking zone is described as an example.

In operation S510, according to an embodiment of the disclosure, in response to release of a communication connection with the cooking appliance 1000 that has been located in the first cooking zone, the wireless power transmission apparatus 2000 may transmit power for driving the communication interface 1030 of the cooking appliance 1000.

For example, the wireless power transmission apparatus 2000 may establish a short-range wireless communication channel with the cooking appliance 1000 while the cooking appliance 1000 is located in the first cooking zone, and transmit or receive data to or from the cooking appliance 1000 though the short-range wireless communication channel. In this case, when the user picks up or moves the cooking appliance 1000, the cooking appliance 1000 is detached from the first cooking zone, and power induced from the wireless power transmission apparatus 2000 to the cooking appliance 1000 is reduced. Accordingly, because the cooking appliance 1000 is no longer able to drive the communication interface 1030 due to insufficient power, the communication connection between the wireless power transmission apparatus 2000 and the cooking appliance 1000 may be released.

In addition, the wireless power transmission apparatus 2000 may detect, based on a change in a current value (inductance) of the working coil 2120 detected by the current sensor, that the cooking appliance 1000 is detached from the first cooking zone. In this case, the cooking appliance 1000 may be the second-first type of cooking appliance 1000b-1 including the magnetic material. For example, the inverter circuit 2113 of the wireless power transmission apparatus 2000 may detect detachment of the cooking appliance 1000 based on the change in the current value (inductance) of the working coil 2120 and transmit information regarding the detachment of the cooking appliance 1000 to the processor 2200. For example, when the inductance increases, a magnitude of an AC flowing through the working coil 2120 decreases, or a frequency or phase of the AC flowing through the working coil 2120 changes, the wireless power transmission apparatus 2000 may detect that the cooking appliance 1000 is detached from the first cooking zone.

When the communication connection with the cooking appliance 1000 is released, the wireless power transmission apparatus 2000 may operate in a small appliance detection mode to re-detect the cooking appliance 1000. According to an embodiment of the disclosure, when the communication connection with the cooking appliance 1000 is released, the wireless power transmission apparatus 2000 may first operate in an IH container detection mode, and then operate in the small appliance detection mode. In this case, the IH container detection mode is a mode in which the wireless power transmission apparatus 2000 detects the cooking appliance 1000 including the magnetic material (IH metal), and the small appliance detection mode is a mode for detecting the second type of cooking appliance 1000b capable of communicating with the wireless power transmission apparatus 2000.

According to an embodiment of the disclosure, when the wireless power transmission apparatus 2000 operates in the small appliance detection mode, the wireless power transmission apparatus 2000 may transmit, to the cooking appliance 1000, preset first level of power (e.g., about 100 W to about 300 W) for driving the communication interface 1030 of the cooking appliance 1000.

When the communication interface 1030 of the cooking appliance 1000 is driven again by the power transmitted from the wireless power transmission apparatus 2000, the cooking appliance 1000 may transmit a first wireless communication signal. For example, the cooking appliance 1000 may advertise the first wireless communication signal including a first packet at regular intervals by using short-range wireless communication (e.g., Bluetooth or BLE). The wireless power transmission apparatus 2000 may receive the first wireless communication signal transmitted from the communication interface 1030 of the cooking appliance 1000. The first packet included in the first wireless communication signal may include identification information regarding the cooking appliance 1000, but is not limited thereto. The identification information regarding the cooking appliance 1000 is unique information for identifying the cooking appliance 1000, and may include a MAC address, a Bluetooth address, or a device identifier (ID), but is not limited thereto.

In addition, the first packet included in the first wireless communication signal may not include location information (e.g., information regarding a cooking zone in which the cooking appliance 1000 is currently located) regarding the cooking appliance 1000. For example, the first wireless communication signal may include, in the form of a universally unique identifier (UUID), information indicating that the current location of the cooking appliance 1000 may not be identified.

In operation S520, according to an embodiment of the disclosure, when the first wireless communication signal including the identification information regarding the cooking appliance 1000 is received, the wireless power transmission apparatus 2000 may transmit power through the plurality of cooking zones according to the plurality of different power transmission patterns. For example, when the first wireless communication signal is detected within a preset time (e.g., within 20 seconds) after the communication connection is released, the wireless power transmission apparatus 2000 may control the inverter circuit 2113 to drive the plurality of working coils 2120 to generate a magnetic field corresponding to the plurality of cooking zones according to the plurality of different power transmission patterns.

According to an embodiment of the disclosure, the first packet included in the first wireless communication signal transmitted from the cooking appliance 1000 may not include location information regarding the cooking appliance 1000. In this case, the wireless power transmission apparatus 2000 may identify that the cooking appliance 1000 is located on the top plate, but may not accurately identify on which cooking zone the cooking appliance 1000 is located. Accordingly, in order to identify the location of the cooking appliance 1000, the wireless power transmission apparatus 2000 may control the inverter circuit 2113 to output power according to different power transmission patterns for respective cooking zones. For example, when the wireless power transmission apparatus 2000 includes three cooking zones, the wireless power transmission apparatus 2000 may control the inverter circuit 2113 to output power according to the first power transmission pattern through a first working coil corresponding to the first cooking zone, output power according to the second power transmission pattern through a second working coil corresponding to the second cooking zone, and output power according to a third power transmission pattern through a third working coil corresponding to a third cooking zone.

According to an embodiment of the disclosure, when the second type of cooking appliance 1000b (small appliance) is available only in some of the plurality of cooking zones, the wireless power transmission apparatus 2000 may output power according to a specific power transmission pattern only in some cooking zones. For example, when the wireless power transmission apparatus 2000 includes three cooking zones, but the second type of cooking appliance 1000b is available only in the first cooking zone and the third cooking zone, the wireless power transmission apparatus 2000 may control the inverter circuit 2113 to output power according to the first power transmission pattern through the first working coil corresponding to the first cooking zone, output power according to the third power transmission pattern through the third working coil corresponding to the third cooking zone, and not to output power through the second working coil corresponding to the second cooking zone.

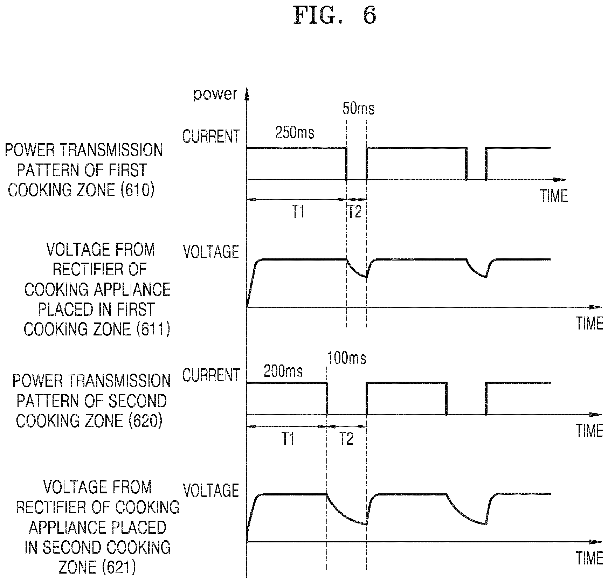

The plurality of power transmission patterns may be set differently from each other based on at least one of a duration of a power transmission interval, a duration of a power cut-off interval, or a power level (operating frequency). Referring to FIG. 6, the plurality of power transmission patterns may be set differently from each other by a duration of a power transmission interval T1 and a duration of a power cut-off interval T2. For example, in a first power transmission pattern 610 of the first cooking zone, a duration of the power transmission interval T1 is 250 ms, and a duration of the power cut-off interval T2 is 50 ms. Also, an operating frequency of the power transmission interval T1 may be 75 kHz, and an operating frequency of the power cut-off interval T2 may be 0 kHz. That is, according to the first power transmission pattern 610, a pattern in which power is transmitted at an operating frequency of 75 kHz for 250 ms and cut off for 50 ms may be repeated. In a second power transmission pattern 620 of the second cooking zone, a duration of the power transmission interval T1 is 200 ms, and a duration of the power cut-off interval T2 is 100 ms. That is, according to the second power transmission pattern 620, a pattern in which power is transmitted at an operating frequency of 75 kHz for 200 ms and cut off for 100 ms may be repeated.

Therefore, according to an embodiment of the disclosure, when the wireless power transmission apparatus 2000 operates in a mode (hereinafter, referred to as a cooking zone determination mode) for receiving the first wireless communication signal from the cooking appliance 1000 and determining a cooking zone in which the cooking appliance 1000 is located, the wireless power transmission apparatus 2000 may control a first inverter circuit to, according to the first power transmission pattern 610, supply an AC to the first working coil corresponding to the first cooking zone at an operating frequency of 75 kHz for 250 ms and cut off supply of the AC for 50 ms, and may control a second inverter circuit to, according to the second power transmission pattern 620, supply an AC to the second working coil corresponding to the second cooking zone at an operating frequency of 75 kHz for 200 ms and cut off supply of the AC for 100 ms.

In this case, the cooking appliance 1000 may detect one of the plurality of power transmission patterns by analyzing a voltage output from the rectifier. For example, referring to FIG. 6, when the cooking appliance 1000 is located in the first cooking zone, the cooking appliance 1000 may analyze a first voltage 611 output from the rectifier and may detect the first power transmission pattern 610 in which the duration of the power transmission interval T1 is 250 ms and the duration of the power cut-off interval T2 is 50 ms. In addition, the cooking appliance 1000 may determine that the cooking appliance 1000 is located in the first cooking zone, by identifying that a cooking zone that outputs the first power transmission pattern 610 is the first cooking zone, based on pre-stored information regarding the plurality of power transmission patterns of the wireless power transmission apparatus 2000. Also, when the cooking appliance 1000 is located in the second cooking zone, the cooking appliance 1000 may analyze a second voltage 621 output from the rectifier and may detect the second power transmission pattern 620 in which the duration of the power transmission interval T1 is 200 ms and the duration of the power cut-off interval T2 is 100 ms. In addition, the cooking appliance 1000 may determine that the cooking appliance 1000 is located in the second cooking zone, by identifying that a cooking zone that outputs the second power transmission pattern 620 is the second cooking zone, based on the pre-stored information regarding the plurality of power transmission patterns of the wireless power transmission apparatus 2000.

According to an embodiment of the disclosure, the cooking appliance 1000 may also identify the cooking zone in which the cooking appliance 1000 is located, only with the duration of the power cut-off interval T2. For example, as a result of analyzing power output from the rectifier, when the duration of the power cut-off interval T2 is 50 ms, the cooking appliance 1000 may determine that the cooking appliance 1000 is located on the first cooking zone that outputs the first power transmission pattern 610, and when the duration of the power cut-off interval T2 is 100 ms, the cooking appliance 1000 may determine that the cooking appliance 1000 is located on the second cooking zone that outputs the second power transmission pattern 620.

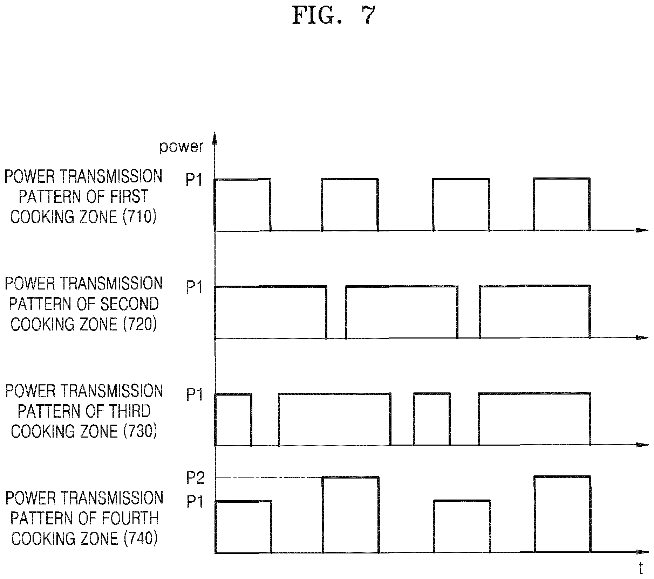

According to an embodiment of the disclosure, the plurality of power transmission patterns may also be variously set based on the duration of the power transmission interval, the duration of the power cut-off interval, and the power level. Referring to FIG. 7, a first power transmission pattern 710 of the first cooking zone may be a pattern in which power is transmitted at a first level P1 for 2 seconds and cut off for 2 seconds. A second power transmission pattern 720 may be a pattern in which power is transmitted at the first level P1 for 2 seconds and cut off for 1 second. A third power transmission pattern 730 may be a pattern in which power is transmitted at the first level P1 for 4 seconds, cut off for 1 second, transmitted at the first level P1 for 1 second again, and then cut off for 1 second. A fourth power transmission pattern 740 may be a pattern in which power is transmitted at the first level P1 for 2 seconds, cut off for 2 seconds, transmitted at a second level P2 for 2 seconds again, and then cut off for 2 seconds. An operating frequency at the first level P1 may be greater than an operating frequency at the second level P2.

According to an embodiment of the disclosure, power transmitted to the cooking appliance 1000 according to the plurality of power transmission patterns may be sufficient to drive the communication interface 1030 of the cooking appliance 1000. Therefore, according to an embodiment of the disclosure, when the cooking appliance 1000 determines that the cooking appliance 1000 is located in the second cooking zone based on the detected power transmission pattern, the cooking appliance 1000 may transmit a second wireless communication signal including information regarding the second cooking zone. For example, the cooking appliance 1000 may advertise a second packet including the information regarding the second cooking zone by using short-range wireless communication.

In operation S530, according to an embodiment of the disclosure, the wireless power transmission apparatus 2000 may receive, from the cooking appliance 1000, the second wireless communication signal including the identification information regarding the cooking appliance 1000 and the information regarding the second cooking zone corresponding to the power transmission pattern detected at the location of the cooking appliance 1000, among the plurality of power transmission patterns.

For example, the wireless power transmission apparatus 2000 may receive, from the cooking appliance 1000, through short-range wireless communication, a second packet including the identification information regarding the cooking appliance 1000 and the information regarding the second cooking zone in which the cooking appliance 1000 is located. The information regarding the second cooking zone in which the cooking appliance 1000 is located may include identification information (e.g., a first burner or an upper left burner) indicating the second cooking zone among the plurality of cooking zones, and may also include coordinate information regarding the second cooking zone. According to an embodiment of the disclosure, the information regarding the second cooking zone in which the cooking appliance 1000 is located may be inserted into the second packet in the form of a UUID. The identification information regarding the cooking appliance 1000 is unique information for identifying the cooking appliance 1000, and may include at least one of a MAC address, a Bluetooth address, a model name, a device identifier, device type information (e.g., an IH type ID, a heater type ID, or a motor type), manufacturer information (e.g., a manufacturer ID), a serial number, or a time of manufacture, but is not limited thereto. According to an embodiment of the disclosure, the identification information regarding the cooking appliance 1000 may be expressed as a series of identification numbers or a combination of numbers and alphabets.

According to an embodiment of the disclosure, the second packet included in the second wireless communication signal may further include product type information indicating a product type of the cooking appliance 1000. For example, the product type information regarding the cooking appliance 1000 may be inserted into the second packet in the form of a UUID, together with the location information regarding the cooking appliance 1000. The product type of the cooking appliance 1000 may include a smart pot, a smart kettle, a toaster, a blender, or a coffee maker, but is not limited thereto. The wireless power transmission apparatus 2000 may identify which type of cooking appliance 1000 is located in which cooking zone, by receiving the second wireless communication signal including the product type information regarding the cooking appliance 1000 and the information regarding the second cooking zone in which the cooking appliance 1000 is located.

According to an embodiment of the disclosure, when the user picks up the cooking appliance 1000, and then places the cooking appliance 1000 back in the same location during cooking, the second cooking zone may be the first cooking zone.

In addition, when a plurality of cooking appliances are located in the plurality of cooking zones, the wireless power transmission apparatus 2000 may receive, from each of the cooking appliances, identification information (or product type information) and location information regarding each of the cooking appliances. For example, when a coffee maker is located in the first cooking zone, the wireless power transmission apparatus 2000 may receive, from the coffee maker, information regarding the first cooking zone and identification information (or product type information) regarding the coffee maker, and when a toaster is located in the second cooking zone, the wireless power transmission apparatus 2000 may receive, from the toaster, information regarding the second cooking zone and identification information (or product type information) regarding the toaster. In this case, the wireless power transmission apparatus 2000 may identify that the coffee maker is located in the first cooking zone and the toaster is located in the second cooking zone.

According to an embodiment of the disclosure, the second packet included in the second wireless communication signal may further include communication connection information. When the cooking appliance 1000 has been previously paired with the wireless power transmission apparatus 2000, the communication connection information may include pairing information (e.g., an authentication key). "Pairing" may refer to, e.g., a procedure for verifying a password, identification information, security information, or authentication information designated for an intercommunication connection between the cooking appliance 1000 and the wireless power transmission apparatus 2000, which support a Bluetooth function. Therefore, according to an embodiment of the disclosure, the wireless power transmission apparatus 2000 may re-establish a short-range wireless communication channel with the cooking appliance 1000 after the second wireless communication signal is received. In addition, the wireless power transmission apparatus 2000 may transmit or receive data to or from the cooking appliance 1000 again through the short-range wireless communication channel.

In operation S540, according to an embodiment of the disclosure, the wireless power transmission apparatus 2000 may output, based on the second wireless communication signal, information regarding the second cooking zone in which the cooking appliance 1000 is currently located, among the plurality of cooking zones. For example, when the location of the cooking appliance 1000 is changed from the first cooking zone to the second cooking zone, the wireless power transmission apparatus 2000 may output information indicating that the cooking appliance 1000 is currently located in the second cooking zone.

According to an embodiment of the disclosure, the wireless power transmission apparatus 2000 may also output an image or text indicating the product type of the cooking appliance 1000, based on the identification information (or product type information) regarding the cooking appliance 1000. For example, the wireless power transmission apparatus 2000 may display, on the display unit, text indicating a name or product type of the cooking appliance 1000 or may display an icon image of the cooking appliance 1000. According to an embodiment of the disclosure, the wireless power transmission apparatus 2000 may also output the identification information (or product type information) regarding the cooking appliance 1000 by speech through the sound output unit.

According to an embodiment of the disclosure, the wireless power transmission apparatus 2000 may display that the cooking appliance 1000 is located in the second cooking zone, by displaying the identification information (or product type information) regarding the cooking appliance 1000 at a location indicating a power level of the second cooking zone in the GUI. For example, when the cooking appliance 1000 is a smart pot and the smart pot is placed in the cooking zone in the lower left corner, the wireless power transmission apparatus 2000 may display an icon image of the smart pot at a location corresponding to the cooking zone in the lower left corner in the GUI. According to an embodiment of the disclosure, the wireless power transmission apparatus 2000 may also output the information (location information regarding the cooking appliance 1000) regarding the second cooking zone, in which the cooking appliance 1000 is located, by speech through the sound output unit.

In the case of a general induction range, a user needs to check a product type of the cooking appliance 1000 and a location of a burner on which the cooking appliance 1000 is placed, and input the product type of the cooking appliance 1000 through an operation interface for the burner, and then input a specific operation, and thus, user convenience is reduced. However, according to an embodiment of the disclosure, when the user puts the cooking appliance 1000 on any cooking zone and presses a power button, the wireless power transmission apparatus 2000 by itself identifies and displays identification information regarding the cooking appliance 1000 and the location of the cooking zone in which the cooking appliance 1000 is placed, and accordingly, user convenience is enhanced. Also, according to an embodiment of the disclosure, even when the user puts the cooking appliance 1000 on the first cooking zone or moves the cooking appliance 1000 placed on the first cooking zone to the second cooking zone while the power is on, the wireless power transmission apparatus 2000 by itself may identify and display the identification information (or product type information) regarding the cooking appliance 1000 and the location of the cooking zone in which the cooking appliance 1000 is placed.

Hereinafter, a method by which the wireless power transmission apparatus 2000 detects a type of the cooking appliance 1000 and provides information regarding the location of the cooking appliance 1000 according to the type of the cooking appliance 1000 is described in a little more detail with reference to FIGS. 8A and 8B.

FIG. 8A is a flowchart for describing a method by which the wireless power transmission apparatus 2000 provides information regarding the location of the cooking appliance 1000 according to the type of the cooking appliance 1000, according to an embodiment of the disclosure. FIG. 8B is a flowchart for describing a method by which the wireless power transmission apparatus 2000 provides information regarding the location of the cooking appliance 1000 according to the type of the cooking appliance 1000, according to an embodiment of the disclosure.

In operation S801, according to an embodiment of the disclosure, the wireless power transmission apparatus 2000 may receive a user input. The user input may be an input for pressing a power button of the wireless power transmission apparatus 2000.

In operation S802, according to an embodiment of the disclosure, in response to receipt of the user input, the wireless power transmission apparatus 2000 may wirelessly transmit power for detecting an IH container including a magnetic material (IH metal). In this case, the wireless power transmission apparatus 2000 may operate in an IH container detection mode. For example, the wireless power transmission apparatus 2000 may control the inverter circuit 2113 to transmit power for detecting the IH container to the cooking appliance 1000. The wireless power transmission apparatus 2000 may wirelessly transmit power at regular intervals. In this case, a power transmission interval may be changed according to system settings.

According to an embodiment of the disclosure, power output to detect the IH container may be a small amount of power that is less than a threshold value (e.g., 100 W). When the cooking appliance 1000 approaches the wireless power transmission apparatus 2000, a current value (inductance) of the working coil 2120 may be changed. Accordingly, in order to detect a change in the current value (inductance) of the working coil 2120, the wireless power transmission apparatus 2000 may control the inverter circuit 2113 to output power for detecting the cooking appliance 1000 through the working coil 2120 every preset time.

In operations S803 and S804, the wireless power transmission apparatus 2000 may monitor current values of a plurality of working coils and detect the cooking appliance 1000 including the magnetic material. For example, based on changes in the current values (inductances) of the plurality of working coils due to approach of the cooking appliance 1000 including the magnetic material, the wireless power transmission apparatus 2000 may determine whether the cooking appliance 1000 is located on the top plate of the wireless power transmission apparatus 2000.

An inductance of the working coil 2120 when the cooking appliance 1000 is located on the top plate of the wireless power transmission apparatus 2000 is different from an inductance of the working coil 2120 when the cooking appliance 1000 is not located on the top plate of the wireless power transmission apparatus 2000. For example, a first inductance when the cooking appliance 1000 is located on the top plate is greater than a second inductance when the cooking appliance 1000 is not located on the top plate. The inductance of the working coil 2120 is proportional to the magnetic permeability of a medium in the vicinity (in particular, at the center of a coil), and this is because, in general, the magnetic permeability of the cooking appliance 1000 is greater than the permeability of air.

Also, a magnitude of a first AC flowing through the working coil 2120 when the cooking appliance 1000 is located on the top plate is less than a magnitude of a second AC flowing through the working coil 2120 when the cooking appliance 1000 is not located on the top plate. Accordingly, the wireless power transmission apparatus 2000 may measure a magnitude of an AC flowing through the working coil 2120 by using the current sensor, and compare the measured magnitude of the AC with a reference current magnitude, and thus detect that the cooking appliance 1000 is located on the top plate of the wireless power transmission apparatus 2000. For example, when a measured current value is less than a reference current value, the wireless power transmission apparatus 2000 may determine that the cooking appliance 1000 is located on the top plate of the wireless power transmission apparatus 2000.

In addition, according to an embodiment of the disclosure, the wireless power transmission apparatus 2000 may detect the cooking appliance 1000 including the magnetic material by measuring a frequency and a phase of the AC flowing through the working coil 2120.

In operation S805, after the wireless power transmission apparatus 2000 detects the cooking appliance 1000 including the magnetic material, the wireless power transmission apparatus 2000 may transmit, to the cooking appliance 1000, preset first level of power for detecting the second type of cooking appliance 1000b (small appliance) capable of performing communication. In this case, the wireless power transmission apparatus 2000 may operate in a small appliance detection mode. The first level of power is power for driving the communication interface 1030 of the cooking appliance 1000 and may be, e.g., about 100 W to about 300 W. The wireless power transmission apparatus 2000 may control the inverter circuit 2113 to cause a current corresponding to the first level of power to flow through the working coil 2120.

According to an embodiment of the disclosure, the cooking appliance 1000 may receive the first level of power transmitted from the wireless power transmission apparatus 2000 and supply power to the PCB 1005 through the pickup coil 1001. In this case, the power supply 1010, the controller 1020, and the communication interface 1030 mounted on the PCB 1005 may be driven.

In operations S806 and S807, when the wireless power transmission apparatus 2000 does not receive the first wireless communication signal from the cooking appliance 1000 including the magnetic material, the wireless power transmission apparatus 2000 may identify the cooking appliance 1000 as the first type of cooking appliance 1000a. For example, when the wireless power transmission apparatus 2000 does not receive the first wireless communication signal within a preset time after the first level of power is transmitted, the wireless power transmission apparatus 2000 may identify the cooking appliance 1000 as a "general IH container (the first type of cooking appliance 1000a)", which is detected in the IH container detection mode but not detected in the small appliance detection mode.

In operation S808, when the cooking appliance 1000 is the first type of cooking appliance 1000a, the wireless power transmission apparatus 2000 may identify a cooking zone in which the first type of cooking appliance 1000a is located, based on the changes in the current values (inductances) of the plurality of working coils. For example, when a magnitude of an AC flowing through the first working coil among the plurality of working coils is less than the reference current magnitude, the wireless power transmission apparatus 2000 may determine that the first type of cooking appliance 1000a is located in the first cooking zone corresponding to the first working coil.

In operation S809, when the wireless power transmission apparatus 2000 receives the first wireless communication signal from the cooking appliance 1000 including the magnetic material, the wireless power transmission apparatus 2000 may identify the cooking appliance 1000 as the second-first type of cooking appliance 1000b-1. For example, when the wireless power transmission apparatus 2000 receives the first wireless communication signal within a preset time after the first level of power is transmitted, the wireless power transmission apparatus 2000 may identify the cooking appliance 1000 as a "small appliance including an IH metal", which is detected in both the IH container detection mode and the small appliance detection mode.

In operation S810, even though the cooking appliance 1000 including the magnetic material is not detected, the wireless power transmission apparatus 2000 may transmit preset first level of power to the cooking appliance 1000 to drive the communication interface 1030 of the cooking appliance 1000. In this case, the wireless power transmission apparatus 2000 may operate in the small appliance detection mode. The first level of power is power for driving the communication interface 1030 of the cooking appliance 1000 and may be, e.g., about 100 W to about 300 W.

In operations S811 and S812, when the first wireless communication signal is received from the cooking appliance 1000, the wireless power transmission apparatus 2000 may identify the cooking appliance 1000 as the second-second type of cooking appliance 1000b-2. For example, when the wireless power transmission apparatus 2000 receives the first wireless communication signal within a preset time after the first level of power is transmitted, the wireless power transmission apparatus 2000 may identify the cooking appliance 1000 as a "small appliance not including an IH metal", which is not detected in the IH container detection mode but detected in the small appliance detection mode.

In operation S813, when the first wireless communication signal is not received from the cooking appliance 1000, the wireless power transmission apparatus 2000 may output a notification that the cooking appliance 1000 is unusable or there is no cooking appliance 1000. For example, when the wireless power transmission apparatus 2000 does not receive the first wireless communication signal within a preset time after the first level of power is transmitted, there is no cooking appliance 1000 detected in both the IH container detection mode and the small appliance detection mode, and thus, the wireless power transmission apparatus 2000 may output a notification that the cooking appliance 1000 is unusable or there is no cooking appliance 1000. In this case, the notification may be displayed on the display unit or may be output by speech through the sound output unit.

According to an embodiment of the disclosure, referring to 800_1 of FIG. 8A, in operation S814, when the cooking appliance 1000 is identified as the second type of cooking appliance 1000b (e.g., the second-first type of cooking appliance 1000b-1 or the second-second type of cooking appliance 1000b-2) capable of performing communication, the wireless power transmission apparatus 2000 may operate in the cooking zone determination mode for determining a cooking zone in which the cooking appliance 1000 is located.

According to an embodiment of the disclosure, when the wireless power transmission apparatus 2000 receives the first wireless communication signal transmitted from the communication interface 1030 of the cooking appliance 1000, the wireless power transmission apparatus 2000 may transmit power from the plurality of cooking zones according to the plurality of different power transmission patterns to determine a cooking zone in which the cooking appliance 1000 is located. For example, when the wireless power transmission apparatus 2000 includes three cooking zones, the wireless power transmission apparatus 2000 may control the first inverter circuit to output power according to the first power transmission pattern through the first working coil corresponding to the first cooking zone, control the second inverter circuit to output power according to the second power transmission pattern through the second working coil corresponding to the second cooking zone, and control a third inverter circuit to output power according to the third power transmission pattern through the third working coil corresponding to the third cooking zone.

When the cooking appliance 1000 detects a specific power transmission pattern among the plurality of power transmission patterns, the cooking appliance 1000 may transmit, to the wireless power transmission apparatus 2000, information regarding a cooking zone corresponding to the specific power transmission pattern (and the product type information regarding the cooking appliance 1000), together with the identification information (e.g., a MAC address or ID) regarding the cooking appliance 1000. For example, the wireless power transmission apparatus 2000 may advertise a second packet including the location information regarding the cooking appliance 1000 (and the product type information regarding the cooking appliance 1000) and the identification information regarding the cooking appliance 1000. In contrast, when the cooking appliance 1000 fails to detect the specific power transmission pattern, the cooking appliance 1000 may advertise, at preset intervals, a second packet that does not include the location information regarding the cooking appliance 1000 but includes only the identification information regarding the cooking appliance 1000.

The wireless power transmission apparatus 2000 may identify whether the second wireless communication signal includes the location information regarding the cooking appliance 1000. For example, the wireless power transmission apparatus 2000 may determine whether the second packet received from the cooking appliance 1000 includes information regarding the cooking zone in which the cooking appliance 1000 is located.

According to an embodiment of the disclosure, when the second wireless communication signal does not include the location information regarding the cooking appliance 1000, the wireless power transmission apparatus 2000 may output a notification to check the location of the cooking appliance 1000. When the wireless power transmission apparatus 2000 receives the second wireless communication signal, but the second wireless communication signal does not include the location information regarding the cooking appliance 1000, though the cooking appliance 1000 is the second type of cooking appliance 1000b (small appliance) capable of performing communication, the cooking appliance 1000 may be incorrectly placed and thus unable to detect the specific power transmission pattern. Accordingly, the wireless power transmission apparatus 2000 may output the notification to check the location of the cooking appliance 1000. For example, when an area in which the cooking appliance 1000 is placed overlaps a part of the first cooking zone, the cooking appliance 1000 may be unable to accurately detect the first power transmission pattern corresponding to the first cooking zone.

According to an embodiment of the disclosure, the wireless power transmission apparatus 2000 may display the notification to check the location of the cooking appliance 1000 on the display unit, or may output the notification by speech. After the wireless power transmission apparatus 2000 outputs the notification to check the location of the cooking appliance 1000, the wireless power transmission apparatus 2000 may retransmit power from the plurality of cooking zones according to the plurality of different power transmission patterns.

In addition, according to an embodiment of the disclosure, referring to 800_2 of FIG. 8B, when the cooking appliance 1000 is identified as the second-second type of cooking appliance 1000b-2, the wireless power transmission apparatus 2000 may operate in the cooking zone determination mode (operation S814), and when the cooking appliance 1000 is identified as the second-first type of cooking appliance 1000b-1, the operation in the cooking zone determination mode may be omitted. In operation S815, when the cooking appliance 1000 is identified as the second-first type of cooking appliance 1000b-1, the wireless power transmission apparatus 2000 may identify a cooking zone in which the second-first type of cooking appliance 1000b-1 is located, based on the changes in the current values (inductances) of the plurality of working coils. For example, when a magnitude of an AC flowing through the first working coil among the plurality of working coils is less than the reference current magnitude, the wireless power transmission apparatus 2000 may determine that the second-first type of cooking appliance 1000b-1 is located in the first cooking zone (cooking zone in the upper left corner) corresponding to the first working coil.

In operation S816, when the wireless power transmission apparatus 2000 identifies the cooking zone in which the second-first type of cooking appliance 1000b-1 is located, based on the changes in the current values (inductances) of the plurality of working coils, the wireless power transmission apparatus 2000 may transmit, to the second-first type of cooking appliance 1000b-1, information regarding the cooking zone in which the second-first type of cooking appliance 1000b-1 is located. For example, the wireless power transmission apparatus 2000 may transmit, to the second-first type of cooking appliance 1000b-1, information indicating that the second-first type of cooking appliance 1000b-1 is located in the first cooking zone (cooking zone in the upper left corner), through short-range wireless communication.

That is, referring to FIG. 8B, when the wireless power transmission apparatus 2000 detects a cooking appliance 1000 (e.g., the first type of cooking appliance 1000a or the second-first type of cooking appliance 1000b-1) including a magnetic material, the wireless power transmission apparatus 2000 may identify a cooking zone in which the cooking appliance 1000 including the magnetic material is located, based on the changes in the current values of the plurality of working coils, and thus, an operation (cooking zone determination mode) of outputting different power transmission patterns for respective cooking zones may be omitted.

In operation S817, when the wireless power transmission apparatus 2000 receives the information regarding the cooking zone in which the cooking appliance 1000 is located, from the cooking appliance 1000 (e.g., the second-first type of cooking appliance 1000b-1 or the second-second type of cooking appliance 1000b-2), the wireless power transmission apparatus 2000 may output the information regarding the cooking zone in which the cooking appliance 1000 is located. Also, when the wireless power transmission apparatus 2000 identifies the cooking zone in which the cooking appliance 1000 (e.g., the first type of cooking appliance 1000a or the second-first type of cooking appliance 1000b-1) is located, based on the changes in the current values (inductances) of the plurality of working coils, the wireless power transmission apparatus 2000 may output the information regarding the cooking zone in which the cooking appliance 1000 is located.

According to an embodiment of the disclosure, when the cooking appliance 1000 is the first type of cooking appliance 1000a, the wireless power transmission apparatus 2000 may output information regarding a cooking zone in which the first type of cooking appliance 1000a is located, by displaying, on the display unit, a power level of the cooking zone in which the first type of cooking appliance 1000a is located.

According to an embodiment of the disclosure, when the cooking appliance 1000 is the second type of cooking appliance 1000b, the wireless power transmission apparatus 2000 may output information regarding a cooking zone in which the second type of cooking appliance 1000b is located, by displaying an identification image (e.g., an icon image) of the second type of cooking appliance 1000b in an area displaying a power level of the cooking zone in which the second type of cooking appliance 1000b is located.

According to an embodiment of the disclosure, the wireless power transmission apparatus 2000 may operate in a power transmission standby mode. For example, when the wireless power transmission apparatus 2000 receives, from the cooking appliance 1000, the second wireless communication signal including the information regarding the first cooking zone and the identification information regarding the cooking appliance 1000, the wireless power transmission apparatus 2000 may operate in the power transmission standby mode for transmitting power to the cooking appliance 1000 through the first cooking zone. In this case, the wireless power transmission apparatus 2000 may be connected to be in communication with the cooking appliance 1000 by establishing a short-range communication channel with the cooking appliance 1000.

According to an embodiment of the disclosure, the power transmission standby mode may be a mode to stand by for a user input indicating power transmission to the cooking appliance 1000. The user input indicating power transmission to the cooking appliance 1000 may include various types of inputs, such as an input for pressing an operation button, an input for selecting a menu, an input for adjusting temperature, an input for selecting a specific recipe, an input for selecting a power level, etc.

In addition, in the power transmission standby mode, the wireless power transmission apparatus 2000 may continue transmitting, to the cooking appliance 1000, the first level of power for maintaining driving of the communication interface 1030 of the cooking appliance 1000.

In operation S818, the wireless power transmission apparatus 2000 may receive an operation command for the cooking appliance 1000 from a user. The operation command for the cooking appliance 1000 may be a command to perform an original function of the cooking appliance 1000. For example, when the cooking appliance 1000 is a coffee maker, the wireless power transmission apparatus 2000 may receive a user command to start brewing coffee, and when the cooking appliance 1000 is a smart pot, the wireless power transmission apparatus 2000 may also receive a command to automatically cook (e.g., porridge). Also, when the cooking appliance 1000 is a general IH container, the wireless power transmission apparatus 2000 may receive a user command to start heating.

In operation S819, the wireless power transmission apparatus 2000 may transmit, to the cooking appliance 1000, second level of power for operating the cooking appliance 1000 according to the operation command. For example, the wireless power transmission apparatus 2000 may control the inverter circuit 2113 to apply an AC corresponding to the second level of power to the working coil 2120. The second level of power may be power for driving a load (e.g., a heater and a motor) of the cooking appliance 1000 or heating contents inside the cooking appliance 1000. The second level of power may be greater than 800 W, but is not limited thereto.

In addition, the first level of power (low power) is to drive the communication interface 1030 of the cooking appliance 1000 and may be lower than the second level of power (high power) for actually operating the cooking appliance 1000.

According to an embodiment of the disclosure, the wireless power transmission apparatus 2000 may receive power control information (e.g., a power level value or duration information) through a short-range wireless communication channel from the cooking appliance 1000 and control power transmission to the cooking appliance 1000 according to the power control information. The power control information may be determined based on recipe information applied to the cooking appliance 1000. For example, when the wireless power transmission apparatus 2000 receives, from the cooking appliance 1000, power control information requesting transmission of power of 1,000 W for 5 minutes, the wireless power transmission apparatus 2000 may control the inverter circuit 2113 to output power of 1,000 W for 5 minutes.

According to an embodiment of the disclosure, when the cooking appliance 1000 is identified as the first type of cooking appliance 1000a, the wireless power transmission apparatus 2000 may provide a GUI corresponding to the general IH container. For example, the wireless power transmission apparatus 2000 may not display product type information corresponding to the first type of cooking appliance 1000a but display a power level at a location corresponding to a cooking zone in which the first type of cooking appliance 1000a is located, on the user interface 2500. For example, when the wireless power transmission apparatus 2000 detects the first type of cooking appliance 1000a placed in the first cooking zone (cooking zone in the upper left corner), the wireless power transmission apparatus 2000 may output that the first type of cooking appliance 1000a operates in the first cooking zone (cooking zone in the upper left corner) by displaying a power level 1701 (e.g., 9) at a location (upper left corner) corresponding to the first cooking zone on the user interface 2500.

According to an embodiment of the disclosure, when the cooking appliance 1000 is identified as the second type of cooking appliance 1000b, the wireless power transmission apparatus 2000 may provide a GUI corresponding product type information regarding the second type of cooking appliance 1000b (small appliance). Because the second type of cooking appliance 1000b may include various types of small appliances, such as a kettle, a toaster, an electric rice cooker, a coffee maker, or a blender, the wireless power transmission apparatus 2000 may provide various types of GUIs corresponding to product type information regarding the small appliance. For example, when the second type of cooking appliance 1000b is a coffee maker, the wireless power transmission apparatus 2000 may provide a menu screen for selecting a type of coffee (e.g., light, mild, balanced, rich, intense, coffee you made, or barista's coffee), a screen for selecting the number of coffee shots (e.g., one shot, two shots, or three shots) and whether to soak coffee beans, a screen for selecting a specific barista, a screen for selecting a temperature, a screen indicating an operation state (e.g., brewing coffee), and a screen for outputting a notification (e.g., "You can use the settings for the coffee you just made in barista's coffee again" or "Your coffee is ready"). Also, when the second type of cooking appliance 1000b is a smart pot, the wireless power transmission apparatus 2000 may provide a menu screen for selecting a type of rice (e.g., white rice or multi-grain rice), a menu screen for selecting a dish (e.g., abalone rice porridge, Recent Dishes, or steamed pork ribs), a screen for providing recipe information (e.g., "Please put all the ingredients in the smart pot and cover the smart pot with a lid"), and a screen for outputting a notification (e.g., "Your delicious dish is ready" or "You can see the recipe again in Recent Dishes").

In operation S820, the wireless power transmission apparatus 2000 may detect that the communication connection with the cooking appliance 1000 is released while power is being transmitted to the cooking appliance 1000. For example, when the user picks up the cooking appliance 1000 from the first cooking zone or moves the cooking appliance 1000 to the second cooking zone, the cooking appliance 1000 is detached from the first cooking zone, and power induced from the wireless power transmission apparatus 2000 to the cooking zone is reduced. Accordingly, because the cooking appliance 1000 is no longer able to drive the communication interface 1030 due to insufficient power, the communication connection between the wireless power transmission apparatus 2000 and the cooking appliance 1000 may be released.

In this case, in order to re-detect the cooking appliance 1000, the wireless power transmission apparatus 2000 may return to operation S802 and re-perform operations S802 to S819. For example, when a first wireless communication signal including the identification information regarding the cooking appliance 1000 received through the communication interface 2300 within a preset time (e.g., 20 seconds) after the communication connection is released, the wireless power transmission apparatus 2000 may control the inverter circuit 2113 to transmit power according to the plurality of different power transmission patterns for the respective cooking zones. In this case, the first wireless communication signal may include information indicating that the current location of the cooking appliance 1000 may not be identified.

When the wireless power transmission apparatus 2000 receives, from the cooking appliance 1000, through the communication interface 2300, a second wireless communication signal including the identification information regarding the cooking appliance 1000 and information regarding the second cooking zone corresponding to a power transmission pattern detected at a location of the cooking appliance 1000, among the plurality of power transmission patterns, the wireless power transmission apparatus 2000 may output, based on the second wireless communication signal, through the output interface 2510, the information regarding the second cooking zone in which the cooking appliance 1000 is currently located, among the plurality of cooking zones. For example, when the cooking appliance 1000 is moved from the first cooking zone to the second cooking zone, the wireless power transmission apparatus 2000 may display the product type information (e.g., an icon indicating a product type) regarding the cooking appliance 1000 at a location indicating the second cooking zone in the GUI screen.

According to an embodiment of the disclosure, the wireless power transmission apparatus 2000 may identify, based on the identification information regarding the cooking appliance 1000, whether an operation history of the cooking appliance 1000 is present within a preset time (e.g., 3 seconds) after the second wireless communication signal is received, and when the operation history of the cooking appliance 1000 is present, may output information regarding a cooking progress of the cooking appliance 1000 corresponding to a time when the communication connection with the cooking appliance 1000 is released. An operation in which the wireless power transmission apparatus 2000 continues outputting the information regarding the cooking progress of the cooking appliance 1000 will be described below in detail with reference to FIG. 15.

According to an embodiment of the disclosure, in response to a communication reconnection with the cooking appliance 1000 after the second wireless communication signal is received, the wireless power transmission apparatus 2000 may receive, from the cooking appliance 1000, first power control information including a first power level value when the communication connection with the cooking appliance 1000 is released, and may transmit, to the cooking appliance 1000, power corresponding to a first power level value based on the first power control information. In this case, the first power level value may be determined based on the recipe information applied to the cooking appliance 1000 before the communication connection with the cooking appliance 1000 is released. An operation in which the wireless power transmission apparatus 2000 transmits, based on the recipe information applied to the cooking appliance 1000 before the communication connection with the cooking appliance 1000 is released, power to the cooking appliance 1000 after the communication is reconnected will be described below in detail with reference to FIG. 18.

In addition, when the first wireless communication signal including the identification information regarding cooking appliance 1000 is not received through the communication interface 2300 within the preset time (e.g., 20 seconds) after the communication connection is released, the wireless power transmission apparatus 2000 may operate in an operation standby mode or may turn off the power. For example, when the first wireless communication signal is not received within the preset time (e.g., 20 seconds) after the communication connection is released, and the cooking appliance 1000 including the magnetic material is not detected in the first cooking zone, the wireless power transmission apparatus 2000 may operate in the operation standby mode with respect to the first cooking zone or may deactivate the first cooking zone. In this case, when a cooking appliance (e.g., the first type of cooking appliance 1000a) including a magnetic material is detected in the second cooking zone or the third cooking zone, the wireless power transmission apparatus 2000 may not turn off the power. In contrast, when the first wireless communication signal is not received within the preset time (e.g., 20 seconds) after the communication connection is released, and the cooking appliance (e.g., the first type of cooking appliance 1000a) including the magnetic material is not detected in all of the plurality of cooking zones, the wireless communication signal may output a notification that there is no cooking appliance 1000 detected or may turn off the power.

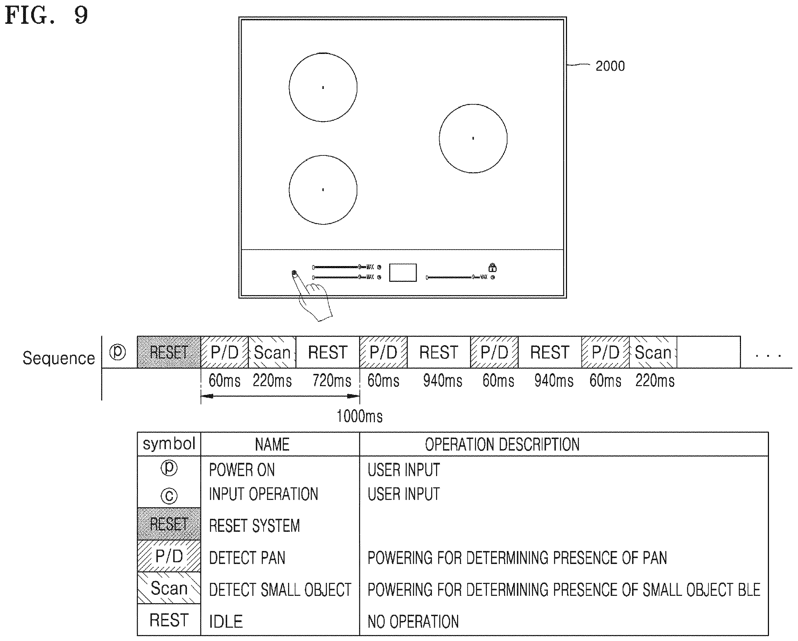

Hereinafter, operations S802 to S804 may be defined as IH container detection operations, and operations S805, S806, and S809 to S812 may be defined as small appliance (small object) detection operations. The first type of cooking appliance 1000a and the second-first type of cooking appliance 1000b-1 each including the magnetic material may be detected by an IH container detection operation of the wireless power transmission apparatus 2000, and the second-first type of cooking appliance 1000b-1 and the second-second type of cooking appliance 1000b-2 each including the communication interface 1030 may be detected by a small appliance detection operation of the wireless power transmission apparatus 2000. Hereinafter, the IH container detection operation (hereinafter, also referred to as a pot detection operation) and the small appliance detection operation (hereinafter, also referred to as a small object detection operation) of the wireless power transmission apparatus 2000 are described in a little more detail with reference to FIGS. 9 to 14.

FIG. 9 is a diagram for describing an operation in which the wireless power transmission apparatus 2000 detects the cooking appliance 1000, according to an embodiment of the disclosure.

Referring to FIG. 9, when a user turns on the power of the wireless power transmission apparatus 2000 while the cooking appliance 1000 is not placed on the wireless power transmission apparatus 2000, the wireless power transmission apparatus 2000 may reset a system and perform an IH container detection operation (pot detection operation) first, and then perform a small appliance detection operation (small object detection operation). In this case, an interval in which the IH container detection operation is performed may be shorter than an interval in which the small appliance detection operation is performed. For example, the wireless power transmission apparatus 2000 may perform the IH container detection operation once every 10 seconds and perform the small appliance detection operation once every 3 seconds.

According to an embodiment of the disclosure, the IH container detection operation (pot detection operation) may be performed for 60 ms, and the small appliance detection operation (small object detection operation) may be performed for 220 ms, but are not limited thereto.

According to an embodiment of the disclosure, when the wireless power transmission apparatus 2000 fails to detect any cooking appliance 1000 by the IH container detection operation and the small appliance detection operation, the wireless power transmission apparatus 2000 may output a notification "Cooking appliance is unusable or there is no cooking appliance".

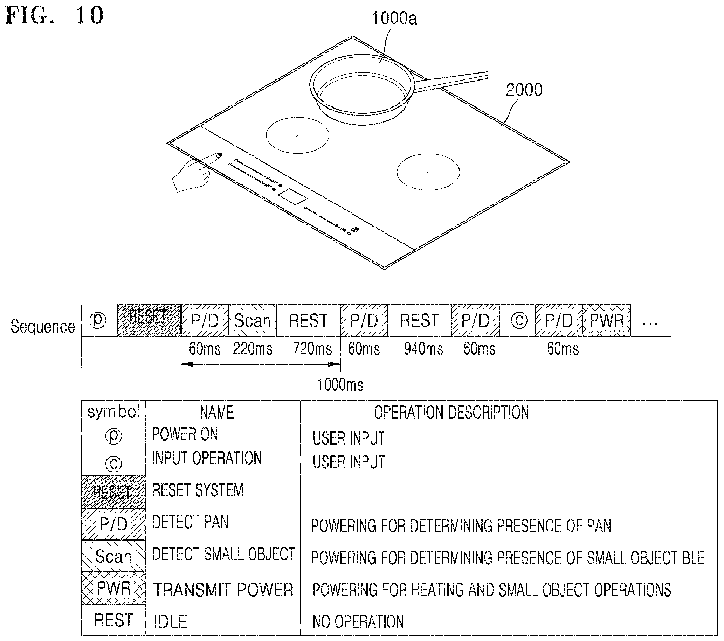

FIG. 10 is a diagram for describing an operation performed by the wireless power transmission apparatus 2000 when the first type of cooking appliance 1000a (an IH container) is placed on the wireless power transmission apparatus 2000, according to an embodiment of the disclosure.

Referring to FIG. 10, when a user turns on the power of the wireless power transmission apparatus 2000 while the first type of cooking appliance 1000a (general IH container) is placed on the top plate, the wireless power transmission apparatus 2000 may reset the system and perform an IH container detection operation (pot detection operation). In this case, because the first type of cooking appliance 1000a includes a magnetic material, the wireless power transmission apparatus 2000 may identify that the first type of cooking appliance 1000a is located in a cooking zone in the upper left corner. In addition, the IH container detection operation (pot detection operation) may be continuously maintained at preset intervals (e.g., 1000 ms).

According to an embodiment of the disclosure, the wireless power transmission apparatus 2000 may perform a small appliance detection operation (small object detection operation). In this case, because the first type of cooking appliance 1000a does not include a communication interface, the wireless power transmission apparatus 2000 may not receive a wireless communication signal from the first type of cooking appliance 1000a. When the wireless communication signal is not received from the first type of cooking appliance 1000a for a preset time (e.g., 220 ms), the wireless power transmission apparatus 2000 may no longer perform the small appliance detection operation (small object detection operation) and may operate in the power transmission standby mode.

According to an embodiment of the disclosure, when an operation (e.g., selecting a heating start button or selecting a power level) for the first type of cooking appliance 1000a is input by a user while the wireless power transmission apparatus 2000 operates in the power transmission standby mode, the wireless power transmission apparatus 2000 may transmit power for heating contents inside the first type of cooking appliance 1000a.

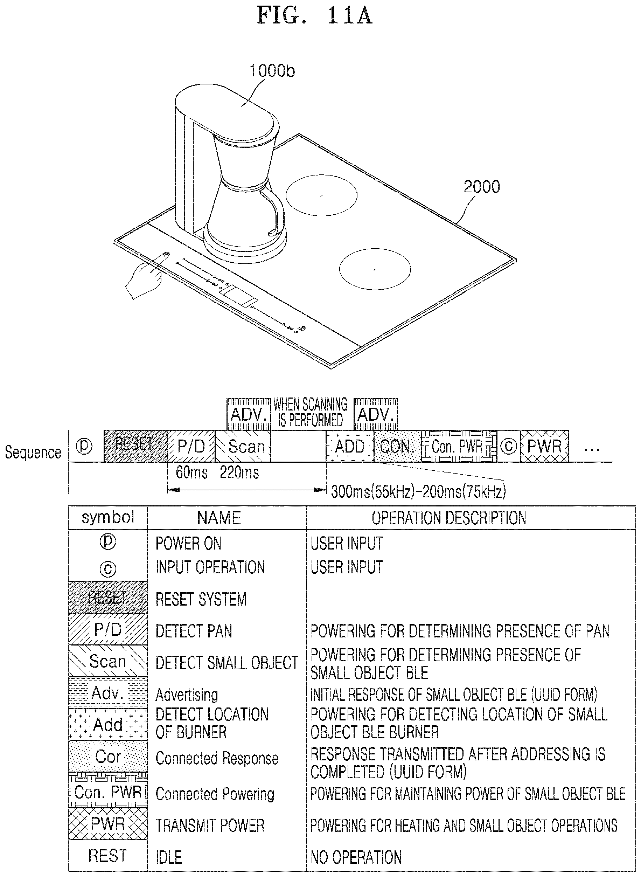

FIG. 11A is a diagram for describing an operation performed by the wireless power transmission apparatus 2000 when the second type of cooking appliance 1000b (small appliance) is placed on the wireless power transmission apparatus 2000, according to an embodiment of the disclosure.

Referring to FIG. 11A, when a user turns on the power of the wireless power transmission apparatus 2000 while the second type of cooking appliance 1000b is placed on the top plate, the wireless power transmission apparatus 2000 may reset the system and perform an IH container detection operation (pot detection operation). In this case, when the second type of cooking appliance 1000b is the second-first type of cooking appliance 1000b-1 including the magnetic material, the wireless power transmission apparatus 2000 may detect, by using the current sensor, that the second-first type of cooking appliance 1000b-1 is placed on the top plate. In addition, when the second type of cooking appliance 1000b is the second-second type of cooking appliance 1000b-2 including the reception coil 1003, the wireless power transmission apparatus 2000 may not detect, by using the current sensor, that the second-second type of cooking appliance 1000b-2 is placed on the top plate.

The wireless power transmission apparatus 2000 may perform the small appliance detection operation (small object detection operation) after the IH container detection operation. For example, the wireless power transmission apparatus 2000 may transmit first level of power to the second type of cooking appliance 1000b to drive the communication interface 1030 of the second type of cooking appliance 1000b and may operate in a scan mode. When the second type of cooking appliance 1000b receives the first level of power, the second type of cooking appliance 1000b may drive the communication interface 1030 and advertise a first packet including identification information (e.g., a MAC address) regarding the second type of cooking appliance 1000b. In this case, information indicating that a cooking zone in which the second type of cooking appliance 1000b is currently located may not be identified may be inserted into the first packet in the form of a UUID. The wireless power transmission apparatus 2000 operating in the scan mode may identify that the second type of cooking appliance 1000b is placed on the top plate, by receiving the first packet advertised by the second type of cooking appliance 1000b.

However, when the first packet does not include information regarding a cooking zone in which the second type of cooking appliance 1000b is located, the wireless power transmission apparatus 2000 may operate in a cooking zone determination mode to identify the location of the second type of cooking appliance 1000b. For example, the wireless power transmission apparatus 2000 may output (e.g., address) power according different power transmission patterns for respective cooking zones. For example, the wireless power transmission apparatus 2000 may set a duration of maintaining a low operating frequency (e.g., 55 kHz) and a duration of maintaining a high operating frequency (e.g., 75 kHz) differently for the respective cooking zones. In this case, induced power may be large in a low operating frequency (e.g., 55 kHz) interval, and induced power may be small in a high operating frequency (e.g., 75 kHz) interval.

According to an embodiment of the disclosure, because the second type of cooking appliance 1000b is placed in the cooking zone in the lower left corner, the second type of cooking appliance 1000b may detect a specific power transmission pattern corresponding to the cooking zone in the lower left corner. The second type of cooking appliance 1000b may identify that the second type of cooking appliance 1000b is located in the cooking zone in the lower left corner, by comparing the specific power transmission pattern with a plurality of pre-stored power transmission patterns of the wireless power transmission apparatus 2000. In this case, the second type of cooking appliance 1000b may transmit (e.g., advertise), to the wireless power transmission apparatus 2000, a second packet including product type information and information indicating that the second type of cooking appliance 1000b is located in the cooking zone in the lower left corner. Current location information and product type information regarding the second type of cooking appliance 1000b may be inserted into the second packet in the form of a UUID. Also, the second packet may further include identification information (e.g., a MAC address) regarding the second type of cooking appliance 1000b and communication connection information.

The wireless power transmission apparatus 2000 may perform a communication connection with the second type of cooking appliance 1 000b based on the communication connection information included in the second packet. When the wireless power transmission apparatus 2000 has been previously paired with the second type of cooking appliance 1000b, the communication connection information may include pairing information. According to an embodiment of the disclosure, the wireless power transmission apparatus 2000 may establish a short-range wireless communication channel (e.g., a Bluetooth communication channel or a BLE communication channel) with the second type of cooking appliance 1000b. When the Bluetooth communication channel is established, it may refer to causing the second type of cooking appliance 1000b and the wireless power transmission apparatus 2000 to be in a state in which data may be transmitted or received using a Bluetooth communication method. The BLE communication channel may be a non-connected virtual communication channel for transmitting or receiving advertising packets through mutual scanning between the second type of cooking appliance 1000b and the wireless power transmission apparatus 2000, or may be a connected communication channel in which a session is generated upon a BLE connection request of the wireless power transmission apparatus 2000.

When the wireless power transmission apparatus 2000 is connected to be in communication with the second type of cooking appliance 1000b, the wireless power transmission apparatus 2000 may control the inverter circuit 2113 to transmit first level of power (low power) for maintaining the communication connection with the second type of cooking appliance 1000b to the pickup coil 1001 of the second type of cooking appliance 1000b. In this case, when an operation command (e.g., start brewing coffee, start automatic cooking, heat, or keep warm) for the second type of cooking appliance 1000b is received from a user, the wireless power transmission apparatus 2000 may control the inverter circuit 2113 to transmit, to the second type of cooking appliance 1000b, second level of power for operating the second type of cooking appliance 1000b. The second level of power may be power (high power) for driving a load (e.g., a heater, a motor, and a battery) of the second type of cooking appliance 1000b.

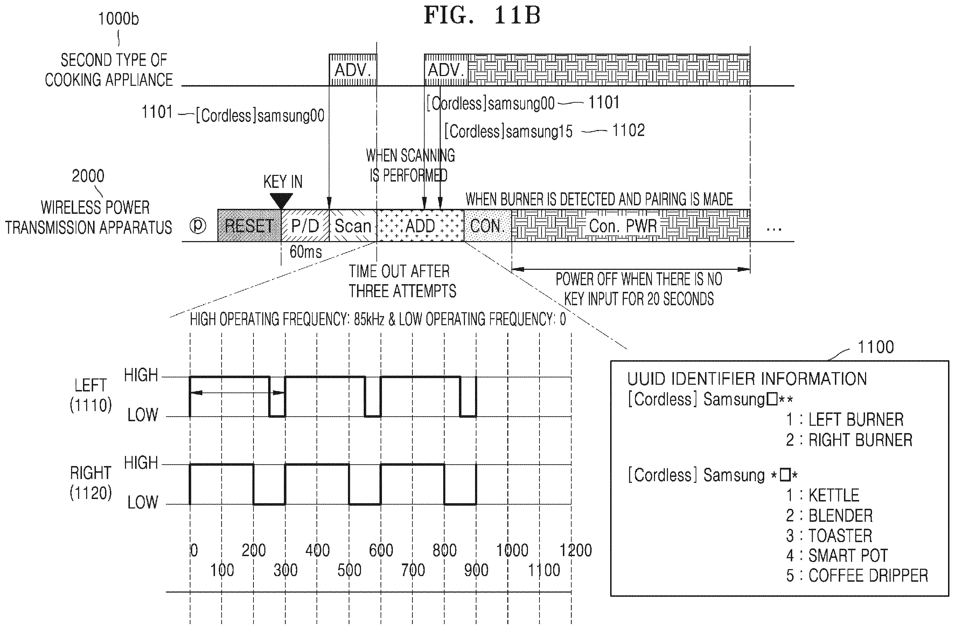

An operation in which the wireless power transmission apparatus 2000 identifies the location of the second type of cooking appliance 1000b is now described in a little more detail with reference to FIG. 11B.

FIG. 11B is a diagram for describing an operation in which the wireless power transmission apparatus 2000 identifies the location of the second type of cooking appliance 1000b (small appliance), according to an embodiment of the disclosure.

Referring to FIG. 11B, when a user turns on the power of the wireless power transmission apparatus 2000 while the second type of cooking appliance 1000b is placed on the top plate, the wireless power transmission apparatus 2000 may reset the system and perform an IH container detection operation (pot detection operation) for a preset time (e.g., 60 ms), and then perform a small appliance detection operation (small object detection operation). In the small appliance detection mode, the wireless power transmission apparatus 2000 may transmit, to the second type of cooking appliance 1 000b, first level of power (low power) for driving the communication interface 1030 of the second type of cooking appliance 1000b and operate in a scan mode.

When the second type of cooking appliance 1000b receives the first level of power (low power), the second type of cooking appliance 1000b may operate the communication interface 1030 and broadcast an advertising packet including identification information (e.g., a MAC address) of the second type of cooking appliance 1000b. In this case, the advertising packet may include a UUID 1100. According to an embodiment of the disclosure, the UUID 1100 may include product type information regarding the second type of cooking appliance 1000b and information regarding a cooking zone (burner) in which the second type of cooking appliance 1000b is currently located. For example, when a current location of the second type of cooking appliance 1000b is a left cooking zone (left burner), a first code of the UUID 1100 may be expressed as "1", when the current location of the second type of cooking appliance 1000b is a right cooking zone (right burner), the first code of the UUID 1100 may be expressed as "2", and when the current location of the second type of cooking appliance 1000b may not be identified, the first code of the UUID 1100 may be expressed as "0". Also, when a product type of the second type of cooking appliance 1000b is a smart kettle, a second code of the UUID 1100 may be expressed as "1", when the product type of the second type of cooking appliance 1000b is a blender, the second code of the UUID 1100 may be expressed as "2", when the product type of the second type of cooking appliance 1000b is a toaster, the second code of the UUID 1100 may be expressed as "3", when the product type of the second type of cooking appliance 1000b is a smart pot, the second code of the UUID 1100 may be expressed as "4", and when the product type of the second type of cooking appliance 1000b is a coffee dripper, the second code of the UUID 1100 may be expressed as "5".

According to an embodiment of the disclosure, when the second type of cooking appliance 1000b receives the first level of power (low power), the second type of cooking appliance 1000b may drive the communication interface 1030 and broadcast a first advertising packet including the identification information (e.g., a MAC address) regarding the second type of cooking appliance 1000b. In this case, the first advertising packet may include a first UUID 1101 (e.g., [Cordless] Samsung 00) in which both the location information and the product type information regarding the second type of cooking appliance 1000b are expressed as "0".

The wireless power transmission apparatus 2000 may scan the first advertising packet including the first UUID 1101. Because both a first code and a second code of a first UUID 1101 are expressed as "0", the wireless power transmission apparatus 2000 may operate in a cooking zone determination mode to identify the location of the second type of cooking appliance 1000b. For example, the wireless power transmission apparatus 2000 may output power according to different power transmission patterns for respective cooking zones. The power transmission patterns may be differently set depending on a duration of a high power transmission interval T1 and a duration of a low power transmission interval (or a power cut-off interval T2). For example, in a first power transmission pattern 1110 of the left cooking zone, the duration of the high power transmission interval T1 is 250 ms, and the duration of the low power transmission interval (or the power cut-off interval T2) is 50 ms. Also, an operating frequency of the high power transmission interval T1 may be 85 kHz, and an operating frequency of the low power transmission interval (or power cut-off interval T2) may be 0 kHz. That is, according to the first power transmission pattern 1110, a pattern in which power is transmitted at an operating frequency of 85 kHz for 250 ms and cut off for 50 ms may be repeated. In a second power transmission pattern 1120 of the right cooking zone, the duration of the high power transmission interval T1 is 200 ms, and the duration of the low power transmission interval (or the power cut-off interval T2) is 100 ms. That is, according to the second power transmission pattern 1120, a pattern in which power is transmitted at an operating frequency of 85 kHz for 200 ms and cut off for 100 ms may be repeated.

When the second type of cooking appliance 1000b is placed in the left cooking zone, the second type of cooking appliance 1000b may detect the first power transmission pattern 1110 corresponding to the left cooking zone. The second type of cooking appliance 1000b may identify that the second type of cooking appliance 1000b is located in the left cooking zone, by comparing the first power transmission pattern 1110 with the plurality of pre-stored power transmission patterns of the wireless power transmission apparatus 2000. In this case, the second type of cooking appliance 1000b may broadcast a second advertising packet including the identification information (e.g., a MAC address) regarding the second type of cooking appliance 1000b. The second advertising packet may include a second UUID 1102 (e.g., [Cordless] Samsung 15) in which the location information regarding the second type of cooking appliance 1000b is expressed as "1" and the product type information regarding the second type of cooking appliance 1000b is expressed as "5".

The wireless power transmission apparatus 2000 may scan the second advertising packet including the second UUID 1102. Because a first code of the second UUID 1102 is expressed as "1" and a second code of the second UUID 1102 is expressed as "5", the wireless power transmission apparatus 2000 may identify that the second type of cooking appliance 1000b is a coffee dripper currently located in the left cooking zone. In addition, the wireless power transmission apparatus 2000 may notify the user that the coffee dripper is currently located in the left cooking zone, by displaying a coffee dripper icon at a location indicating the left cooking zone in the GUI displayed on the display unit.

In addition, when the first UUID 1101 instead of the second UUID 1102 is still included in the second advertising packet received after the wireless power transmission apparatus 2000 outputs power according to different power transmission patterns for the respective cooking zones, the second type of cooking appliance 1000b may be incorrectly placed and thus unable to detect a specific power transmission pattern. Accordingly, the wireless power transmission apparatus 2000 may output a notification to check the location of the second type of cooking appliance 1000b. For example, when an area in which the second type of cooking appliance 1000b is placed overlaps a part of the left cooking zone, the second type of cooking appliance 1000b may be unable to accurately detect the first power transmission pattern 1110 corresponding to the left cooking zone.

According to an embodiment of the disclosure, the wireless power transmission apparatus 2000 may display the notification to check the location of the second type of cooking appliance 1000b on the display unit, or may output the notification by speech. After the wireless power transmission apparatus 2000 outputs the notification to check the location of the second type of cooking appliance 1000b, the wireless power transmission apparatus 2000 may retransmit power from the plurality of cooking zones according to the plurality of different power transmission patterns.

According to an embodiment of the disclosure, when the wireless power transmission apparatus 2000 receives the second advertising packet including the second UUID 1102 and is then connected to be in communication with the second type of cooking appliance 1000b, the wireless power transmission apparatus 2000 may control the inverter circuit 2113 to transmit, to the pickup coil 1001 of the second type of cooking appliance 1000b, first level of power (low power) for maintaining a communication connection with the second type of cooking appliance 1000b. In this case, when an operation command (e.g., start brewing coffee, start automatic cooking, heat, or keep warm) for the second type of cooking appliance 1000b is received from a user, the wireless power transmission apparatus 2000 may control the inverter circuit 2113 to transmit, to the second type of cooking appliance 1000b, second level of power (high power) for operating the second type of cooking appliance 1000b. In addition, according to an embodiment of the disclosure, when the operation command for the second type of cooking appliance 1000b is not received from the user for a preset time (e.g., 20 seconds), the wireless power transmission apparatus 2000 may turn off the power.

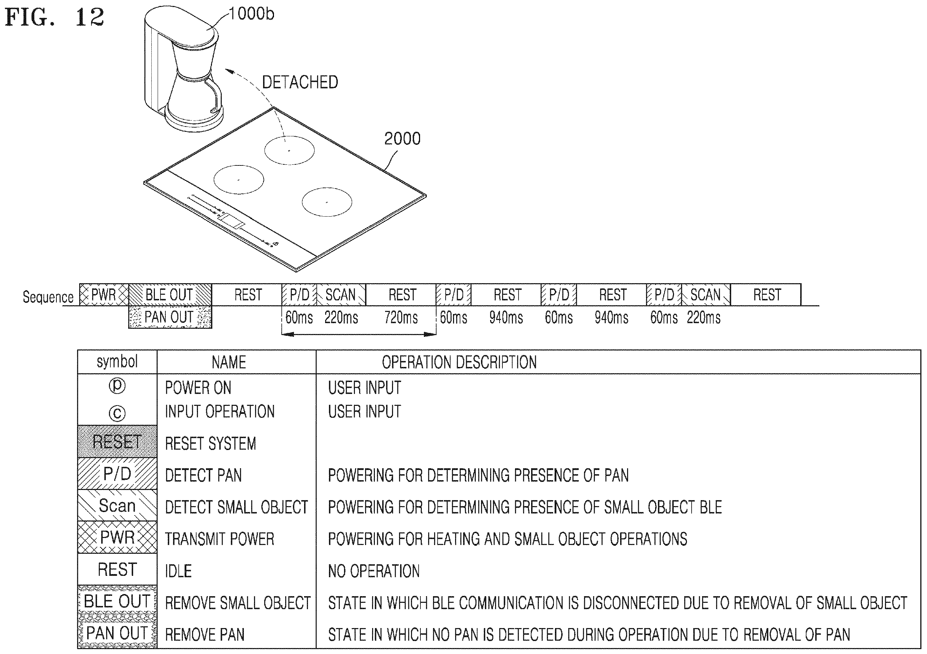

FIG. 12 is a diagram for describing an operation performed by the wireless power transmission apparatus 2000 after the second type of cooking appliance 1000b is detached from the wireless power transmission apparatus 2000, according to an embodiment of the disclosure.

Referring to FIG. 12, while the wireless power transmission apparatus 2000 transmits second level of power (high power) for operating the second type of cooking appliance 1000b, a user may remove the second type of cooking appliance 1000bfrom the top plate of the wireless power transmission apparatus 2000. In this case, the wireless power transmission apparatus 2000 may detect that the second type of cooking appliance 1000b is detached from the top plate, based on a change in a current value of the working coil 2120 detected by the current sensor and/or a change in a packet received from the communication interface 2300.

When the second type of cooking appliance 1000b is detached from the top plate, the wireless power transmission apparatus 2000 may perform an IH container detection operation (pot detection operation) and a small appliance detection operation (small object detection operation) at preset intervals. For example, the wireless power transmission apparatus 2000 may perform the IH container detection operation once every 10 seconds and perform the small appliance detection operation once every 3 seconds.

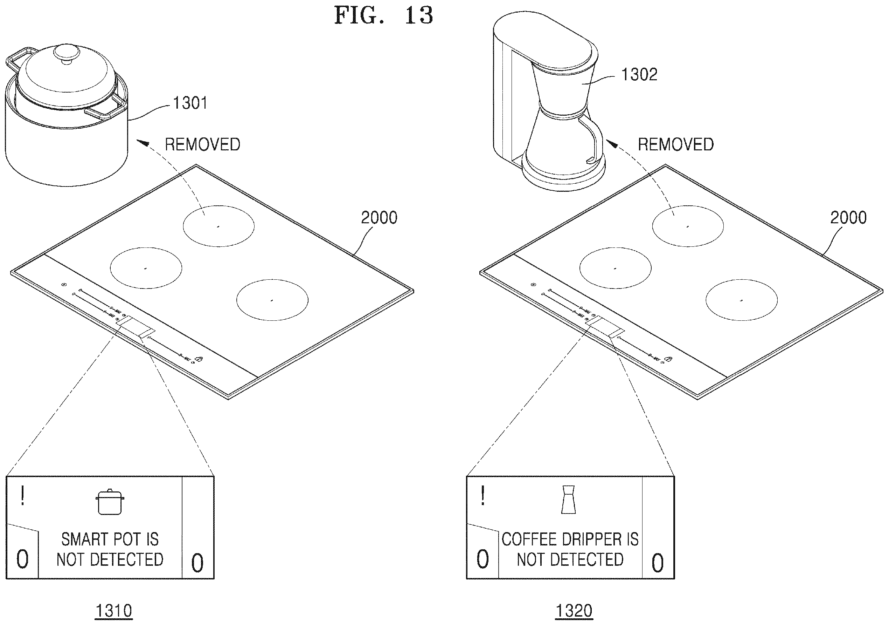

In addition, when the second type of cooking appliance 1000b is detached from the top plate, the wireless power transmission apparatus 2000 may output a notification that the second type of cooking appliance 1000b is not detected. An operation in which the wireless power transmission apparatus 2000 outputs a notification is described with reference to FIG. 13.

FIG. 13 is a diagram for describing an operation in which the wireless power transmission apparatus 2000 displays a notification after the cooking appliance 1000 is removed from the wireless power transmission apparatus 2000, according to an embodiment of the disclosure.

Referring to 1310 of FIG. 13, when a smart pot 1301, which is the second-first type of cooking appliance 1 000b-1, is placed on the cooking zone in the upper left corner, and then removed therefrom, the wireless power transmission apparatus 2000 may output a notification "Smart pot is not detected". In this case, because the smart pot 1301 was placed on the cooking zone in the upper left corner, an exclamation point (!) may be displayed at a location corresponding to the cooking zone in the upper left corner.

Referring to 1320 of FIG. 13, when a coffee maker (coffee dripper) 1302, which is the second-second type of cooking appliance 1000b-2, is placed on the cooking zone in the upper left corner, and then removed therefrom, the wireless power transmission apparatus 2000 may output a notification "Coffee dripper is not detected". In this case, because the coffee maker (coffee dripper) 1302 was placed on the cooking zone in the upper left corner, an exclamation point (!) may be displayed at a location corresponding to the cooking zone in the upper left corner.

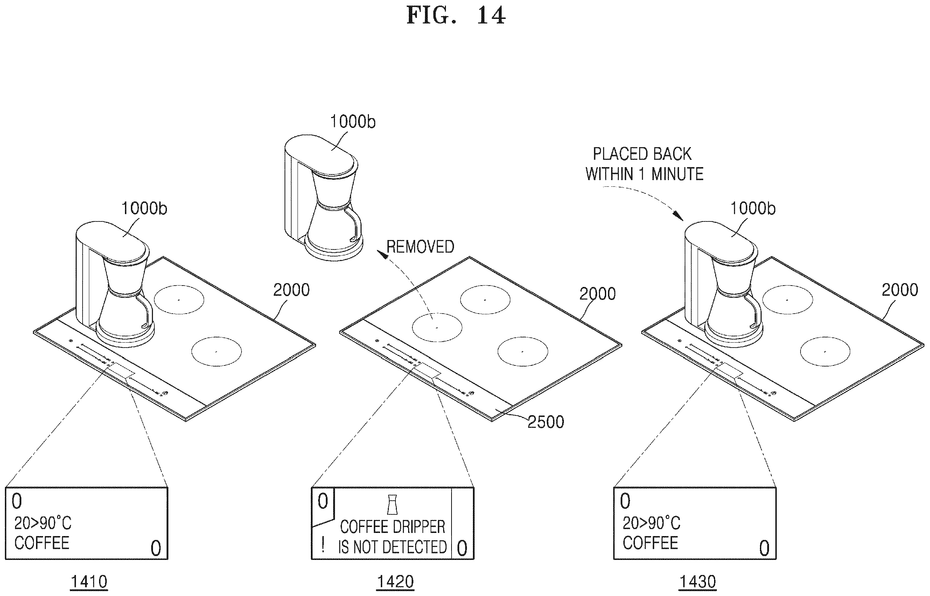

FIG. 14 is a diagram for describing an operation performed by the wireless power transmission apparatus 2000 when the second type of cooking appliance 1 000b is placed in the same cooking zone within a preset time after the second type of cooking appliance 1000b has been removed from the wireless power transmission apparatus 2000, according to an embodiment of the disclosure.

Referring to 1410 of FIG. 14, when a user puts the second type of cooking appliance 1000b on the cooking zone in the lower left corner, and then turns on the power, the wireless power transmission apparatus 2000 may identify that the second type of cooking appliance 1000b is a coffee dripper located in the cooking zone in the lower left corner, by performing an IH container detection operation, a small appliance detection operation, and a cooking zone determination operation. In addition, the wireless power transmission apparatus 2000 may be connected to be in communication with the second type of cooking appliance 1000b, and display cooking progress information regarding the second type of cooking appliance 1000b at a location corresponding to the cooking zone in the lower left corner. For example, when the user sets a coffee brewing temperature of the second type of cooking appliance 1000b to 90 °C, the wireless power transmission apparatus 2000 may display a temperature change state of water for coffee (e.g., 20 °C > 90 °C) at a location corresponding to the cooking zone in the lower left corner.

Referring to 1420 of FIG. 14, when the user picks up the second type of cooking appliance 1000b from the cooking zone in the lower left corner for a short time, the wireless power transmission apparatus 2000 may detect that a communication connection with the second type of cooking appliance 1000b is released, and output a notification "Coffee dripper is not detected". In this case, because the second type of cooking appliance 1000b is placed on the cooking zone in the lower left corner, an exclamation point (!) may be displayed at a location corresponding to the cooking zone in the lower left corner. In addition, the wireless power transmission apparatus 2000 may perform the IH container detection operation, the small appliance detection operation, and the cooking zone determination operation for a preset time.

Referring to 1430 of FIG. 14, when the user puts the second type of cooking appliance 1000b back on the cooking zone in the lower left corner within a preset time (e.g., 1 minute), the wireless power transmission apparatus 2000 may identify that the second type of cooking appliance 1000b is placed in the cooking zone in the lower left corner again, based on the UUID 1100 and identification information (e.g., a MAC address, a Bluetooth device address, or a device ID) regarding the second type of cooking appliance 1000b included in a wireless communication signal transmitted by the second type of cooking appliance 1000b. In this case, the wireless power transmission apparatus 2000 may be reconnected to be in communication with the second type of cooking appliance 1000b, and display the cooking progress information regarding the second type of cooking appliance 1000b at the location corresponding to the cooking zone in the lower left corner. For example, the wireless power transmission apparatus 2000 may continue displaying the temperature change state (e.g., 20 °C > 90 °C) of the water for coffee at the location corresponding to the cooking zone in the lower left corner.

Hereinafter, a method by which the wireless power transmission apparatus 2000 continues providing information regarding a cooking progress of the second type of cooking appliance 1000b when a user picks up the second type of cooking appliance 1000b operating on the wireless power transmission apparatus 2000 and moves the second type of cooking appliance 1000b to another cooking zone is described in detail with reference to FIG. 15.

FIG. 15 is a flowchart for describing a method by which the wireless power transmission apparatus 2000 displays information regarding the cooking appliance 1000 based on operation history information regarding the cooking appliance 1000, according to an embodiment of the disclosure. In FIG. 15, a case in which the cooking appliance 1000 that has been operating in the first cooking zone is moved to the second cooking zone is described as an example.

According to an embodiment of the disclosure, through operations S510 to S530 in FIG. 5 described above, the wireless power transmission apparatus 2000 may transmit power for driving the communication interface 1030 of the cooking appliance 1000 in response to release of a communication connection with the cooking appliance 1000 that has been located in the first cooking zone, transmit power from the plurality of cooking zones according to the plurality of different power transmission patterns when a first wireless communication signal including identification information regarding the cooking appliance 1000 is received within a preset time, receive a second wireless communication signal including the identification information regarding the cooking appliance 1000 and information regarding the second cooking zone corresponding to a power transmission pattern detected by the cooking appliance 1000, and be reconnected to be in communication with the cooking appliance 1000.

In operation S1510, according to an embodiment of the disclosure, the wireless power transmission apparatus 2000 may identify whether an operation history of the cooking appliance 1000 is present within a preset time before the second wireless communication signal is received, based on the identification information regarding the cooking appliance 1000 included in the second wireless communication signal.

According to an embodiment of the disclosure, when the wireless power transmission apparatus 2000 is connected to be in communication with the cooking appliance 1000, the wireless power transmission apparatus 2000 may store data regarding the cooking appliance 1000 in the memory 2600. For example, the wireless power transmission apparatus 2000 may store, in the memory 2600, identification information (e.g., a MAC address or a device ID) regarding the cooking appliance 1000, a communication connection history of the cooking appliance 1000, a history of receiving power control information from the cooking appliance 1000, or an operation history of the cooking appliance 1000. Accordingly, when the second wireless communication signal is received, the wireless power transmission apparatus 2000 may identify whether the communication connection history of the cooking appliance 1000, the history of receiving the power control information from the cooking appliance 1000, or the operation history of the cooking appliance 1000 is present, by comparing the identification information regarding the cooking appliance 1000 stored in the memory 2600 with the identification information regarding the cooking appliance 1000 included in the second wireless communication signal.

Also, the wireless power transmission apparatus 2000 may identify, based on time information (e.g., a time stamp), whether an operation history of the cooking appliance 1000 is present within a preset time before the second wireless communication signal is received. The preset time may be a time set by the system or a time input by the user. The preset time may be, e.g., 3 seconds, but is not limited thereto.

In operations S1520 and S1530, according to an embodiment of the disclosure, when the operation history of cooking appliance 1000 is present within the preset time before the second wireless communication signal is received, the wireless power transmission apparatus 2000 may output information regarding a cooking progress of the cooking appliance 1000 corresponding to a time when the communication connection with the cooking appliance 1000 is released. The information regarding the cooking progress of the cooking appliance 1000 may include at least one of a cooking menu, an elapsed cooking time, or a cooking stage when the communication connection with the cooking appliance 1000 is released, but is not limited thereto.

According to an embodiment of the disclosure, when the wireless power transmission apparatus 2000 is connected to be in communication with the cooking appliance 1000, the wireless power transmission apparatus 2000 may store the information regarding the cooking progress of the cooking appliance 1000 in the memory 2600. Accordingly, when the operation history of the cooking appliance 1000 is present within the preset time before the second wireless communication signal is received from the cooking appliance 1000, the wireless power transmission apparatus 2000 may obtain, from the memory 2600, the information regarding the cooking progress of the cooking appliance 1000 corresponding to the time when the communication connection with the cooking appliance 1000 is released. For example, the wireless power transmission apparatus 2000 may retrieve, from the memory 2600, information regarding the last cooking progress stage (the most recent cooking progress stage) stored in the memory 2600.

According to an embodiment of the disclosure, in response to a communication reconnection with the cooking appliance 1000 after the second wireless communication signal is received, the wireless power transmission apparatus 2000 may receive, from the cooking appliance 1000, the information regarding the cooking progress of the cooking appliance 1000. For example, when the operation history of the cooking appliance 1000 is present within the preset time before the second wireless communication signal is received, the wireless power transmission apparatus 2000 may request the cooking appliance 1000 for the information regarding the cooking progress through the short-range wireless communication channel. In this case, the cooking appliance 1000 may transmit, to the wireless power transmission apparatus 2000, through the short-range wireless communication channel, information regarding a cooking stage which was interrupted due to the cooking appliance 1000 being picked up from the first cooking zone.

According to an embodiment of the disclosure, the wireless power transmission apparatus 2000 may output the information regarding the cooking progress of the cooking appliance 1000 through the user interface 2500. For example, the wireless power transmission apparatus 2000 may display, on the display unit, the cooking menu, the elapsed cooking time, or the cooking stage when the communication connection with the cooking appliance 1000 is released. Accordingly, according to an embodiment of the disclosure, the wireless power transmission apparatus 2000 may continue providing, to the user, information regarding the cooking progress before and after the cooking appliance 1000 is moved.

In addition, according to an embodiment of the disclosure, when a cooking operation continues in a cooking zone (e.g., the second cooking zone) to which the cooking appliance 1000 is moved, the wireless power transmission apparatus 2000 may update the information regarding the cooking progress of the cooking appliance 1000, and display the updated information regarding the cooking progress through the user interface 2500.

In operations S1520 and S1540, according to an embodiment of the disclosure, when there is no operation history of the cooking appliance 1000 within the preset time before the second wireless communication signal is received, the wireless power transmission apparatus 2000 may display a basic screen of the cooking appliance 1000. The basic screen of the cooking appliance 1000 may include an initial setting screen or a screen regarding a menu performed last by the cooking appliance 1000, but is not limited thereto.

For example, when the user picks up the cooking appliance 1000 that has been operating in the first cooking zone of the wireless power transmission apparatus 2000, puts the cooking appliance 1000 on a countertop, and then places the cooking appliance 1000 in the second cooking zone after a preset time (e.g., 10 minutes), the wireless power transmission apparatus 2000 may display the basic screen of the cooking appliance 1000. When a difference between a time when the cooking appliance 1000 is picked up from the first cooking zone and a time when the cooking appliance 1000 is placed in the second cooking zone is greater than or equal to a preset time (e.g., 3 minutes), the user may have no intention of continuing the cooking operation in the second cooking zone by using the cooking appliance 1000, and thus, the wireless power transmission apparatus 2000 may display the basic screen.

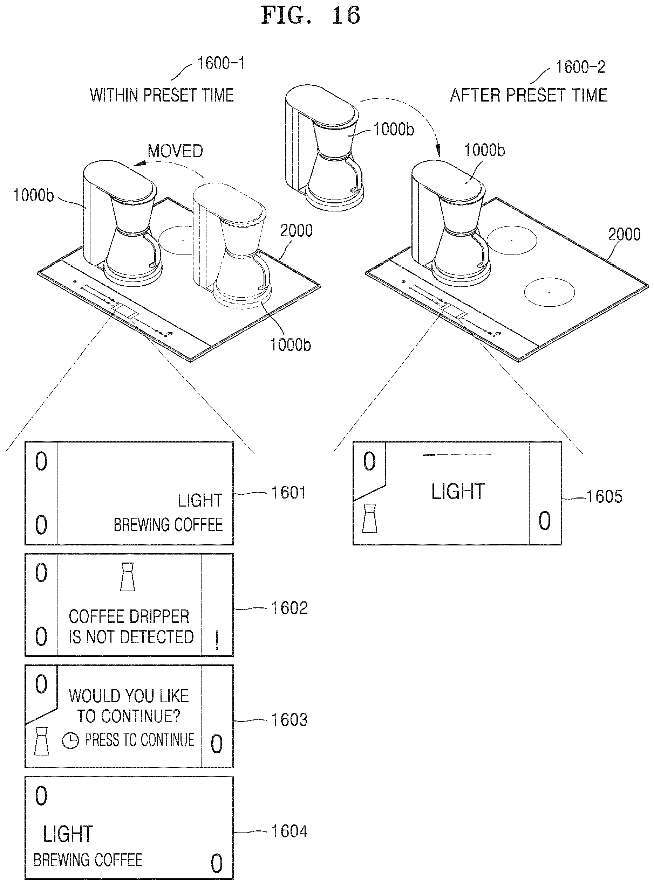

Hereinafter, an operation in which the wireless power transmission apparatus 2000 displays the information regarding the cooking progress of the cooking appliance 1000 and the basic screen of the cooking appliance 1000 based on the operation history of the cooking appliance 1000 within a preset time is described in a little more detail with reference to FIG. 16.

FIG. 16 is a diagram for describing an operation in which the wireless power transmission apparatus 2000 displays information regarding the second type of cooking appliance 1000b based on operation history information regarding the second type of cooking appliance 1000b. In FIG. 16, a case in which the second type of cooking appliance 1000b is a coffee maker (coffee dripper) is described as an example.

Referring to 1600-1 of FIG. 16, the second type of cooking appliance 1000b may be placed and operate in a right cooking zone of the wireless power transmission apparatus 2000. In this case, the wireless power transmission apparatus 2000 may identify a product type (e.g., the coffee maker) of the second type of cooking appliance 1000b and a location (right cooking zone) of the second type of cooking appliance 1000b, and display a coffee maker icon at a location corresponding to the right cooking zone in the display unit. Also, when the second type of cooking appliance 1000b performs a specific cooking operation (e.g., a coffee brewing operation), the wireless power transmission apparatus 2000 may display information regarding the cooking progress on the display unit. For example, because the second type of cooking appliance 1000b is located in the right cooking zone, the wireless power transmission apparatus 2000 may output a first GUI screen 1601 displaying a selected menu (e.g., light) and a progress (e.g., brewing coffee) at the location corresponding to the right cooking zone.

The second type of cooking appliance 1000b may be picked up by the user and moved to a cooking zone in the lower left corner while brewing coffee in the right cooking zone. In this case, in response to temporary release of a communication connection with the second type of cooking appliance 1000b, the wireless power transmission apparatus 2000 may output a second GUI screen 1602 including a notification message "Coffee dripper is not detected". In this case, because the second type of cooking appliance 1000b is placed on the right cooking zone, an exclamation point (!) may be displayed at a location corresponding to the right cooking zone in the second GUI screen 1602.

The wireless power transmission apparatus 2000 may perform a small appliance detection operation and a cooking zone determination operation to re-detect the second type of cooking appliance 1000b. The wireless power transmission apparatus 2000 may identify that the second type of cooking appliance 1000b is located in the cooking zone in the lower left corner through the small appliance detection operation and the cooking zone determination operation, and display the coffee maker icon at a location corresponding to the cooking zone in the lower left corner instead of the location corresponding to the right cooking zone. In addition, the wireless power transmission apparatus 2000 may be reconnected to be in communication with the second type of cooking appliance 1000b, and identify whether an operation history of the second type of cooking appliance 1000b is present within a preset time (e.g., 3 seconds) based on identification information (e.g., a MAC address or a device ID) regarding the second type of cooking appliance 1000b. Because the operation history of the second type of cooking appliance 1000b is present within the preset time (e.g., 3 seconds), the wireless power transmission apparatus 2000 may output a third GUI screen 1603 asking the user whether to continue the operation of the second type of cooking appliance 1000b. When the user wishes to continue the operation of the second type of cooking appliance 1000b, the wireless power transmission apparatus 2000 may continue displaying information regarding a cooking progress corresponding to a time when the communication connection with the second type of cooking appliance 1000b is released. For example, the wireless power transmission apparatus 2000 may output a fourth GUI screen 1604 displaying a selected menu (e.g., light) and a progress (e.g., brewing coffee) at the location corresponding to the cooking zone in the lower left corner.

Referring 1600-2 of FIG. 16, when the user picks up the second type of cooking appliance 1000b that has been operating in the right cooking zone of the wireless power transmission apparatus 2000, puts the second type of cooking appliance 1000b on the countertop, and then places the second type of cooking appliance 1000b in the cooking zone in the lower left corner after a preset time (e.g., after 10 minutes), the wireless power transmission apparatus 2000 may perform an IH container detection operation, a small appliance detection operation, and a cooking zone determination operation. In this case, the wireless power transmission apparatus 2000 may identify the product type (e.g., the coffee maker) of the second type of cooking appliance 1000b and the location (cooking zone in the lower left corner) regarding the second type of cooking appliance 1000b, and display the coffee maker icon at the location corresponding to the cooking zone in the lower left corner in the display unit.

When the wireless power transmission apparatus 2000 is connected to be in communication with the second type of cooking appliance 1000b, the wireless power transmission apparatus 2000 may identify whether the operation history of the second type of cooking appliance 1000b is present within the preset time (e.g., 3 seconds) based on the identification information (e.g., the MAC address or the device ID) regarding the second type of cooking appliance 1000b. Because there is no operation history of the second type of cooking appliance 1000b within the preset time, the wireless power transmission apparatus 2000 may display the basic screen of the second type of cooking appliance 1000b. For example, the wireless power transmission apparatus 2000 may output a GUI screen 1605 regarding a menu (e.g., light) performed last by the second type of cooking appliance 1000b.

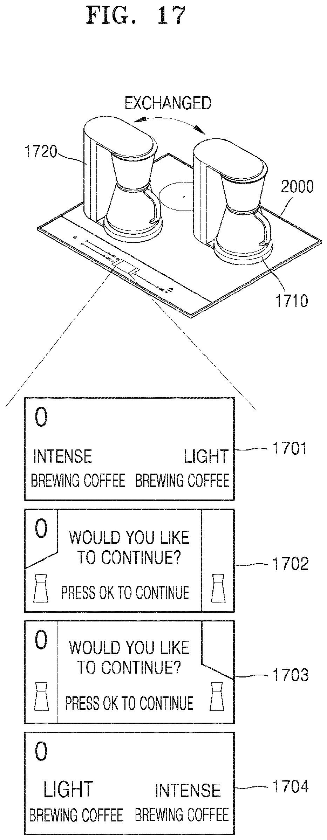

In FIG. 16, a case in which the user changes a location of one second type of cooking appliance 1000b on the top plate of the wireless power transmission apparatus 2000 has been described as an example, but the user may also exchange locations of a plurality of cooking appliances with each other on the top plate of the wireless power transmission apparatus 2000. A case in which the locations of the plurality of cooking appliances are exchanged with each other is described with reference to FIG. 17.

FIG. 17 is a diagram for describing an operation in which the wireless power transmission apparatus 2000 displays product type information and location information regarding the plurality of cooking appliances when the locations of the plurality of cooking appliances are exchanged with each other. In FIG. 17, a case in which the plurality of cooking appliances are a plurality of coffee makers is described as an example.

Referring to FIG. 17, a first cooking appliance 1710 may operate on the first cooking zone (right cooking zone), and a second cooking appliance 1720 may operate on the second cooking zone (cooking zone in the lower left corner).

In this case, the wireless power transmission apparatus 2000 may identify a product type (e.g., a coffee maker) of the first cooking appliance 1710 and a location (e.g., the first cooking zone) of the first cooking appliance 1710 through a small appliance detection operation and a cooking zone determination operation, and display a coffee maker icon at a first location corresponding to the first cooking zone (right cooking zone) in the display unit. Also, the wireless power transmission apparatus 2000 may identify a product type (e.g., a coffee maker) of the second cooking appliance 1720 and a location (e.g., the second cooking zone) of the second cooking appliance 1720 through a small appliance detection operation and a cooking zone determination operation, and display a coffee maker icon at a second location corresponding to the second cooking zone (cooking zone in the lower left corner) in the display unit.

In addition, when the first cooking appliance 1710 and the second cooking appliance 1720 perform a specific cooking operation (e.g., a coffee brewing operation), the wireless power transmission apparatus 2000 may display information regarding a cooking progress on the display unit. For example, because the first cooking appliance 1710 is located in the first cooking zone (right cooking zone) and the second cooking appliance 1720 is located in the second cooking zone (cooking zone in the lower left corner), the wireless power transmission apparatus 2000 may output a first GUI screen 1701 displaying a first menu (e.g., light) of the first cooking appliance 1710 and a first progress (e.g., brewing coffee) of the first cooking appliance 1710 at the first location corresponding to the first cooking zone (right cooking zone), and displaying a second menu (e.g., intense) of the second cooking appliance 1720 and a second progress (e.g., brewing coffee) of the second cooking appliance 1720 at the second location corresponding to the second cooking zone (cooking zone in the lower left corner).

The locations of the first cooking appliance 1710 and the second cooking appliance 1720 may be exchanged with each other by a user. For example, the first cooking appliance 1710 may be moved to the second cooking zone (cooking zone in the lower left corner), and the second cooking appliance 1720 may be moved to the first cooking zone (e.g., the right cooking zone). In this case, in response to temporary release of a communication connection with the first cooking appliance 1710 and the second cooking appliance 1720, the wireless power transmission apparatus 2000 may perform a small appliance detection operation and a cooking zone determination operation to re-detect the first cooking appliance 1710 or the second cooking appliance 1720. The wireless power transmission apparatus 2000 may identify, through the small appliance detection operation and the cooking zone determination operation, that the first cooking appliance 1710 is located in the second cooking zone (cooking zone in the lower left corner) and the second cooking appliance 1720 is located in the first cooking zone (right cooking zone). Accordingly, the wireless power transmission apparatus 2000 may display the coffee maker icon at the second location corresponding to the second cooking zone (cooking zone in the lower left corner) and the first location corresponding to the first cooking zone (right cooking zone).

In addition, the wireless power transmission apparatus 2000 may be reconnected to be in communication with the first cooking appliance 1710, and may identify whether an operation history of the first cooking appliance 1710 is present within a preset time (e.g., 3 seconds) based on identification information regarding the first cooking appliance 1710. Because the operation history of the first cooking appliance 1710 is present within the preset time (e.g., 3 seconds), the wireless power transmission apparatus 2000 may output a second GUI screen 1702 asking the user whether to continue the operation of the first cooking appliance 1710.

Also, the wireless power transmission apparatus 2000 may be reconnected to be in communication with the second cooking appliance 1720, and may identify whether an operation history of the second cooking appliance 1720 is present within a preset time (e.g., 3 seconds) based on identification information regarding the second cooking appliance 1720. Because the operation history of the second cooking appliance 1720 is present within the preset time (e.g., 3 seconds), the wireless power transmission apparatus 2000 may output a third GUI screen 1703 asking the user whether to continue the operation of the second cooking appliance 1720.

Moreover, when the user wishes to continue the operations of the first cooking appliance 1710 and the second cooking appliance 1720, the wireless power transmission apparatus 2000 may display information regarding a cooking progress of the first cooking appliance 1710 at the second location corresponding to the second cooking zone (cooking zone in the lower left corner), and display information regarding a cooking progress of the second cooking appliance 1720 at the first location corresponding to the first cooking zone (right cooking zone). For example, the wireless power transmission apparatus 2000 may display a fourth GUI screen 1704 displaying the first menu (e.g., light) of the first cooking appliance 1710 and the first progress (e.g., brewing coffee) of the first cooking appliance 1710 at the second location corresponding to the second cooking zone (cooking zone in the lower left corner), and displaying the second menu (e.g., intense) of the second cooking appliance 1720 and the second progress of the second cooking appliance 1720 at the first location corresponding to the first cooking zone (right cooking zone).

FIG. 18 is a flowchart for describing a method by which the wireless power transmission apparatus 2000 controls power transmission according to a location movement of the cooking appliance 1000, according to an embodiment of the disclosure.

In operation S1801, according to an embodiment of the disclosure, the cooking appliance 1000 may operate on the first cooking zone of the wireless power transmission apparatus 2000. For example, when a user puts the cooking appliance 1000 on the first cooking zone and turns on the power of the wireless power transmission apparatus 2000, the cooking appliance 1000 may operate by receiving power from the wireless power transmission apparatus 2000. When the user selects a cooking menu through the user interface 2500 of the wireless power transmission apparatus 2000, the cooking appliance 1000 may operate according to recipe information corresponding to the selected cooking menu.

In this case, in operation S1802, according to an embodiment of the disclosure, the cooking appliance 1000 may be connected to be in communication with the wireless power transmission apparatus 2000. For example, the cooking appliance 1000 may drive the communication interface 1030 by receiving power from the wireless power transmission apparatus 2000 through the first cooking zone, and may transmit or receive data by establishing a short-range communication channel with the wireless power transmission apparatus 2000.

In operation S1803, according to an embodiment of the disclosure, the cooking appliance 1000 may transmit power control information including a first power level value (hereinafter, referred to as a level value control method). In this case, the first power level value may be determined according to the recipe information corresponding to the cooking menu selected by the user. For example, when the cooking appliance 1000 currently requires power of 1,000 W of based on the recipe information, the cooking appliance 1000 may transmit power control information requesting transmission of power of 1,000 W to the wireless power transmission apparatus 2000 through a short-range wireless communication channel (e.g., a Bluetooth communication channel or a BLE communication channel).

According to an embodiment of the disclosure, the cooking appliance 1000 may also transmit power control information including discrete power level defined in the wireless power transmission apparatus 2000 (hereinafter, referred to as a stage number control method). For example, when the wireless power transmission apparatus 2000 provides power levels from a first stage to a ninth stage, the cooking appliance 1000 may transmit power control information to operate at an output level of an eighth stage to the wireless power transmission apparatus 2000 through the short-range wireless communication channel.

However, in the case of a method of transmitting power control information according to the discrete power level defined in the wireless power transmission apparatus 2000 (the stage number control method), a value between predefined power levels may not be requested as a power transmission value, whereas, in the case of a method of transmitting power control information including any power level value (the level value control method), even a value between predefined power levels may be requested as a power transmission value. For example, when a sixth stage is 800 W and a seventh stage is 900 W, according to the stage number control method, the cooking appliance 1000 may not request transmission of power of 850 W from the wireless power transmission apparatus 2000 and only needs to select one of the sixth stage (800 W) or the seventh stage (900 W). However, according to the level value control method, the cooking appliance 1000 may request transmission of power of 850 W from the wireless power transmission apparatus 2000, such that the power transmission value of the wireless power transmission apparatus 2000 may be more precisely controlled.

In operation S1804, according to an embodiment of the disclosure, the wireless power transmission apparatus 2000 may transmit power corresponding to the first power level value through the first cooking zone, based on the power control information received from the cooking appliance 1000. For example, when the power control information requesting transmission of power of 1,000 W is received from the cooking appliance 1000, the wireless power transmission apparatus 2000 may control the inverter circuit 2113 to transmit power of 1,000 W through the first cooking zone in which the cooking appliance 1000 is placed.

In operation S1805, the user may move the cooking appliance 1000 from the first cooking zone to the second cooking zone. In this case, when the cooking appliance 1000 is picked up from the first cooking zone, the pickup coil 1001 of the cooking appliance 1000 is no longer able to receive power wirelessly transmitted through the first cooking zone. Accordingly, because the cooking appliance 1000 is no longer able to drive the communication interface 1030, the communication connection with the wireless power transmission apparatus 2000 may be cut off.

In operation S1806, the wireless power transmission apparatus 2000 may detect that the communication connection with the cooking appliance 1000 is released. In operation S1807, in response to release of the communication connection with the cooking appliance 1000 that has been located in the first cooking zone, the wireless power transmission apparatus 2000 may transmit power for driving the communication interface 1030 of the cooking appliance 1000. When the communication connection with the cooking appliance 1000 is released, the wireless power transmission apparatus 2000 may operate in a small appliance detection mode to re-detect the cooking appliance 1000. According to an embodiment of the disclosure, when the communication connection with the cooking appliance 1000 is released, the wireless power transmission apparatus 2000 may first operate in an IH container detection mode, and then operate in the small appliance detection mode. According to an embodiment of the disclosure, when the wireless power transmission apparatus 2000 operates in the small appliance detection mode, the wireless power transmission apparatus 2000 may transmit, to the cooking appliance 1000, preset first level of power (e.g., about 100 W to about 300 W) for driving the communication interface 1030 of the cooking appliance 1000. Because operations S1806 and S1807 correspond to operation S510 of FIG. 5, a detailed description thereof is not provided.

In operation S1808, the cooking appliance 1000 may activate the communication interface 1030 and transmit a first wireless communication signal. That is, when the communication interface 1030 of the cooking appliance 1000 is driven by the power transmitted from the wireless power transmission apparatus 2000, the cooking appliance 1000 may transmit the first wireless communication signal. For example, the cooking appliance 1000 may advertise the first wireless communication signal including a first packet at regular intervals by using short-range wireless communication (e.g., Bluetooth or BLE). In this case, the wireless power transmission apparatus 2000 may receive the first wireless communication signal transmitted from the communication interface 1030 of the cooking appliance 1000. The first wireless communication signal may include identification information regarding the cooking appliance 1000. Also, the first wireless communication signal may include, in the form of a UUID, information (e.g., code "0") indicating that the current location of the cooking appliance 1000 may not be identified.

In operation S1809, according to an embodiment of the disclosure, when the first wireless communication signal including the identification information regarding the cooking appliance 1000 is received, the wireless power transmission apparatus 2000 may transmit power from the plurality of cooking zones according to the plurality of different power transmission patterns. For example, when the first wireless communication signal is detected within a preset time (e.g., within 20 seconds) after the communication connection is released, the wireless power transmission apparatus 2000 may control the inverter circuit 2113 to drive the plurality of working coils 2120 to generate a magnetic field corresponding to the plurality of cooking zones according to the plurality of different power transmission patterns.

According to an embodiment of the disclosure, because the wireless power transmission apparatus 2000 may not accurately identify, only with the first wireless communication signal, on which cooking zone the cooking appliance 1000 is located, in order to identify the location of the cooking appliance 1000, the wireless power transmission apparatus 2000 may control the inverter circuit 2113 to output power according to different power transmission patterns according to respective cooking zones.

Because operation S1809 corresponds to operation S520 of FIG. 5, a detailed description thereof is not provided.

In operation S1810, the cooking appliance 1000 may detect a power transmission pattern corresponding to the second cooking zone. For example, the cooking appliance 1000 may detect one of the plurality of power transmission patterns by analyzing a voltage output from the rectifier. The cooking appliance 1000 may detect a second power transmission pattern in which a duration of a power transmission interval T1 is 200 ms and a duration of a power cut-off interval T2 is 100 ms. In addition, the cooking appliance 1000 may determine that the cooking appliance 1000 is located in the second cooking zone, by identifying that a cooking zone that outputs the second power transmission pattern is the second cooking zone, based on pre-stored information regarding the plurality of power transmission patterns of the wireless power transmission apparatus 2000.

In operation S1811, according to an embodiment of the disclosure, when the cooking appliance 1000 determines that the cooking appliance 1000 is located in the second cooking zone, based on the detected power transmission pattern, the cooking appliance 1000 may transmit a second wireless communication signal including information regarding the second cooking zone and the identification information regarding the cooking appliance 1000. For example, the cooking appliance 1000 may advertise a second packet including the information regarding the second cooking zone by using short-range wireless communication.

In operation S1812, according to an embodiment of the disclosure, the wireless power transmission apparatus 2000 may be reconnected to be in communication with the cooking appliance 1000 after the second wireless communication signal is received. According to an embodiment of the disclosure, the second packet included in the second wireless communication signal may further include communication connection information. When the cooking appliance 1000 has been previously paired with the wireless power transmission apparatus 2000, the communication connection information may include pairing information (e.g., an authentication key). "Pairing" may refer to, e.g., a procedure for verifying a password, identification information, security information, or authentication information designated for intercommunication connection between the cooking appliance 1000 and the wireless power transmission apparatus 2000, which support a Bluetooth function. Therefore, according to an embodiment of the disclosure, the wireless power transmission apparatus 2000 may re-establish a short-range wireless communication channel with the cooking appliance 1000 after the second wireless communication signal is received. In addition, the wireless power transmission apparatus 2000 may transmit or receive data to or from the cooking appliance 1000 again through the short-range wireless communication channel.

In operation S1813, in response to a communication reconnection with the wireless power transmission apparatus 2000, the cooking appliance 1000 may transmit, to the wireless power transmission apparatus 2000, the power control information including the first power level value. In this case, the first power level value may be a power level value when a communication connection between the wireless power transmission apparatus 2000 and the cooking appliance 1000 is released.

According to an embodiment of the disclosure, when the wireless power transmission apparatus 2000 is reconnected to be in communication with the cooking appliance 1000, the wireless power transmission apparatus 2000 may determine whether an operation history of the cooking appliance 1000 is present within a preset time before the second wireless communication signal is received. When the operation history of the cooking appliance 1000 is present, the wireless power transmission apparatus 2000 may output a notification asking the user whether to continue a previous operation. When the user chooses to continue the previous operation, the wireless power transmission apparatus 2000 may request the cooking appliance 1000 to continue the operation and may receive, from the cooking appliance 1000, the power control information including the first power level value when the communication connection is released. For example, when the wireless power transmission apparatus 2000 has received, from the cooking appliance 1000 located in the first cooking zone, the power control information requesting transmission of power of 1,000 W, the wireless power transmission apparatus 2000 may continue receiving, from the cooking appliance 1000 moved to the second cooking zone, the power control information requesting transmission of power of 1,000 W.

According to an embodiment of the disclosure, the power control information may further include duration information for the first power level value. For example, the cooking appliance 1000 may transmit power control information requesting transmission of power of 1,000 W to the wireless power transmission apparatus 2000 for 5 minutes, in consideration of a progress time of a current cooking stage according to the recipe information.

In operation S1814, the wireless power transmission apparatus 2000 may transmit, based on the power control information, power corresponding to the first power level value to the cooking appliance 1000 through the second cooking zone. The cooking appliance 1000 may continue, on the second cooking zone, an operation (e.g., an operation in the first cooking zone) before the location movement, based on the power received from the wireless power transmission apparatus 2000.

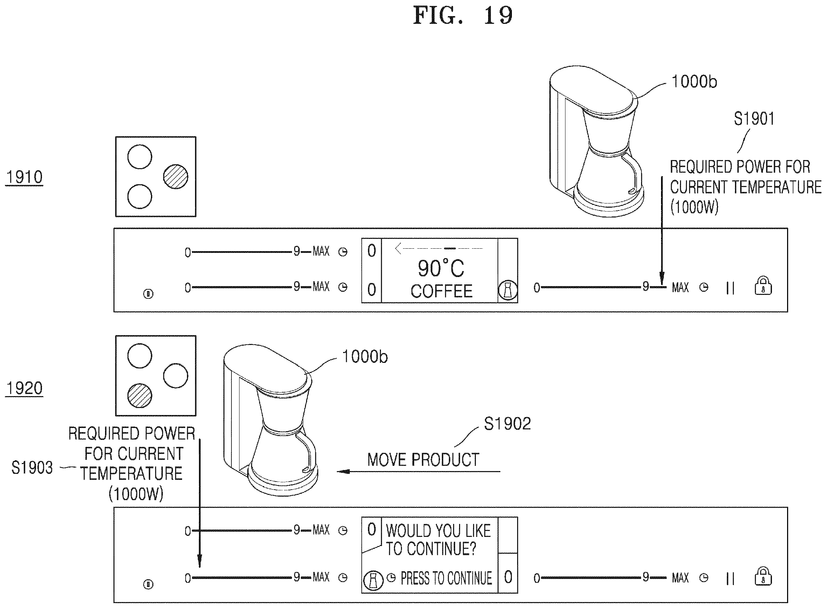

Hereinafter, an operation in which the wireless power transmission apparatus 2000 adaptively transmits power according to the location movement of the cooking appliance 1000 is described in a little more detail with reference to FIG. 19.

FIG. 19 is a diagram for describing an operation in which the wireless power transmission apparatus 2000 transmits power corresponding to a previous power level value to the second type of cooking appliance 1000b in response to a communication reconnection with the second type of cooking appliance 1000b. In FIG. 19, a case in which the second type of cooking appliance 1000b is a coffee maker is described as an example.

Referring to 1910 of FIG. 19, the second type of cooking appliance 1000b may be placed and operate in a right cooking zone of the wireless power transmission apparatus 2000. In this case, the wireless power transmission apparatus 2000 may identify a product type (e.g., the coffee maker) of the second type of cooking appliance 1000b and a location (right cooking zone) of the second type of cooking appliance 1000b, and display a coffee maker icon at a location corresponding to the right cooking zone in the display unit.

In addition, the second type of cooking appliance 1000b may establish a short-range wireless communication channel (e.g., Bluetooth or BLE) with the wireless power transmission apparatus 2000, and transmit power control information to the wireless power transmission apparatus 2000 through the short-range wireless communication channel (S1901). For example, in order to set a coffee brewing temperature to 90 °C according to recipe information selected by a user, the second type of cooking appliance 1000b may transmit, to the wireless power transmission apparatus 2000, a command to transmit power of 1,000 W. The wireless power transmission apparatus 2000 may control the inverter circuit 2113 to transmit power of 1,000 W through the right cooking zone according to the command received from the second type of cooking appliance 1000b. The second type of cooking appliance 1000b may heat contents (e.g., water for coffee) by receiving power from the wireless power transmission apparatus 2000.

Referring to 1920 of FIG. 19, the second type of cooking appliance 1000b may be moved to a cooking zone in the lower left corner by the user while heating the contents (S1902). In this case, in response to temporary release of a communication connection with the second type of cooking appliance 1000b, the wireless power transmission apparatus 2000 may perform a small appliance detection operation and a cooking zone determination operation to re-detect the second type of cooking appliance 1000b. The wireless power transmission apparatus 2000 may identify that the second type of cooking appliance 1000b is located in the cooking zone in the lower left corner through the small appliance detection operation and the cooking zone determination operation, and display the coffee maker icon at a location corresponding to the cooking zone in the lower left corner instead of the location corresponding to the right cooking zone. In addition, the wireless power transmission apparatus 2000 may be reconnected to be in communication with the second type of cooking appliance 1000b, and identify whether an operation history of the second type of cooking appliance 1 000b is present within a preset time (e.g., 5 seconds) based on identification information (e.g., a MAC address or a device ID) regarding the second type of cooking appliance 1000b. Because the operation history of the second type of cooking appliance 1000b is present within the preset time (e.g., 5 seconds), the wireless power transmission apparatus 2000 may ask the user whether to continue the operation of the second type of cooking appliance 1000b. When the user wishes to continue the operation of the second type of cooking appliance 1000b, the wireless power transmission apparatus 2000 may operate by receiving, from the second type of cooking appliance 1000b, power control information including a power level value corresponding to a suspended cooking stage (e.g., heating the water for coffee to 90 °C). For example, because the second type of cooking appliance 1000b has required power of 1,000 W to heat the water for coffee to 90 °C when operating in the right cooking zone, when a temperature of the water for coffee does not reach 90 °C even after the second type of cooking appliance 1000b is moved to the cooking zone in the lower left corner, the second type of cooking appliance 1000b may transmit, to the wireless power transmission apparatus 2000, power control information requiring power of 1,000 W. The wireless power transmission apparatus 2000 may control the inverter circuit 2113 to transmit power of 1,000 W through the cooking zone in the lower left corner according to the power control information received from the second type of cooking appliance 1000b. The second type of cooking appliance 1000b may heat the water for coffee to 90 °C by receiving power from the wireless power transmission apparatus 2000.

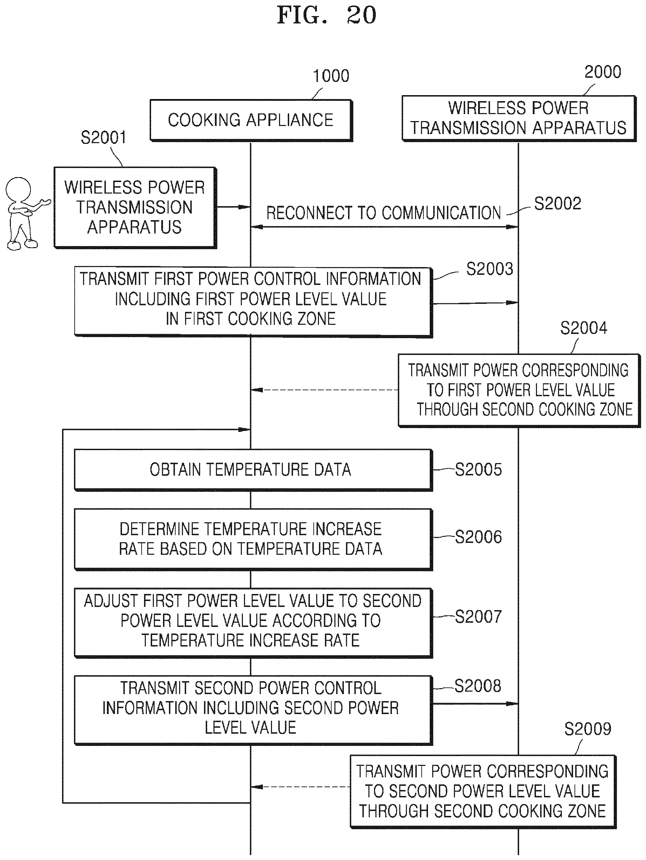

Accordingly, according to an embodiment of the disclosure, even though the user changes a cooking zone while cooking, the wireless power transmission apparatus 2000 may automatically identify a changed cooking zone and transmit power to allow the second type of cooking appliance 1000b to continue the cooking operation through the changed cooking zone, and thus, user convenience may be enhanced. In addition, according to an embodiment of the disclosure, because transmission efficiency may be different between the cooking zones of the wireless power transmission apparatus 2000, the second type of cooking appliance 1000b needs to adjust a power level value when continuing the cooking operation after the cooking zone is changed. Hereinafter, an operation in which the second type of cooking appliance 1000b adjusts a power transmission value of the wireless power transmission apparatus 2000 according to a temperature increase rate of the second type of cooking appliance 1000b is described in detail with reference to FIG. 20.

FIG. 20 is a flowchart for describing a method by which the wireless power transmission apparatus 2000 transmits power according to a power level adjusted based on a temperature increase rate of the cooking appliance 1000, according to an embodiment of the disclosure.

In operation S2001, a user may move the cooking appliance 1000 from the first cooking zone to the second cooking zone. In this case, when the cooking appliance 1000 is picked up from the first cooking zone, the pickup coil 1001 of the cooking appliance 1000 is no longer able to receive power wirelessly transmitted through the first cooking zone. Accordingly, because the cooking appliance 1000 is no longer able to drive the communication interface 1030, a communication connection with the wireless power transmission apparatus 2000 may be cut off.

In operation S2002, the wireless power transmission apparatus 2000 may be reconnected to be in communication with the cooking appliance 1000 located in the second cooking zone. According to an embodiment of the disclosure, the wireless power transmission apparatus 2000 may be reconnected to be in communication with the cooking appliance 1000 through operations S1806 to S1812 of FIG. 18. For example, in response to release of the communication connection with the cooking appliance 1000 that has been located in the first cooking zone, the wireless power transmission apparatus 2000 may output low power for driving the communication interface 1030 of the cooking appliance 1000. When the cooking appliance 1000 is placed in the second cooking zone, the cooking appliance 1000 may re-drive the communication interface 1030 and transmit a first wireless communication signal including identification information regarding the cooking appliance 1000, by receiving the low power from the wireless power transmission apparatus 2000 through the second cooking zone. The first wireless communication signal may include information indicating that a current location of the cooking appliance 1000 may not be identified. When the first wireless communication signal is received from the cooking appliance 1000, the wireless power transmission apparatus 2000 may output power from the plurality of cooking zones according to the plurality of different power transmission patterns. In this case, the cooking appliance 1000 may detect a power transmission pattern corresponding to the second cooking zone. When the cooking appliance 1000 determines, based on the detected power transmission pattern, that the cooking appliance 1000 is located in the second cooking zone, the cooking appliance 1000 may transmit a second wireless communication signal including information regarding the second cooking zone and the identification information regarding the cooking appliance 1000. After the second wireless communication signal is received, the wireless power transmission apparatus 2000 may be reconnected to be in communication with the cooking appliance 1000 located in the second cooking zone. That is, the wireless power transmission apparatus 2000 may re-establish a short-range wireless communication channel with the cooking appliance 1000.

In operation S2003, in response to a communication reconnection with the wireless power transmission apparatus 2000, the cooking appliance 1000 may transmit first power control information including a first power level value to the wireless power transmission apparatus 2000 through the short-range wireless communication channel. In this case, the first power level value may be a power level value when a communication connection between the wireless power transmission apparatus 2000 and the cooking appliance 1000 is released. That is, the first power level value may be a power level value requested by the cooking appliance 1000 from the wireless power transmission apparatus 2000 when operating in the first cooking zone.

According to an embodiment of the disclosure, the wireless power transmission apparatus 2000 may determine whether an operation history of the cooking appliance 1000 is present within a preset time before the second wireless communication signal is received from the cooking appliance 1000. When the operation history of the cooking appliance 1000 is present, the wireless power transmission apparatus 2000 may output a notification asking the user whether to continue a previous operation. When the user chooses to continue the previous operation, the wireless power transmission apparatus 2000 may request the cooking appliance 1000 to continue the operation and may receive, from the cooking appliance 1000, the first power control information including the first power level value when the communication connection is released. For example, when the wireless power transmission apparatus 2000 has received, from the cooking appliance 1000 located in the first cooking zone, first power control information requesting transmission of power of 1,000 W, the wireless power transmission apparatus 2000 may receive, from the cooking appliance 1000 moved to the second cooking zone, the first power control information requesting transmission of power of 1,000 W.

According to an embodiment of the disclosure, the first power control information may further include duration information for the first power level value. For example, the cooking appliance 1000 may transmit first power control information requesting transmission of power of 1,000 W to the wireless power transmission apparatus 2000 for 5 minutes, in consideration of a progress time of a current cooking stage according to recipe information.

In operation S2004, the wireless power transmission apparatus 2000 may transmit, based on the first power control information, power corresponding to the first power level value to the cooking appliance 1000 through the second cooking zone. The cooking appliance 1000 may continue, on the second cooking zone, an operation (e.g., an operation in the first cooking zone) before the location movement, based on the power received from the wireless power transmission apparatus 2000. For example, when the wireless power transmission apparatus 2000 receives, from the cooking appliance 1000, the first power control information requesting transmission of power of 1,000 W, the wireless power transmission apparatus 2000 may control the inverter circuit 2113 to transmit power of 1,000 W through the second cooking zone, and the cooking appliance 1000 may continue an operation of heating contents or driving the motor by using power of 1,000 W transmitted through the second cooking zone of the wireless power transmission apparatus 2000.

In operation S2005, the cooking appliance 1000 may obtain temperature data about the contents. For example, when the cooking appliance 1000 continues the operation of heating the contents even in the second cooking zone, the cooking appliance 1000 may monitor a temperature of the contents by using the temperature sensor.

In operation S2006, the cooking appliance 1000 may determine a temperature increase rate based on the temperature data. For example, when the cooking appliance 1000 performs the operation of heating the contents, the cooking appliance 1000 may determine a temperature increase rate for a preset time (e.g., a unit time).

According to an embodiment of the disclosure, the cooking appliance 1000 may compare the determined temperature increase rate with a reference temperature increase rate. The reference temperature increase rate may be a temperature increase rate when the cooking appliance 1000 heats contents in the first cooking zone or a temperature increase rate defined in recipe information.

According to an embodiment of the disclosure, the first cooking zone and the second cooking zone of the wireless power transmission apparatus 2000 may have different power transmission efficiencies. For example, when a size of a working coil of the first cooking zone is greater than a size of a working coil of the second cooking zone, power transmission efficiency of the first cooking zone may be higher than power transmission efficiency of the second cooking zone. Accordingly, when the cooking appliance 1000 placed in the first cooking zone is moved to the second cooking zone, even though the wireless power transmission apparatus 2000 transmits the same level of power, a temperature increase rate when the cooking appliance 1000 is placed in the second cooking zone may be lower than a temperature increase rate when the cooking appliance 1000 is placed in the first cooking zone.

Also, according to an embodiment of the disclosure, a first overlapping area between the cooking appliance 1000 and the first cooking zone is greater than a second overlapping area between the cooking appliance 1000 and the second cooking zone, even though the wireless power transmission apparatus 2000 transmits the same level of power, the temperature increase rate when the cooking appliance 1000 is placed in the first cooking zone may be higher than the temperature increase rate when the cooking appliance 1000 is placed in the second cooking zone. For example, when the cooking appliance 1000 is located at the center of the first cooking zone, and then moved to the second cooking zone and biased toward one side of the second cooking zone, the temperature increase rate in the second cooking zone may be lower than the temperature increase rate in the first cooking zone.

In operation S2007, the cooking appliance 1000 may adjust the first power level value to a second power level value according to the temperature increase rate of the cooking appliance 1000.

According to an embodiment of the disclosure, when a difference between the determined temperature increase rate and the reference temperature increase rate is greater than a threshold value, the cooking appliance 1000 may adjust a power level value of the wireless power transmission apparatus 2000 from the first power level value to the second power level value. For example, when the temperature increase rate of the contents is higher than the reference temperature increase rate, the cooking appliance 1000 may adjust the power level value of the wireless power transmission apparatus 2000 to the second power level value that is less than the first power level value. In contrast, when the temperature increase rate of the contents is lower than the reference temperature increase rate, the cooking appliance 1000 may adjust the power level value of the wireless power transmission apparatus 2000 to the second power level value that is greater than the first power level value.

In operation S2008, the cooking appliance 1000 may transmit, to the wireless power transmission apparatus 2000, second power control information including the second power level value. For example, the cooking appliance 1000 may transmit the second power control information to the wireless power transmission apparatus 2000 through the short-range wireless communication channel. The second power control information may further include duration information for the second power level value. The second power level value may be greater than or less than the first power level value.

In operation S2009, the wireless power transmission apparatus 2000 may transmit power corresponding to the second power level value to the cooking appliance 1000 through the second cooking zone.

The cooking appliance 1000 may continue, on the second cooking zone, the operation (e.g., the operation in the first cooking zone) before the location movement, based on the power received from the wireless power transmission apparatus 2000. For example, when the wireless power transmission apparatus 2000 receives, from the cooking appliance 1000, second power control information requesting transmission of power of 1,100 W, the wireless power transmission apparatus 2000 may control the inverter circuit 2113 to transmit power of 1,100 W through the second cooking zone. The cooking appliance 1000 may continue the operation of heating the contents by using the power transmitted through the second cooking zone of the wireless power transmission apparatus 2000.

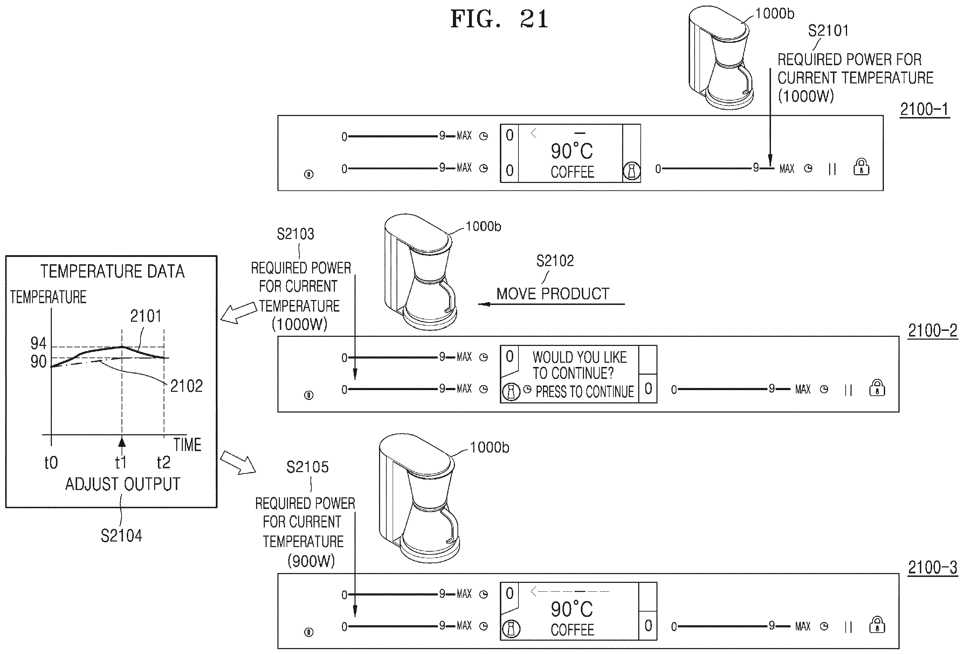

According to an embodiment of the disclosure, the cooking appliance 1000 may return to operation S2005, obtain the temperature data about the contents, determine the temperature increase rate of the contents, and adjust the second power level value based on the temperature increase rate of the contents. Accordingly, according to an embodiment of the disclosure, the cooking appliance 1000 may adaptively adjust the power level value of the wireless power transmission apparatus 2000 based on the temperature increase rate of the contents. An operation in which the cooking appliance 1000 adjusts the power level value of the wireless power transmission apparatus 2000 is now described in a little more detail with reference to FIG. 21.

FIG. 21 is a diagram for describing an operation in which the wireless power transmission apparatus 2000 transmits power according to a power level adjusted based on a temperature increase rate of the second type of cooking appliance 1000b, according to an embodiment of the disclosure. In FIG. 21, a case in which the second type of cooking appliance 1000b is a coffee maker is described as an example.

Referring to 2100-1 of FIG. 21, the second type of cooking appliance 1000b may be placed and operate in a right cooking zone of the wireless power transmission apparatus 2000. In this case, the wireless power transmission apparatus 2000 may identify a product type (e.g., the coffee maker) of the second type of cooking appliance 1000b and a location (right cooking zone) of the second type of cooking appliance 1000b, and display a coffee maker icon at a location corresponding to the right cooking zone in the display unit.

In addition, the second type of cooking appliance 1000b may establish a short-range wireless communication channel (e.g., Bluetooth or BLE) with the wireless power transmission apparatus 2000, and transmit power control information to the wireless power transmission apparatus 2000 through the short-range wireless communication channel (S2101). For example, in order to set a coffee brewing temperature to 90 °C according to recipe information selected by a user, the second type of cooking appliance 1000b may transmit, to the wireless power transmission apparatus 2000, a command to transmit power of 1,000 W. The wireless power transmission apparatus 2000 may control the inverter circuit 2113 to transmit power of 1,000 W through the right cooking zone according to the command received from the second type of cooking appliance 1000b. The second type of cooking appliance 1000b may heat contents (e.g., water for coffee) by receiving power from the wireless power transmission apparatus 2000.

Referring to 2100-2 of FIG. 21, the second type of cooking appliance 1000b may be moved to a cooking zone in the lower left corner by the user while heating the contents (S2102). In this case, in response to temporary release of a communication connection with the second type of cooking appliance 1000b, the wireless power transmission apparatus 2000 may perform a small appliance detection operation and a cooking zone determination operation to re-detect the second type of cooking appliance 1000b. The wireless power transmission apparatus 2000 may identify that the second type of cooking appliance 1000b is located in the cooking zone in the lower left corner through the small appliance detection operation and the cooking zone determination operation, and display the coffee maker icon at a location corresponding to the cooking zone in the lower left corner instead of the location corresponding to the right cooking zone. In addition, the wireless power transmission apparatus 2000 may be reconnected to be in communication with the second type of cooking appliance 1000b, and identify whether an operation history of the second type of cooking appliance 1000b is present within a preset time (e.g., 3 seconds) based on identification information (e.g., a MAC address or a device ID) regarding the second type of cooking appliance 1000b. Because the operation history of the second type of cooking appliance 1000b is present within the preset time (e.g., 3 seconds), the wireless power transmission apparatus 2000 may ask the user whether to continue the operation of the second type of cooking appliance 1000b. When the user wishes to continue the operation of the second type of cooking appliance 1000b, the wireless power transmission apparatus 2000 may operate by receiving, from the second type of cooking appliance 1000b, power control information including a power level value corresponding to a suspended cooking stage (e.g., heating the water for coffee to 90 °C). For example, because the second type of cooking appliance 1000b has required power of 1,000 W to heat the water for coffee to 90 °C when operating in the right cooking zone, when a temperature of the water for coffee does not reach 90 °C even after the second type of cooking appliance 1000b is moved to the cooking zone in the lower left corner, the second type of cooking appliance 1000b may transmit, to the wireless power transmission apparatus 2000, power control information requiring power of 1,000 W. The wireless power transmission apparatus 2000 may control the inverter circuit 2113 to transmit power of 1,000 W through the cooking zone in the lower left corner according to the power control information received from the second type of cooking appliance 1000b.

The second type of cooking appliance 1000b may heat the water for coffee to 90 °C by receiving power from the wireless power transmission apparatus 2000. In this case, according to an embodiment of the disclosure, the second type of cooking appliance 1000b may measure temperature data about the contents and determine a temperature increase rate based on the temperature data about the contents. For example, the second type of cooking appliance 1000b may obtain a first temperature curve graph 2101 in which a temperature of water for coffee rapidly increases to 94 °C.

The second type of cooking appliance 1000b may compare the first temperature curve graph 2101 with a reference temperature curve graph 2102. The reference temperature curve graph 2102 may be a graph of a temperature increase rate according to recipe information (or a graph predicting a temperature increase rate of contents when power of 1,000 W is supplied in a right cooking zone). As a result of comparing the first temperature curve graph 2101 with the reference temperature curve graph 2102, the second type of cooking appliance 1000b may determine that the temperature increase rate of the contents is higher than the reference temperature increase rate.

That is, when the second type of cooking appliance 1000b is located in the right cooking zone, the second type of cooking appliance 1000b has requested power of 1,000 W from the wireless power transmission apparatus 2000 so that the temperature increase rate of the contents converges to the reference temperature increase rate. However, power transmission efficiency of the cooking zone in the lower left corner may be higher than power transmission efficiency of the right cooking zone. In this case, when the second type of cooking appliance 1000b receives power of 1,000 W as in the right cooking zone, the temperature of the contents may increase more rapidly in the cooking zone in the lower left corner.

Accordingly, referring to 2100-3 of FIG. 21, the second type of cooking appliance 1000b may adjust the power level value of the wireless power transmission apparatus 2000, in consideration of the temperature increase rate (S2104). For example, the second type of cooking appliance 1000b may lower the power transmission value of the wireless power transmission apparatus 2000 from 1,000 W to 900 W. In addition, the second type of cooking appliance 1000b may transmit, to the wireless power transmission apparatus 2000, power control information requiring power of 900 W (S2105). The wireless power transmission apparatus 2000 may control the inverter circuit 2113 to transmit power of 900 W through the cooking zone in the lower left corner according to the power control information received from the second type of cooking appliance 1000b.

When the power received by the second type of cooking appliance 1000b from the wireless power transmission apparatus 2000 is reduced, the temperature of the contents of the second type of cooking appliance 1000b may decrease from 94 °C to 90 °C.

In addition, in FIG. 21, a case in which the power level value of the wireless power transmission apparatus 2000 is adjusted to be smaller has been described as an example, but the disclosure is not limited thereto. For example, when the power transmission efficiency of the cooking zone in the lower left corner is lower than the power transmission efficiency of the right cooking zone, the temperature increase rate of the contents may be lower than the reference temperature increase rate. In this case, the second type of cooking appliance 1000b may adjust the power level value of the wireless power transmission apparatus 2000 to be greater, such that the temperature increase rate of the contents may be close to the reference temperature increase rate.

Accordingly, according to an embodiment of the disclosure, because the transmission efficiency may be different between the cooking zones of the wireless power transmission apparatus 2000, the second type of cooking appliance 1000b may adaptively adjust the power level value when continuing the cooking operation after the cooking zone being used is changed.

In addition, according to an embodiment of the disclosure, the wireless power transmission apparatus 2000 may identify the location of the cooking appliance 1000 by using an NFC function instead of the power transmission pattern. For example, the communication coil 1002 and an NFC module (NFC chip) are provided in each of the wireless power transmission apparatus 2000 and the cooking appliance 1000. The communication coil 1002 may be an NFC antenna coil, and the NFC module may include a circuit for NFC communication. Moreover, when the wireless power transmission apparatus 2000 includes a plurality of cooking zones, the NFC antenna coil may be arranged in each of the plurality of cooking zones.

According to an embodiment of the disclosure, the NFC antenna coil included in the wireless power transmission apparatus 2000 and the NFC antenna coil included in the cooking appliance 1000 may be arranged at locations corresponding to each other. For example, when the NFC antenna coil included in the wireless power transmission apparatus 2000 is arranged at the center of each cooking zone, the NFC antenna coil included in the cooking appliance 1000 may be arranged at the bottom center of the cooking appliance 1000. Also, when the NFC antenna coil included in the wireless power transmission apparatus 2000 is arranged on the edge (e.g., outside the transmission coil), the NFC antenna coil of the cooking appliance 1000 may be arranged at the bottom center of the cooking appliance 1000.

According to an embodiment of the disclosure, the NFC antenna coil included in the wireless power transmission apparatus 2000 may be arranged on the edge of each cooking zone, and the NFC antenna coil included in the cooking appliance 1000 may be arranged at the bottom center of the cooking appliance 1000. In contrast, the NFC antenna coil included in the wireless power transmission apparatus 2000 is arranged at the center of each cooking zone, and the NFC antenna coil included in the cooking appliance 1000 may also be arranged on the bottom edge of the cooking appliance 1000.

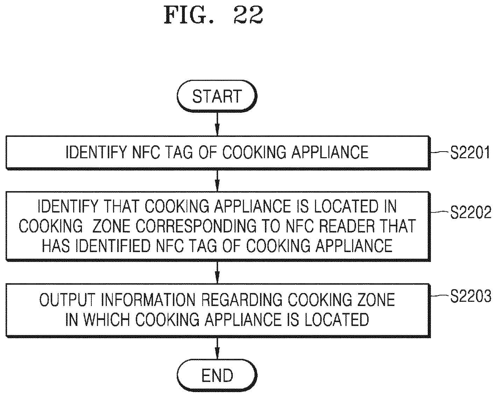

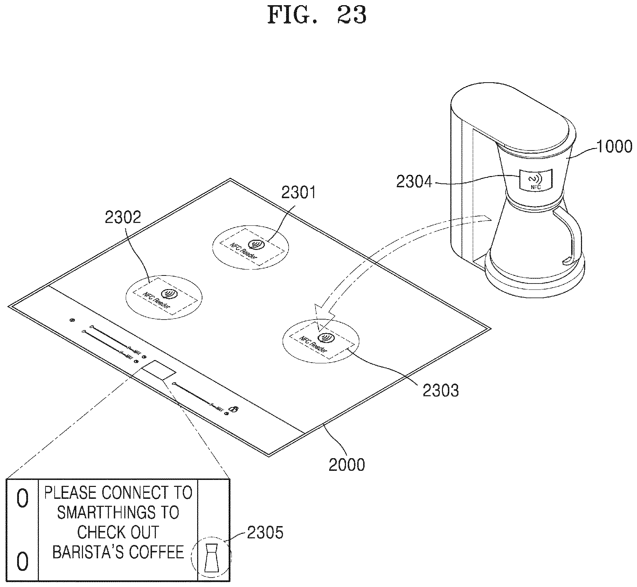

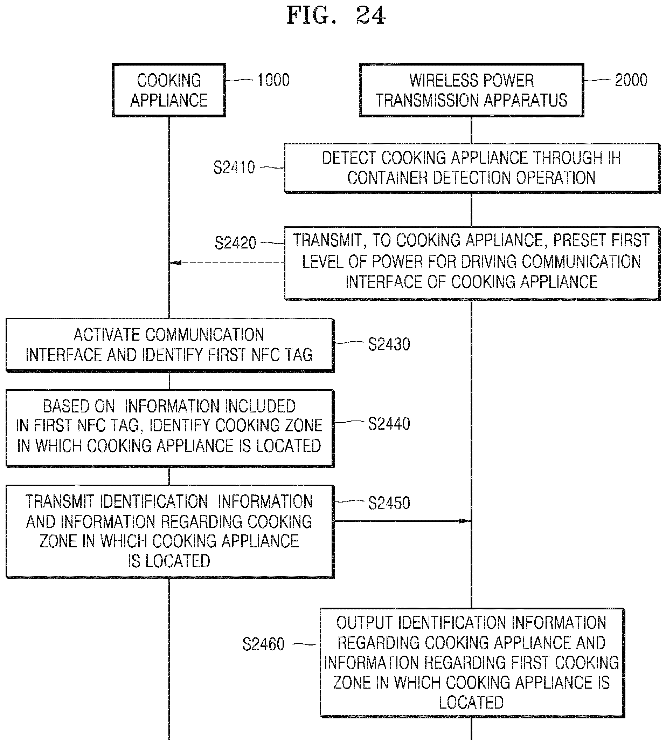

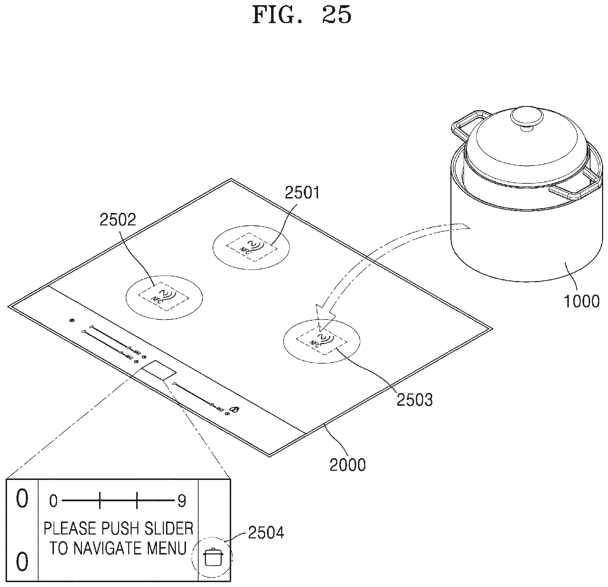

In addition, the NFC module included in each of the wireless power transmission apparatus 2000 and the cooking appliance 1000 may operate as an NFC tag or as an NFC reader depending on circumstances. An embodiment in which the NFC module of the wireless power transmission apparatus 2000 operates as an NFC reader and the NFC module of the cooking appliance 1000 operates as an NFC tag is first described with reference to FIGS. 22 and 23. An embodiment in which the NFC module of the wireless power transmission apparatus 2000 operates as an NFC tag and the NFC module of the cooking appliance 1000 operates as an NFC reader will be described below in detail with reference to FIGS. 24 and 25.

FIG. 22 is a flowchart for describing a method by which the wireless power transmission apparatus 2000 identifies a location of the cooking appliance 1000 by using an NFC tag included in the cooking appliance 1000, according to an embodiment of the disclosure.

In operation S2201, the wireless power transmission apparatus 2000 may identify an NFC tag of the cooking appliance 1000. When the wireless power transmission apparatus 2000 includes a plurality of cooking zones, an NFC reader may be provided in each cooking zone. Each of the NFC reader and the NFC tag may include an NFC antenna coil. According to an embodiment of the disclosure, when the cooking appliance 1000 is placed in any one cooking zone, one of a plurality of NFC readers respectively corresponding to the plurality of cooking zones may identify the NFC tag of the cooking appliance 1000. For example, when the cooking appliance 1000 is placed in the first cooking zone, a first NFC reader provided in the first cooking zone may identify the NFC tag of the cooking appliance 1000. That is, when the cooking appliance 1000 is placed in the first cooking zone, a distance between an NFC antenna coil included in the first cooking zone and an NFC antenna coil of the cooking appliance 1000 is within a preset distance (e.g., 10 cm), and accordingly, a first NFC reader of the wireless power transmission apparatus 2000 may identify the NFC tag of the cooking appliance 1000.

Identifying the NFC tag may include receiving information stored in the NFC tag. For example, the wireless power transmission apparatus 2000 may obtain information stored in the NFC tag of the cooking appliance 1000 by identifying the NFC tag of the cooking appliance 1000. According to an embodiment of the disclosure, the NFC tag of the cooking appliance 1000 may store pre-agreed simple information such that the wireless power transmission apparatus 2000 may identify the cooking appliance 1000. For example, the NFC tag of the cooking appliance 1000 may include identification information indicating the type of the cooking appliance 1000.

In operation S2202, the wireless power transmission apparatus 2000 may identify the cooking appliance 1000 as being located in a cooking zone corresponding to the NFC reader that has identified the NFC tag of the cooking appliance 1000. NFC is a contactless wireless communication technique that may exchange data within a short distance of about 10 cm by using a frequency of a 13.56 MHz band. Accordingly, when the first NFC reader among the plurality of NFC readers identifies the NFC tag of the cooking appliance 1000, the wireless power transmission apparatus 2000 may determine that the cooking appliance 1000 is located in the vicinity of the first NFC reader (i.e., on the first cooking zone in which the first NFC reader is provided).

In operation S2203, the wireless power transmission apparatus 2000 may output information regarding the cooking zone in which the cooking appliance 1000 is located. Also, the wireless power transmission apparatus 2000 may also output identification information regarding the cooking appliance 1000, which is obtained from the NFC tag of the cooking appliance 1000. For example, the wireless power transmission apparatus 2000 may indicate that the cooking appliance 1000 is located in the first cooking zone, by displaying the identification information (e.g., an icon) of the cooking appliance 1000 at an area displaying a power level of the first cooking zone in the GUI. Because operation S2203 corresponds to operation S540 of FIG. 5, a detailed description thereof is not provided herein.

An operation in which the wireless power transmission apparatus 2000 identifies the location of the cooking appliance 1000 by using an NFC tag included in the cooking appliance 1000 is now described in a little more detail with reference to FIG. 23.

FIG. 23 is a diagram for describing an operation in which the wireless power transmission apparatus 2000 identifies a location of the cooking appliance 1000 by using an NFC tag included in the cooking appliance 1000, according to an embodiment of the disclosure. In FIG. 23, a case in which the cooking appliance 1000 is a coffee maker is described as an example.

Referring to FIG. 23, the wireless power transmission apparatus 2000 may include a first NFC reader 2301 in a first cooking zone in the upper left corner, a second NFC reader 2302 in a second cooking zone in the lower left corner, and a third NFC reader 2303 in a third cooking zone at the right center. The first NFC reader 2301, the second NFC reader 2302, and the third NFC reader 2303 may be arranged under the top plate (tempered glass) of the wireless power transmission apparatus 2000 or may be arranged on the top plate of the wireless power transmission apparatus 2000. Also, the first NFC reader 2301, the second NFC reader 2302, and the third NFC reader 2303 may be arranged at the center of each cooking zone or may be arranged on the edge of each cooking zone. Each of the first NFC reader 2301, the second NFC reader 2302, and the third NFC reader 2303 may include an NFC antenna coil.

When a user puts the cooking appliance 1000 on the third cooking zone at the right center and presses a power button, the third NFC reader 2303 of the wireless power transmission apparatus 2000 may identify an NFC tag 2304 of the cooking appliance 1000 and transmit a result of the identification to the processor 2200. For example, the third NFC reader 2303 is located within a preset distance (e.g., 10 cm) from the NFC tag 2304, the third NFC reader 2303 may obtain identification information (e.g., information regarding a product type (coffee maker)) regarding the cooking appliance 1000, which is stored in the NFC tag 2304, and may transmit the obtained identification information regarding the cooking appliance 1000 to the processor 2200.

Because the third NFC reader 2303 has identified the NFC tag 2304 of the cooking appliance 1000, the processor 2200 of the wireless power transmission apparatus 2000 may identify that the cooking appliance 1000 is located in the third cooking zone in which the third NFC reader 2303 is arranged. Also, the processor 2200 of the wireless power transmission apparatus 2000 may identify whether the cooking appliance 1000 is the first type of cooking appliance 1000a or the second type of cooking appliance 1000b, based on the identification information (e.g., information regarding a product type (coffee maker)) regarding the cooking appliance 1000.

The wireless power transmission apparatus 2000 may output, through the user interface 2500, location information regarding the cooking appliance 1000 and the identification information regarding the cooking appliance 1000. For example, when the cooking appliance 1000 is a coffee maker that is the second type of cooking appliance 1000b, the wireless power transmission apparatus 2000 may output that the coffee maker is located in the third cooking zone (cooking zone at the right center), by displaying an icon 2305 of the coffee maker at a location corresponding to the third cooking zone (cooking zone at the right center). Also, the wireless power transmission apparatus 2000 may output a pre-stored notification (e.g., "Please connect to SmartThings to check out barista's coffee") related to the coffee maker.

According to an embodiment of the disclosure, the wireless power transmission apparatus 2000 may also identify the location of the cooking appliance 1000 by using an NFC tag included in each cooking zone. Hereinafter, an operation in which the wireless power transmission apparatus 2000 including a plurality of NFC tags identifies the location of the cooking appliance 1000 is described in detail with reference to FIG. 24.

FIG. 24 is a flowchart for describing a method by which the wireless power transmission apparatus 2000 identifies a location of the cooking appliance 1000 by using NFC, according to an embodiment of the disclosure. In FIG. 24, a case in which the cooking appliance 1000 is the second-first type of cooking appliance 1000b-1 including the magnetic material and the communication interface 1030 is described as an example.

In operation S2410, the wireless power transmission apparatus 2000 may detect the cooking appliance 1000 through an IH container detection operation. For example, the wireless power transmission apparatus 2000 may detect the second-first type of cooking appliance 1000b-1 including the magnetic material, by sensing a current value of a working coil after power for detecting an IH container is transmitted.

In operation S2420, the wireless power transmission apparatus 2000 may transmit preset first level of power to the cooking appliance 1000 to drive the communication interface 1030 of the cooking appliance 1000.

When the wireless power transmission apparatus 2000 detects that the second-first type of cooking appliance 1000b-1 is located on the top plate of the wireless power transmission apparatus 2000, the wireless power transmission apparatus 2000 may wirelessly transmit, to the pickup coil 1001, first level of power (low power) for driving the PCB 1005 of the cooking appliance 1000. For example, the wireless power transmission apparatus 2000 may control the inverter circuit 2113 to cause a current corresponding to the first level of power to flow through the working coil 2120.

According to an embodiment of the disclosure, the cooking appliance 1000 may receive the first level of power transmitted from the wireless power transmission apparatus 2000 and supply power to the PCB 1005 through the pickup coil 1001. For example, the pickup coil 1001 may receive wireless power and supply AC power to the SMPS. The SMPS may convert the supplied AC power into DC power and supply the DC power to the PCB 1005. In this case, the controller 1020 and the communication interface 1030 (e.g., an NFC module) mounted on the PCB 1005 may be driven.

In operation S2430, the cooking appliance 1000 may activate the communication interface 1030 based on the first level of power and may identify a first NFC tag among the plurality of NFC tags included in the wireless power transmission apparatus 2000.

According to an embodiment of the disclosure, an NFC tag including identification information regarding a cooking zone may be attached to each cooking zone of the wireless power transmission apparatus 2000. For example, the first NFC tag may be attached to the first cooking zone, a second NFC tag may be attached to the second cooking zone, and a third NFC tag may be attached to the third cooking zone. In this case, each of the first NFC tag, the second NFC tag, and the third NFC tag may include an NFC antenna coil. According to an embodiment of the disclosure, the first NFC tag may store identification information (e.g., a first burner, an upper left burner, etc.) regarding the first cooking zone, the second NFC tag may store identification information (e.g., a second burner, a lower left burner, etc.) regarding the second cooking zone, and the third NFC tag may store identification information (e.g., a third burner, a right center burner, etc.) regarding the third cooking zone.

According to an embodiment of the disclosure, when the second-first type of cooking appliance 1000b-1 is placed on the first cooking zone, the second-first type of cooking appliance 1000b-1 may identify the first NFC tag attached to the first cooking zone through the communication coil 1002 (e.g., an NFC antenna coil) and the communication interface 1030 (e.g., an NFC module). For example, the second-first type of cooking appliance 1000b-1 may obtain the identification information (e.g., the first burner, the upper left burner, etc.) regarding the first cooking zone, which is stored in the first NFC tag.

In operation S2440, the cooking appliance 1000 may identify a cooking zone in which the cooking appliance 1000 is located, based on information included in the first NFC tag. For example, the cooking appliance 1000 may identify the identification information (e.g., the first burner, the upper left burner, etc.) regarding the first cooking zone, which is stored in the first NFC tag, and may identify that the cooking appliance 1000 is located in the first cooking zone.

In operation S2450, the cooking appliance 1000 may transmit, to the wireless power transmission apparatus 2000, the identification information regarding the cooking appliance 1000 and information regarding the cooking zone in which the cooking appliance 1000 is located. For example, the cooking appliance 1000 may transmit, to the wireless power transmission apparatus 2000, information regarding the first cooking zone and the identification information regarding the cooking appliance 1000 through short-range wireless communication (e.g., NFC, Bluetooth, and BLE).

In operation S2460, the wireless power transmission apparatus 2000 may output the identification information regarding the cooking appliance 1000 and the information regarding the first cooking zone in which the cooking appliance 1000 is located. For example, the wireless power transmission apparatus 2000 may display that the cooking appliance 1000 is located in the first cooking zone, by displaying the identification information (e.g., an icon) of the cooking appliance 1000 at an area displaying a power level of the first cooking zone in the GUI. Because operation S2460 corresponds to operation S540 of FIG. 5, a detailed description thereof is not provided herein.

An operation in which the wireless power transmission apparatus 2000 identifies the location of the cooking appliance 1000 by using a plurality of NFC tags is now described in a little more detail with reference to FIG. 25.

FIG. 25 is a diagram for describing an operation in which the wireless power transmission apparatus 2000 identifies a location of the cooking appliance 1000 by using NFC, according to an embodiment of the disclosure. In FIG. 25, a case in which the cooking appliance 1000 is a smart pot that is the second-first type of cooking appliance 1000b-1 is described as an example.

Referring to FIG. 25, the wireless power transmission apparatus 2000 may include a first NFC tag 2501 in the first cooking zone in the upper left corner, a second NFC tag 2502 in the second cooking zone in the lower left corner, and a third NFC tag 2503 in the third cooking zone at the right center. The first NFC tag 2501, the second NFC tag 2502, and the third NFC tag 2503 may be arranged under the top plate (tempered glass) of the wireless power transmission apparatus 2000 or may be arranged on the top plate of the wireless power transmission apparatus 2000. Also, the first NFC tag 2501, the second NFC tag 2502, and the third NFC tag 2503 may be arranged at the center of each cooking zone or may be arranged on the edge of each cooking zone. Each of the first NFC tag 2501, the second NFC tag 2502, and the third NFC tag 2503 may include an NFC antenna coil.

When a user puts the cooking appliance 1000 on the third cooking zone at the right center and presses a power button, the wireless power transmission apparatus 2000 may transmit power for driving the communication interface 1030 of the cooking appliance 1000. In this case, the cooking appliance 1000 may activate the communication interface 1030 (e.g., an NFC module) and may identify the third NFC tag 2503 attached to the third cooking zone. For example, because the cooking appliance 1000 is located with a preset distance (e.g., 10 cm) from the third NFC tag 2503, the cooking appliance 1000 may obtain identification information regarding the third cooking zone, which is stored in the third NFC tag 2503, through the NFC module.

The cooking appliance 1000 may identify that the cooking appliance 1000 is located in the third cooking zone (cooking zone at the right center), based on the identification information regarding the third cooking zone obtained from the third NFC tag 2503. In addition, the cooking appliance 1000 may transmit, to the wireless power transmission apparatus 2000, information regarding the third cooking zone and identification information regarding the cooking appliance 1000 through short-range wireless communication. In this case, the wireless power transmission apparatus 2000 may output, through the user interface 2500, that the cooking appliance 1000 is located in the third cooking zone. For example, when the cooking appliance 1000 is a smart pot that is the second-first type of cooking appliance 1000b-1, the wireless power transmission apparatus 2000 may output that the smart pot is located in the third cooking zone (cooking zone at the right center), by displaying an icon 2504 of the smart pot at a location corresponding to the third cooking zone (cooking zone at the right center). In FIGS. 22 to 25, the case in which the wireless power transmission apparatus 2000 identifies the location of the cooking appliance 1000 by using the NFC tag has been described as an example, but the disclosure is not limited thereto. For example, the wireless power transmission apparatus 2000 may detect the location of the cooking appliance 1000 by using a radio frequency identification (RFID) tag in addition to the NFC tag.

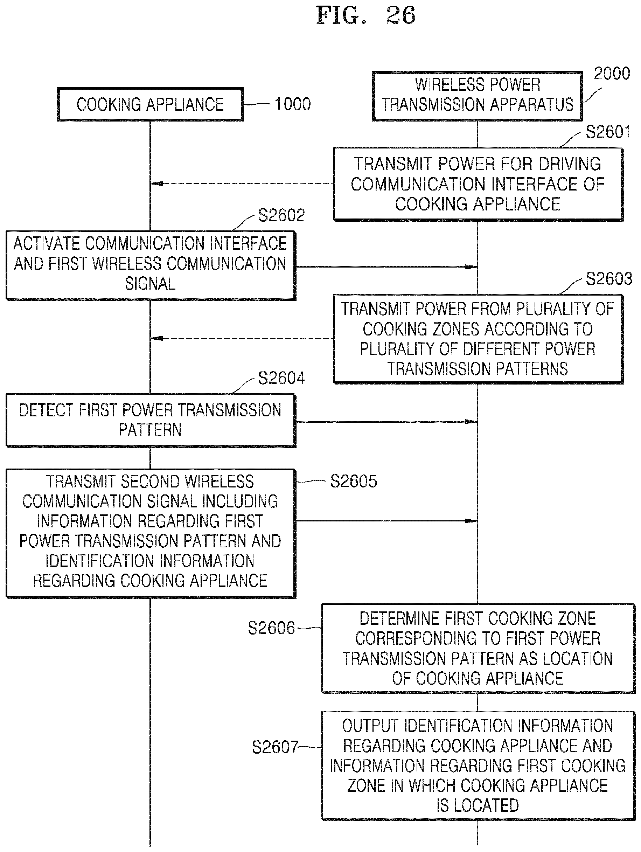

Hereinafter, an operation in which the wireless power transmission apparatus 2000 receives information regarding a power transmission pattern detected by the cooking appliance 1000 instead of receiving location information regarding the cooking appliance 1000 from the cooking appliance 1000 is described with reference to FIG. 26.

FIG. 26 is a flowchart for describing a method by which the wireless power transmission apparatus 2000 determines a location of the cooking appliance 1000, according to an embodiment of the disclosure.

In operation S2601, the wireless power transmission apparatus 2000 may transmit, to the cooking appliance 1000, power (low power) for driving the communication interface 1030 of the cooking appliance 1000. In this case, the wireless power transmission apparatus 2000 may operate in a small appliance detection mode. The power for driving the communication interface 1030 of the cooking appliance 1000 may be, e.g., about 100 W to about 300 W.

In operation S2602, according to an embodiment of the disclosure, when the cooking appliance 1000 receives the power from the wireless power transmission apparatus 2000, the cooking appliance 1000 may activate the communication interface 1030 and transmit a first wireless communication signal. For example, the cooking appliance 1000 may advertise the first wireless communication signal including a first packet at regular intervals by using short-range wireless communication (e.g., Bluetooth or BLE).

In operation S2603, according to an embodiment of the disclosure, when the wireless power transmission apparatus 2000 receives the first wireless communication signal transmitted from the communication interface 1030 of the cooking appliance 1000, the wireless power transmission apparatus 2000 may transmit power from the plurality of cooking zones according to the plurality of different power transmission patterns.

According to an embodiment of the disclosure, the first packet included in the first wireless communication signal transmitted from the cooking appliance 1000 may not include location information regarding the cooking appliance 1000. In this case, the wireless power transmission apparatus 2000 may not accurately identify on which cooking zone the cooking appliance 1000 is located. Accordingly, in order to identify the location of the cooking appliance 1000, the wireless power transmission apparatus 2000 may control the inverter circuit 2113 to output power according to different power transmission patterns for respective cooking zones. For example, when the wireless power transmission apparatus 2000 includes three cooking zones, the wireless power transmission apparatus 2000 may control the inverter circuit 2113 to output power according to the first power transmission pattern through the first working coil corresponding to the first cooking zone, output power according to the second power transmission pattern through the second working coil corresponding to the second cooking zone, and output power according to the third power transmission pattern through the third working coil corresponding to the third cooking zone. Because operation S2603 corresponds to operation S520 of FIG. 5, a detailed description thereof is not provided herein.

In operation S2604, according to an embodiment of the disclosure, the cooking appliance 1000 may detect the first power transmission pattern. According to an embodiment of the disclosure, the cooking appliance 1000 may detect one of the plurality of power transmission patterns by analyzing a voltage output from the rectifier. For example, when the cooking appliance 1000 is located in the first cooking zone, the cooking appliance 1000 may analyze a first voltage output from the rectifier and may detect the first power transmission pattern in which a duration of the power transmission interval T1 is 250 ms and a duration of the power cut-off interval T2 is 50 ms.

In operation S2605, according to an embodiment of the disclosure, the cooking appliance 1000 may transmit a second wireless communication signal including information regarding the first power transmission pattern and identification information regarding the cooking appliance 1000.

The information regarding the first power transmission pattern may include at least one of an identification value of the first power transmission pattern, a duration of a power transmission interval (or high power transmission interval), a duration of a power cut-off interval (or low power transmission interval), or a power level, but is not limited thereto. The identification information regarding the cooking appliance 1000 is unique information for identifying the cooking appliance 1000, and may include at least one of a MAC address, a model name, device type information (e.g., an IH type ID, a heater type ID, or a motor type), manufacturer information (e.g., a manufacturer ID), a serial number, or a date of manufacture, but is not limited thereto.

In operation S2606, according to an embodiment of the disclosure, the wireless power transmission apparatus 2000 may determine, based on the second wireless communication signal, the first cooking zone corresponding to the first power transmission pattern as the location of the cooking appliance 1000. For example, the wireless power transmission apparatus 2000 may identify the first cooking zone corresponding to the second power transmission pattern by identifying the information regarding the first power transmission pattern, included in the second wireless communication signal, and comparing the first power transmission pattern with information regarding a plurality of pre-stored power transmission patterns. In this case, the wireless power transmission apparatus 2000 may determine that the cooking appliance 1000 having detected the first power transmission pattern is located in the first cooking zone.

According to an embodiment of the disclosure, when the second wireless communication signal does not include information regarding a specific power transmission pattern, the wireless power transmission apparatus 2000 may output a notification to check the location of the cooking appliance 1000. For example, when the wireless power transmission apparatus 2000 receives the second wireless communication signal, but the second wireless communication signal does not include the information regarding the specific power transmission pattern, though the cooking appliance 1000 is the second type of cooking appliance 1000b (small appliance) capable of performing communication, the cooking appliance 1000 may be incorrectly placed and thus unable to detect the specific power transmission pattern. Accordingly, the wireless power transmission apparatus 2000 may output a notification to check the location of the cooking appliance 1000.

According to an embodiment of the disclosure, the wireless power transmission apparatus 2000 may display the notification to check the location of the cooking appliance 1000 on the display unit, or may output the notification by speech. After the wireless power transmission apparatus 2000 outputs the notification to check the location of the cooking appliance 1000, the wireless power transmission apparatus 2000 may retransmit power from the plurality of cooking zones according to the plurality of different power transmission patterns.

In operation S2607, the wireless power transmission apparatus 2000 may output the information regarding the first cooking zone in which the cooking appliance 1000 is located, and the identification information (product type information) regarding the cooking appliance 1000. For example, the wireless power transmission apparatus 2000 may display that the cooking appliance 1000 is located in the first cooking zone, by displaying the product type information regarding the cooking appliance 1000 at a location corresponding to the first cooking zone in the GUI. Because operation S2607 corresponds to operation S540 of FIG. 5, a detailed description thereof is not provided herein.

FIG. 27 is a diagram for describing an operation in which the wireless power transmission apparatus 2000 interworks with a server apparatus 3000, according to an embodiment of the disclosure.

Referring to FIG. 27, according to an embodiment of the disclosure, the cooking system 100 may further include the server apparatus 3000 and a display apparatus 4000, in addition to the cooking appliance 1000 and the wireless power transmission apparatus 2000. Because the cooking system 100 including the cooking appliance 1000 and the wireless power transmission apparatus 2000 has been described with reference to FIG. 1, the server apparatus 3000 and the display apparatus 4000 are now described.

According to an embodiment of the disclosure, the server apparatus 3000 may include a communication interface for communicating with an external apparatus. The server apparatus 3000 may communicate with the cooking appliance 1000, the wireless power transmission apparatus 2000, or the display apparatus 4000 through the communication interface. According to an embodiment of the disclosure, the cooking appliance 1000 may access the server apparatus 3000 by transmitting, to the server apparatus 3000, identification information regarding the cooking appliance 1000 or identification information (e.g., login information or account information) regarding a user and being authenticated by the server apparatus 3000 for the identification information regarding the cooking appliance 1000 or the identification information (login information or account information) regarding the user. Also, the wireless power transmission apparatus 2000 may access the server apparatus 3000 by transmitting, to the server apparatus 3000, identification information regarding the wireless power transmission apparatus 2000 or identification information (e.g., login information or account information) regarding the user and being authenticated by the server apparatus 3000 for the identification information regarding the wireless power transmission apparatus 2000 or the identification information (e.g., login information or account information) regarding the user.

According to an embodiment of the disclosure, the server apparatus 3000 may include an Al processor. The Al processor may train an artificial neural network to generate an Al model for recommending a temperature control method. "Training" the artificial neural network may refer to creating a mathematical model that allows optimal decision-making by connecting neurons constituting the artificial neural network while appropriately changing weight values based on data.

According to an embodiment of the disclosure, the display apparatus 4000 may be an apparatus that is connected to the server apparatus 3000 and displays information provided from the server apparatus 3000. According to an embodiment of the disclosure, the display apparatus 4000 may transmit or receive information to or from the server apparatus 3000 through a specific application (e.g., a home appliance management application) installed in the display apparatus 4000.

According to an embodiment of the disclosure, the display apparatus 4000 may be an apparatus that is connected to the cooking appliance 1000 and the wireless power transmission apparatus 2000 with the same account information. The display apparatus 4000 may be directly connected to the cooking appliance 1000 and the wireless power transmission apparatus 2000 through a short-range wireless communication channel or may be indirectly connected to the cooking appliance 1000 and the wireless power transmission apparatus 2000 through the server apparatus 3000.

According to an embodiment of the disclosure, the display apparatus 4000 may be implemented in various forms. For example, the display apparatus 4000 described in the disclosure may include a mobile terminal, a refrigerator including a display, a TV, a computer, or an oven including a display, but is not limited thereto. Also, the mobile terminal may include a smartphone, a laptop computer, a tablet personal computer (PC), a digital camera, an E-book terminal, a digital broadcasting terminal, a personal digital assistant (PDA), a portable multimedia player (PMP), a navigation device, or an MP3 player, but is not limited thereto. For example, the mobile terminal may include a wearable device that may be worn by a user. Hereinafter, for convenience of description, a case in which the display apparatus 4000 is a smartphone is described as an example.

According to an embodiment of the disclosure, the display apparatus 4000 or the wireless power transmission apparatus 2000 may receive a speech signal, which is an analog signal, through a microphone and may convert a speech part into computer-readable text by using an ASR model. The display apparatus 4000 or the wireless power transmission apparatus 2000 may obtain a user's intention to speak by interpreting the converted text by using an NLU model. In this case, the ASR model or the NLU model may be an Al model. The Al model may be processed by an AI-only processor designed in a hardware structure specialized for processing the Al model. The Al model may be created through learning. According to the disclosure, such learning may be achieved by a device itself (e.g., the display apparatus 4000 or the wireless power transmission apparatus 2000) on which Al is performed, or may be achieved through a separate server apparatus 3000 and/or a separate system. Examples of learning algorithms include supervised learning, unsupervised learning, semi-supervised learning, or reinforcement learning, but are not limited to the aforementioned examples.

The Al model may include a plurality of neural network layers. Each of the plurality of neural network layers has a plurality of weight values, and may perform a neural network operation by using an operation result of a previous layer and an operation between the plurality of weight values. The plurality of weight values of the plurality of neural network layers may be optimized based on a learning result of the Al model. For example, the plurality of weight values may be updated to reduce or minimize a loss value or a cost value obtained from the Al model during a learning process. The artificial neural network may include a deep neural network (DNN), e.g., a convolutional neural network (CNN), a deep neural network (DNN), a recurrent neural network (RNN), a restricted Boltzmann machine (RBM), a deep belief network (DBM), a bidirectional recurrent deep neural network (BRDNN), or deep Q-networks, but is not limited to the aforementioned examples.

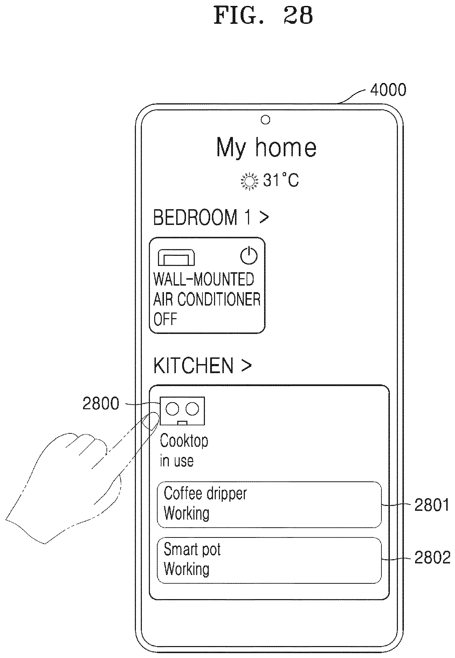

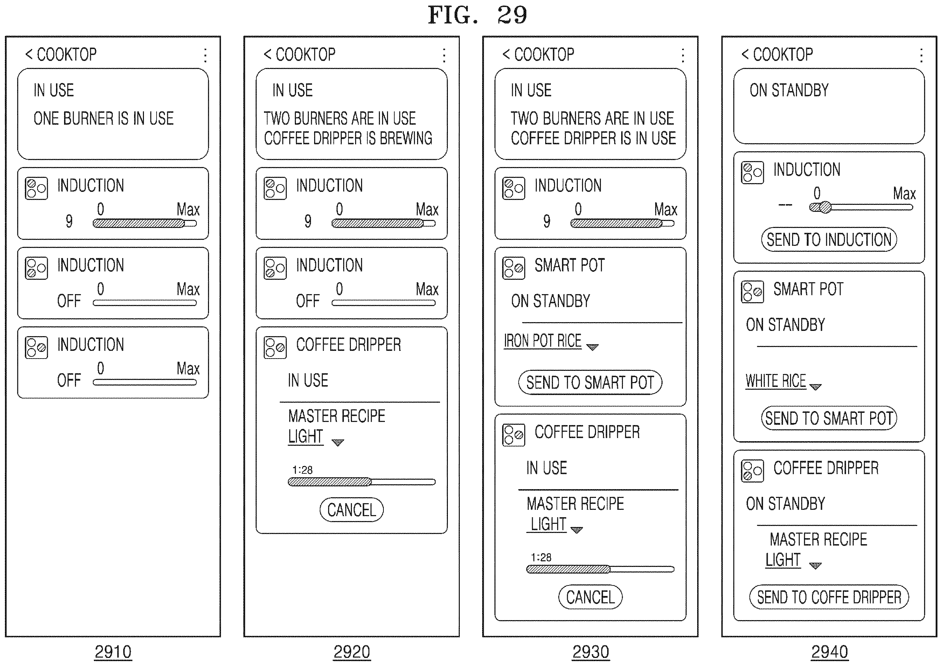

According to an embodiment of the disclosure, the display apparatus 4000 may execute, based on a user input, a specific application (e.g., a home appliance management application) provided from the server apparatus 3000. In this case, the user may identify an operation state of the wireless power transmission apparatus 2000 and an operation state of the cooking appliance 1000 through an application execution window. Hereinafter, an operation in which the server apparatus 3000 provides operation state information regarding the wireless power transmission apparatus 2000 and operation state information regarding the cooking appliance 1000 to a user through the display apparatus 4000 is described in detail with reference to FIGS. 28 and 29.

FIG. 28 is a diagram for describing an operation in which the server apparatus 3000 provides information regarding the wireless power transmission apparatus 2000 through the display apparatus 4000, according to an embodiment of the disclosure. FIG. 29 is a diagram for describing an operation in which the server apparatus 3000 provides information regarding the wireless power transmission apparatus 2000 through the display apparatus 4000, according to an embodiment of the disclosure.

Referring to FIG. 28, when a user executes an application for managing the user's home appliances on the display apparatus 4000, the display apparatus 4000 may receive information from the server apparatus 3000 and display a list of home appliances on an application execution window. The user's home appliances may be registered in the server apparatus 3000 with the same account. The home appliances may include the cooking appliance 1000 and the wireless power transmission apparatus 2000. In FIG. 28, the cooking appliance 1000 may be a coffee maker (coffee dripper) or a smart pot, and each of the coffee maker (coffee dripper) and the smart pot may be operating on the wireless power transmission apparatus 2000.

For example, the display apparatus 4000 may display, on the application execution window, a first GUI 2800 indicating the wireless power transmission apparatus 2000 (cooktop), a second GUI 2801 indicating the coffee maker (coffee dripper), and a third GUI 2802 indicating the smart pot. In this case, the first GUI 2800 may include a state (e.g., in use or off) of the wireless power transmission apparatus 2000, the second GUI 2801 may include an operation state (e.g., working) of the coffee maker (coffee dripper), and the third GUI 2802 may include an operation state (e.g., working) of the smart pot. Accordingly, the user may easily identify the operation state of the wireless power transmission apparatus 2000 and/or the operation state of the cooking appliance 1000 through the application execution window.

According to an embodiment of the disclosure, the display apparatus 4000 may receive a user input for selecting the first GUI 2800 indicating the wireless power transmission apparatus 2000.

Referring to FIG. 29, the display apparatus 4000 may display a screen related to the wireless power transmission apparatus 2000 on the application execution window, in response to the user input for selecting the first GUI 2800. In FIG. 29, a case in which the wireless power transmission apparatus 2000 includes three cooking zones is described as an example.

Referring to 2910 of FIG. 29, when the first type of cooking appliance 1000a (general IH container) is placed and operating on the first cooking zone, the display apparatus 4000 may display, on an application execution window, operation state information (e.g., "One burner is in use") regarding the wireless power transmission apparatus 2000 and operation state information regarding each cooking zone. For example, the display apparatus 4000 may display, on the application execution window, operation state information (e.g., power level: 9) regarding the first cooking zone, operation state information (e.g., off) regarding the second cooking zone, and operation state information (e.g., off) regarding the third cooking zone.

Referring to 2920 of FIG. 29, when the first type of cooking appliance 1000a (general IH container) is placed and operating on the first cooking zone, and a coffee maker (coffee dripper) is placed and operating on the third cooking zone, the display apparatus 4000 may display, on the application execution window, operation state information (e.g., "Two burners are in use") regarding the wireless power transmission apparatus 2000 and operation state information regarding each cooking zone. For example, the display apparatus 4000 may display, on the application execution window, operation state information (e.g., power level: 9) regarding the first cooking zone, operation state information (e.g., off) regarding the second cooking zone, and operation state information (e.g., in use, master recipe (light), and a progress time) regarding the third cooking zone.

Referring to 2930 of FIG. 29, when the first type of cooking appliance 1000a (general IH container) is placed and operating on the first cooking zone, a smart pot is placed and on standby on the second cooking zone, and the coffee maker (coffee dripper) is placed and operating on the third cooking zone, the display apparatus 4000 may display, on the application execution window, operation state information (e.g., "Two burners are in use") regarding the wireless power transmission apparatus 2000 and operation state information regarding each cooking zone. For example, the display apparatus 4000 may display, on the application execution window, operation state information (e.g., power level: 9) regarding the first cooking zone, operation state information (e.g., on standby and iron pot rice) regarding the second cooking zone, and operation state information (e.g., in use, master recipe (light), and a progress time) regarding the third cooking zone.

Referring to 2940 of FIG. 29, when the smart pot is placed and on standby on the second cooking zone, and the coffee maker (coffee dripper) is placed and on standby on the third cooking zone, the display apparatus 4000 may display, on the application execution window, operation state information (e.g., on standby) regarding the wireless power transmission apparatus 2000 and operation state information regarding each cooking zone. For example, the display apparatus 4000 may display, on the application execution window, operation state information (e.g., --) regarding the first cooking zone, operation state information (e.g., on standby and white rice) regarding the second cooking zone, and operation state information (e.g., on standby and master recipe (light)) regarding the third cooking zone.

In addition, the user may add recipe information to the cooking appliance 1000 through the application execution window. Hereinafter, an operation in which recipe information stored in the server apparatus 3000 is added to the cooking appliance 1000 is described in detail with reference to FIGS. 30 to 32.

FIG. 30 is a diagram for describing an operation in which the cooking appliance 1000 adds recipe information based on a user input, according to an embodiment of the disclosure.

Referring to FIG. 30, the display apparatus 4000 may display, on the application execution window, an icon 3001 for adding a recipe item of the cooking appliance 1000. When a user selects the icon 3001 on the application execution window, the display apparatus 4000 may display recipe items 3002 that may be added by the user.

In this case, when the user selects hot pot rice with abalone from among the recipe items 3002, the server apparatus 3000 may receive information indicating that the user wishes to add recipe information regarding hot pot rice with abalone to the cooking appliance 1000 through the application execution window. The server apparatus 3000 may transmit recipe information regarding hot pot rice with abalone to the wireless power transmission apparatus 2000 through long-distance communication (e.g., Wi-Fi communication) (S3010). When the wireless power transmission apparatus 2000 receives the recipe information regarding hot pot rice with abalone from the server apparatus 3000, the wireless power transmission apparatus 2000 may transmit the recipe information regarding hot pot rice with abalone to the cooking appliance 1000 placed on the wireless power transmission apparatus 2000 through a short-range wireless communication channel (S3020). The cooking appliance 1000 may store the recipe information regarding hot pot rice with abalone in a memory. In this case, a GUI screen of the cooking appliance 1000 may also be modified. For example, when the recipe information regarding hot pot rice with abalone is the first recipe information added by the user, on the GUI screen of the cooking appliance 1000, a recent dish item 3003 may be automatically generated, and hot pot rice with abalone may be located as a first menu in the recent dish item 3003. Thereafter, when recipe information regarding boiled pork slices is added, on the GUI screen of the cooking appliance 1000, boiled pork slices may be located as a first menu in the recent dish item 3003, and hot pot rice with abalone may be located as a second menu.

Then, when the user wishes to cook hot pot rice with abalone by using the cooking appliance 1000, the user may put the cooking appliance 1000 on the wireless power transmission apparatus 2000, select the recent dish item 3003 on the user interface 2500 of the wireless power transmission apparatus 2000, and then select a hot pot rice with abalone menu 3004.

Moreover, in FIG. 30, a case in which the server apparatus 3000 transmits the recipe information regarding hot pot rice with abalone to the cooking appliance 1000 through the wireless power transmission apparatus 2000 has been described as an example, but the disclosure is not limited thereto. For example, the display apparatus 4000 may also transmit the recipe information regarding hot pot rice with abalone to the cooking appliance 1000 through the wireless power transmission apparatus 2000, or the display apparatus 4000 may directly transmit the recipe information regarding hot pot rice with abalone to the cooking appliance 1000.

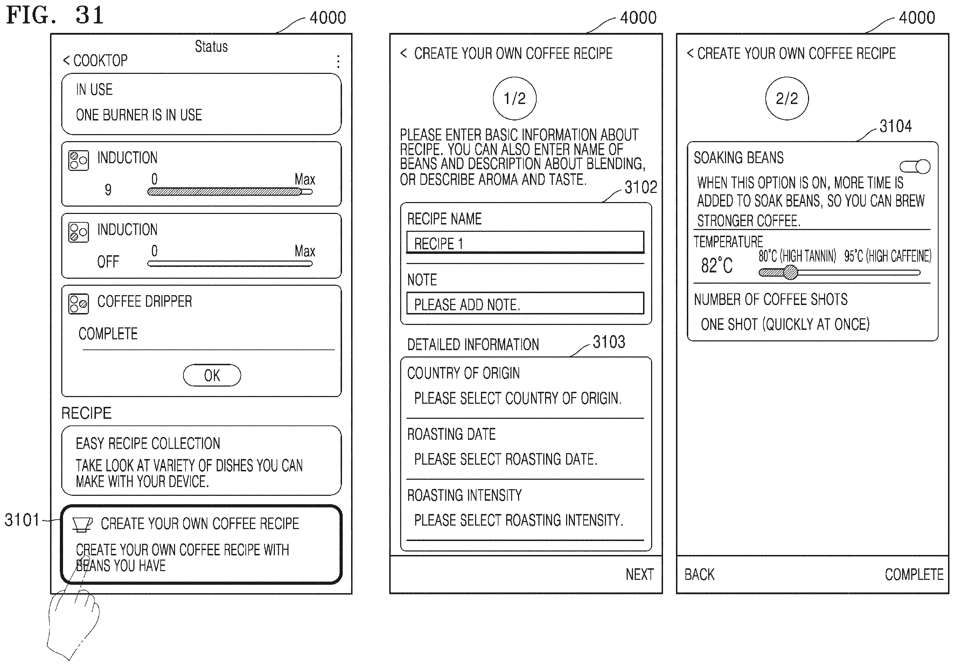

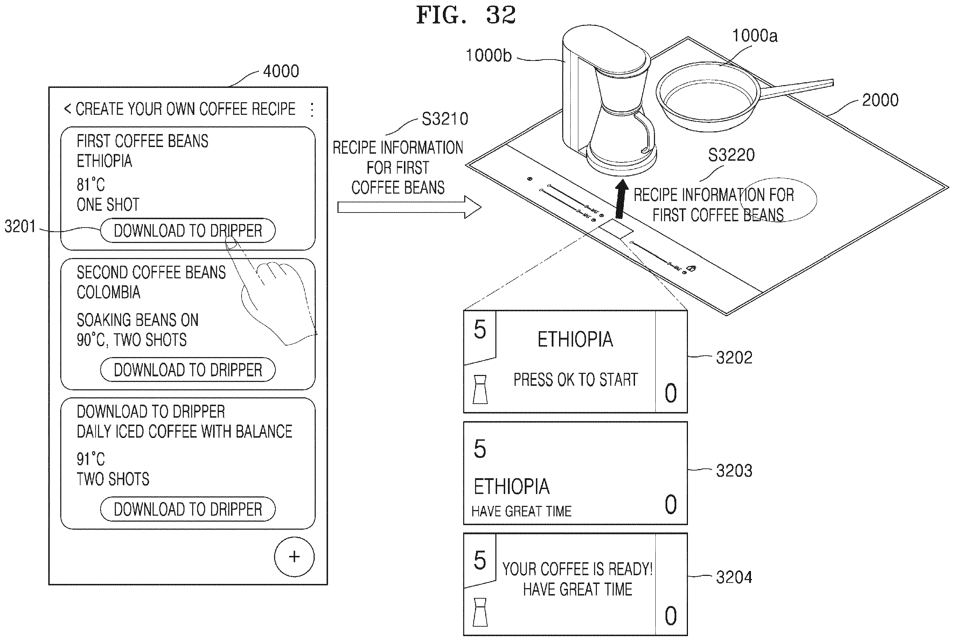

FIG. 31 is a diagram for describing an operation in which the cooking appliance 1000 adds coffee recipe information based on a user input, according to an embodiment of the disclosure. FIG. 32 is a diagram for describing an operation in which the cooking appliance 1000 adds coffee recipe information based on a user input, according to an embodiment of the disclosure. In FIGS. 31 and 32, a case in which the second type of cooking appliance 1000b is a coffee maker (coffee dripper) is described as an example.

Referring to FIG. 31, the display apparatus 4000 may display, on the application execution window, an icon 3101 for creating a coffee recipe of the second type of cooking appliance 1000b. When a user selects the icon 3101 on the application execution window, the display apparatus 4000 may display a GUI screen that allows the user to create a coffee recipe. The GUI screen may include a first field 3102 for setting a recipe name, a second field 3103 for inputting detailed information, a third field 3104 for selecting whether to soak coffee beans, a brewing temperature, and the number of coffee shots, but is not limited thereto. The user may create new coffee recipe information for each type of coffee beans by setting the recipe name (e.g., the country of origin of coffee beans, the name of a coffee bean brand, etc.) through the first field 3102, input the country of origin, a roasting date, a roasting intensity, etc. through the second field 3103, and selecting whether to soak coffee beans, the brewing temperature, and the number of coffee shots through the third field 3104.

Referring to FIG. 32, the display apparatus 4000 may display, on the application execution window, coffee recipe items (e.g., recipe information regarding first coffee beans, recipe information regarding second coffee beans, and recipe information regarding third coffee beans) created by a user. In this case, when the user selects a button 3201 to download the recipe information regarding the first coffee beans, the server apparatus 3000 may receive information indicating that the user wishes to add the recipe information regarding the first coffee beans to the second type of cooking appliance 1000b (e.g., a coffee maker) through the application execution window.

The server apparatus 3000 may transmit the recipe information regarding the first coffee beans, created by the user, to the wireless power transmission apparatus 2000 through long-distance communication (e.g., Wi-Fi communication) (S3210). When the wireless power transmission apparatus 2000 receives the recipe information regarding the first coffee beans from the server apparatus 3000, the wireless power transmission apparatus 2000 may transmit the recipe information regarding the first coffee beans to the second type of cooking appliance 1000b placed on the wireless power transmission apparatus 2000 through a short-range wireless communication channel (S3220). The second type of cooking appliance 1000b may store the recipe information regarding the first coffee beans in a memory. Accordingly, according to an embodiment of the disclosure, the user may simply create a coffee recipe suitable for his or her taste by using the display apparatus 4000 (e.g., a mobile terminal) and add the coffee recipe to the second type of cooking appliance 1000b.

In addition, when the first type of cooking appliance 1000a is placed on a cooking zone in the upper left corner of the wireless power transmission apparatus 2000, and the second type of cooking appliance 1000b is placed on a cooking zone in the lower left corner, the wireless power transmission apparatus 2000 may display, through the user interface 2500, a power level value (e.g., 5) to be transmitted to the first type of cooking appliance 1000a at a first location corresponding to the cooking zone in the upper left corner, and product type information (e.g., a coffee maker icon) of the second type of cooking appliance 1000b at a second location corresponding to the cooking zone in the lower left corner. Also, the wireless power transmission apparatus 2000 may output a first GUI screen 3202 displaying a menu screen including the recipe information (e.g., Ethiopia) regarding the first coffee beans added by the user. When the user selects the recipe information (e.g., Ethiopia) regarding the first coffee beans on the first GUI screen 3202 , the second type of cooking appliance 1000b may operate according to the recipe information (e.g., Ethiopia) regarding the first coffee beans. In this case, the wireless power transmission apparatus 2000 may output a second GUI screen 3203 displaying operation information (e.g., Ethiopia and brewing coffee) regarding the second type of cooking appliance 1000b at a location corresponding to the cooking zone in the lower left corner. In addition, when the second type of cooking appliance 1000b completes coffee brewing according to the recipe information regarding the first coffee beans, the wireless power transmission apparatus 2000 may output a third GUI screen 3204 including operation complete information (e.g., "Your coffee is ready! Have a great time).

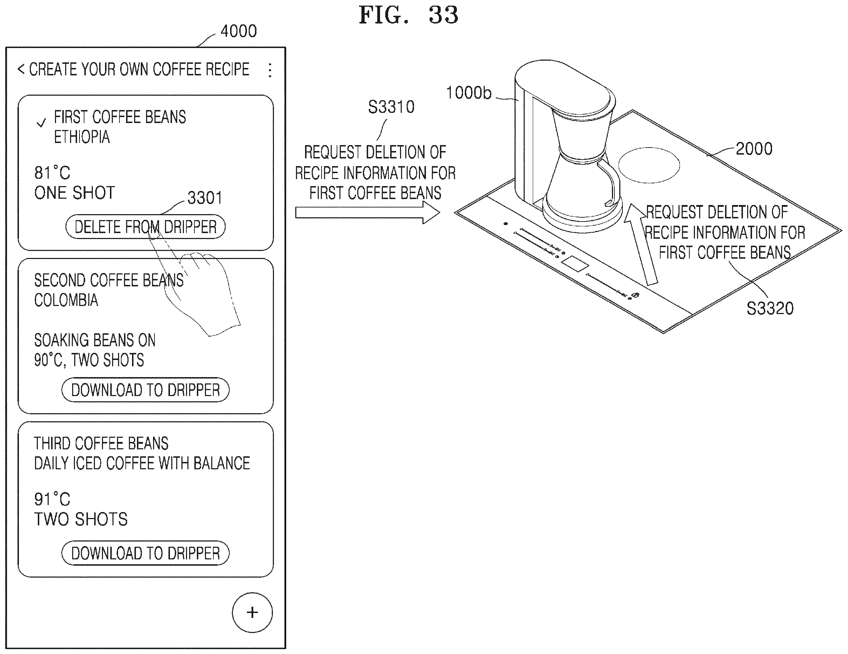

In addition, the user may delete recipe information added to the second type of cooking appliance 1000b. Referring to FIG. 33, an operation of deleting recipe information added to the second type of cooking appliance 1000b is described with reference to FIG. 33.

FIG. 33 is a diagram for describing an operation in which the second type of cooking appliance 1000b deletes recipe information based on a user input, according to an embodiment of the disclosure. In FIG. 33, a case in which the second type of cooking appliance 1000b is a coffee maker (coffee dripper) is described as an example.

Referring to FIG. 33, the display apparatus 4000 may display, on the application execution window, coffee recipe items (e.g., recipe information regarding first coffee beans, recipe information regarding second coffee beans, and recipe information regarding third coffee beans) created by a user. In this case, when the user has added the recipe information regarding the first coffee beans to the second type of cooking appliance 1000b, a delete button 3301 for deleting the recipe information regarding the first coffee beans from the second type of cooking appliance 1000b may be displayed.

When the user selects the delete button 3301, the server apparatus 3000 may receive information indicating that the user wishes to delete the recipe information regarding the first coffee beans from the second type of cooking appliance 1000b (e.g., a coffee maker) through the application execution window.

The server apparatus 3000 may transmit a deletion request for the recipe information regarding the first coffee beans to the wireless power transmission apparatus 2000 through long-distance communication (e.g., Wi-Fi communication) (S3310). When the wireless power transmission apparatus 2000 receives the deletion request for the recipe information regarding the first coffee beans from the server apparatus 3000, the wireless power transmission apparatus 2000 may transmit the deletion request for the recipe information regarding the first coffee beans to the second type of cooking appliance 1000b placed on the wireless power transmission apparatus 2000 through a short-range wireless communication channel (S3320). The second type of cooking appliance 1000b may delete the recipe information regarding the first coffee beans from the memory. Accordingly, according to an embodiment of the disclosure, when the user no longer uses the first coffee beans, the user may simply delete the recipe information regarding the first coffee beans from the second type of cooking appliance 1000b by using the display apparatus 4000 (e.g., a mobile terminal).

In addition, in FIG. 33, a case in which the server apparatus 3000 transmits the deletion request for the recipe information regarding the first coffee beans to the second type of cooking appliance 1000b through the wireless power transmission apparatus 2000 has been described as an example, but the disclosure is not limited thereto. For example, the display apparatus 4000 may also transmit the deletion request for the recipe information regarding the first coffee beans to the second type of cooking appliance 1000b through the wireless power transmission apparatus 2000, or the display apparatus 4000 may directly transmit the deletion request for the recipe information regarding the first coffee beans to the second type of cooking appliance 1000b.

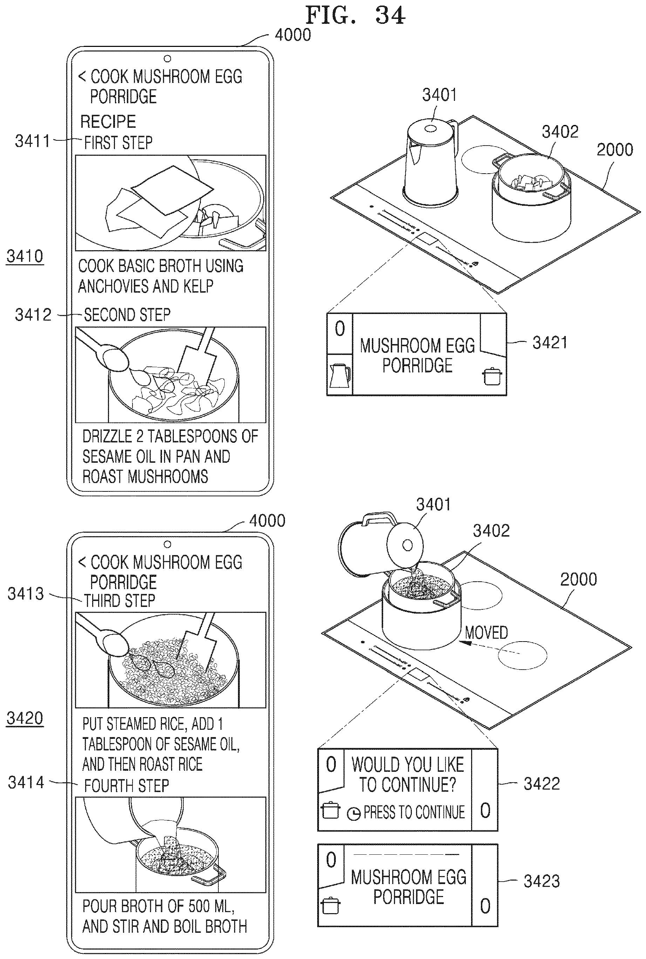

FIG. 34 is a diagram for describing an operation in which the wireless power transmission apparatus 2000 interworks with a plurality of cooking appliances based on recipe information, according to an embodiment of the disclosure. In FIG. 34, a case in which the plurality of cooking appliances are a smart kettle 3401 and a smart pot 3402 is described as an example.

Referring to 3410 of FIG. 34, a user may execute an application connected to the server apparatus 3000 on the display apparatus 4000, and search for recipe information for mushroom egg porridge on an application execution window. According to the recipe information for mushroom egg porridge, the user may cook mushroom egg porridge by using the wireless power transmission apparatus 2000, the smart kettle 3401, and the smart pot 3402. The recipe information for mushroom egg porridge may also be stored in the smart kettle 3401 and/or the smart pot 3402.

For example, according to a first step 3411 of the recipe information for mushroom egg porridge, the user may put anchovies, kelp, and water in the smart kettle 3401, and put the smart kettle 3401 on a cooking zone in the lower left corner of the wireless power transmission apparatus 2000. In this case, the wireless power transmission apparatus 2000 may identify that the smart kettle 3401 is located in the cooking zone in the lower left corner, by performing an IH container detection operation, a small appliance detection operation, and a cooking zone determination operation. The wireless power transmission apparatus 2000 may be connected to be in communication with the smart kettle 3401, and may transmit power to the smart kettle 3401 to allow the smart kettle 3401 to cook broth.

Also, according to a second step 3412 of the recipe information for mushroom egg porridge, the user may put the smart pot 3402 on a right cooking zone of the wireless power transmission apparatus 2000, then drizzle 2 tablespoons of sesame oil, and roast mushrooms. In this case, the wireless power transmission apparatus 2000 may identify that the smart pot 3402 is located in the right cooking zone, by performing an IH container detection operation, a small appliance detection operation, and a cooking zone determination operation. The wireless power transmission apparatus 2000 may be connected to be in communication with the smart pot 3402, and may transmit power to the smart pot 3402 to heat the smart pot 3402.

When the user puts the smart kettle 3401 and the smart pot 3402 on the wireless power transmission apparatus 2000, the wireless power transmission apparatus 2000 may output a first GUI 3421 displaying an icon of the smart kettle 3401 at a first location corresponding to the cooking zone in the lower left corner, displaying an icon of the smart pot 3402 at a second location corresponding to the right cooking zone, and displaying a cooking menu (mushroom egg porridge) at the center. The user may identify a current cooking menu, locations of the cooking appliances (e.g., the smart kettle 3401 and the smart pot 3402), etc. through the first GUI 3421.

Referring to 3420 of FIG. 34, according a third step 3413 of the recipe information for mushroom egg porridge, the user may put steamed rice into the smart pot 3402, add 1 tablespoon of sesame oil, and then roast the steamed rice. In addition, according to a fourth step 3414 of the recipe information for mushroom egg porridge, the user may pick up the smart kettle 3401 and pour the broth into the smart pot 3402. Moreover, the user may put the smart kettle 3401 down on the countertop, change the location of the smart pot 3402 from the right cooking zone to the cooking zone in the lower left corner, and then stir and boil contents of the smart pot 3402.

When a communication connection with the smart kettle 3401 is released because the smart kettle 3401 is picked up, the wireless power transmission apparatus 2000 may perform a small appliance detection operation to re-detect the smart kettle 3401. However, because the smart kettle 3401 is no longer present on the wireless power transmission apparatus 2000, the wireless power transmission apparatus 2000 is unable to detect the smart kettle 3401. Accordingly, the icon of the smart kettle 3401 may no longer appear on the display unit of the wireless power transmission apparatus 2000.

In addition, when the user picks up the smart pot 3402 operating in the right cooking zone and puts the smart pot 3402 on the cooking zone in the lower left corner, the communication connection between the wireless power transmission apparatus 2000 and the smart pot 3402 may be temporarily released. Therefore, the wireless power transmission apparatus 2000 may perform a small appliance detection operation and a cooking zone determination operation to re-detect the smart pot 3402. The wireless power transmission apparatus 2000 may identify, through the small appliance detection operation and the cooking zone determination operation, that the smart pot 3402 is located in the cooking zone in the lower left corner, and may display the icon of the smart pot 3402 at a location corresponding to the cooking zone in the lower left corner instead of a location corresponding to the right cooking zone. In addition, the wireless power transmission apparatus 2000 may be reconnected to be in communication with the smart pot 3402, and identify whether an operation history of the smart pot 3402 is present within a preset time (e.g., 3 seconds) based on identification information (e.g., a MAC address or device ID) regarding the smart pot 3402. Because the operation history of the smart pot 3402 is present within the preset time (e.g., 3 seconds), the wireless power transmission apparatus 2000 may output a second GUI screen 3422 asking the user whether to continue the operation of the smart pot 3402. When the user wishes to continue the operation of smart pot 3402, the wireless power transmission apparatus 2000 may continue displaying information regarding a cooking progress corresponding to a time when the communication connection with the smart pot 3402 is released. For example, the wireless power transmission apparatus 2000 may output a third GUI screen 3423 displaying a menu that was being cooked (e.g., mushroom egg porridge).

The method according to an embodiment of the disclosure may be implemented in the form of program commands that can be executed by various computer means, and may be recorded on computer-readable recording media. The computer-readable recording media may include program commands, data files, data structures etc. alone or in combination. The program commands written to the computer-readable recording media may be specifically designed and configured for the embodiments of the disclosure or may be well-known and available to one of ordinary skill in the art. Examples of the computer readable recording media include magnetic media (e.g., hard disks, floppy disks, magnetic tapes, etc.), optical media (e.g., compact disc (CD)-ROMs, or digital video discs (DVDs)), magneto-optical media (e.g., floptical disks), and hardware devices (e.g., ROM, RAM, flash memories, etc.) specifically configured to store and execute program commands. Examples of the program commands include advanced language codes that may be executed by a computer by using an interpreter or the like as well as machine language codes made by a compiler.

Some embodiments of the disclosure may be implemented in the form of computer-readable recording media, such as program modules to be executed by computers, which include computer-executable instructions. The computer-readable recording media may be any available media accessible by computers, and may include volatile or non-volatile media and detachable or non-detachable media. Further, the computer-readable media may include both computer storage media and communication media. The computer storage media include both volatile and non-volatile, detachable or non-detachable media implemented using any method or technique for storing information, such as computer-readable instructions, data structures, program modules, or other data. The communication media generally include computer-readable instructions, data structures, program modules, other data in a modulated data signal, or other transmission mechanisms, and include any information transmission media. Also, some embodiments of the disclosure may be implemented as computer programs or computer program products, such as computer programs executed by computers, which include computer-executable instructions.

A device-readable storage medium may be provided in the form of a non-transitory storage medium. In this regard, the term "non-transitory storage medium" simply means that the storage medium is a tangible device and does not include a signal (e.g., an electromagnetic wave), but this term does not differentiate between where data is semi-permanently stored in the storage medium and where the data is temporarily stored in the storage medium. For example, the "non-transitory storage medium" may include a buffer in which data is temporarily stored.

According to an embodiment of the disclosure, the method according to various embodiments disclosed herein may be included and provided in a computer program product. The computer program product can be traded as a commodity between a seller and a buyer. The computer program product may be distributed in the form of a machine-readable storage medium (e.g., CD-ROM), or be distributed (e.g., downloaded or uploaded) online via an application store, or between two user devices (e.g., smartphones) directly. In the case of online distribution, at least a part of the computer program product (e.g., a downloadable app) may be temporarily stored or temporarily generated in a device-readable storage medium, such as a memory of a manufacturer server, an application store server, or a relay server.

According to an embodiment of the disclosure, there may be provided a method of identifying a changed location of a cooking appliance 1000 by transmitting power according to different power transmission patterns for respective cooking zones, and outputting information regarding the changed location of the cooking appliance 1000, a wireless power transmission apparatus 2000 therefor.

According to an embodiment of the disclosure, there may be provided a method of allowing a cooking appliance 1000 to continue performing a cooking operation even though a location of the cooking appliance 1000 is changed during cooking, and a wireless power transmission apparatus 2000 therefor.

According to an embodiment of the disclosure, a wireless power transmission apparatus 2000 including a plurality of cooking zones may include: a first communication interface 2300 configured to communicate with a cooking appliance 1000; an output interface 2510 configured to display information regarding the cooking appliance 1000; a wireless power transmitter 2100 including a plurality of working coils 2120 and an inverter circuit 2113, the plurality of working coils 2120 respectively corresponding to the plurality of cooking zones, and the inverter circuit 2113 being configured to drive the plurality of working coils 2120; and at least one processor 2200. The at least one processor 2200 may be configured to, in response to release of a communication connection with the cooking appliance 1000 that has been located in a first cooking zone among the plurality of cooking zones, control the inverter circuit 2113 to transmit power for driving a second communication interface 1030 of the cooking appliance 1000. The at least one processor 2200 may be configured to, in a case where a first wireless communication signal including identification information regarding the cooking appliance 1000 is received through the first communication interface 2300 within a preset time after the communication connection is released, control the inverter circuit 2113 to drive the plurality of working coils 2120 to generate a magnetic field according to a plurality of different power transmission patterns. The at least one processor 2200 may be configured to receive a second wireless communication signal from the cooking appliance 1000 through the first communication interface 2300, the second wireless communication signal including the identification information regarding the cooking appliance 1000 and information regarding a second cooking zone corresponding to a power transmission pattern detected at a location of the cooking appliance 1000, among the plurality of power transmission patterns. The at least one processor 2200 may be configured to, based on the second wireless communication signal, output, through the output interface 2510, the information regarding the second cooking zone in which the cooking appliance 1000 is located, among the plurality of cooking zones.

According to an embodiment of the disclosure, the plurality of power transmission patterns may be differently set based on at least one of a duration of a power transmission interval, a duration of a power cut-off interval, or a power level.

According to an embodiment of the disclosure, the first wireless communication signal may include information indicating that a current location of the cooking appliance 1000 is not identifiable.

According to an embodiment of the disclosure, the at least one processor 2200 may be configured to, while the cooking appliance 1000 is located in the first cooking zone, display the identification information regarding the cooking appliance 1000 at a first location indicating the first cooking zone in a GUI screen. According to an embodiment of the disclosure, the at least one processor 2200 may be configured to control the output interface 2510 to, in a case where the cooking appliance 1000 is moved from the first cooking zone to the second cooking zone, display the identification information regarding the cooking appliance 1000 at a second location indicating the second cooking zone in the GUI screen.

According to an embodiment of the disclosure, the at least one processor 2200 may be configured to, based on the identification information regarding the cooking appliance 1000 included in the second wireless communication signal, identify whether an operation history of the cooking appliance 1000 is present within a preset time before the second wireless communication signal is received. According to an embodiment of the disclosure, the at least one processor 2200 may be configured to, in a case where the operation history of the cooking appliance 1000 is present, control the output interface 2510 to output information regarding a cooking progress of the cooking appliance 1000 corresponding to a time when the communication connection with the cooking appliance 1000 is released.

According to an embodiment of the disclosure, the information regarding the cooking progress of the cooking appliance 1000 may include at least one of a cooking menu, an elapsed cooking time, or a cooking stage when the communication connection with the cooking appliance 1000 is released.

According to an embodiment of the disclosure, the wireless power transmission apparatus 2000 may further include memory 2600 storing the information regarding the cooking progress of the cooking appliance 1000. According to an embodiment of the disclosure, the at least one processor 2200 may be configured to obtain the information regarding the cooking progress of the cooking appliance 1000 from the memory 2600.

According to an embodiment of the disclosure, the at least one processor 2200 may be configured to, in response to a communication reconnection with the cooking appliance 1000 after the second wireless communication signal is received, receive the information regarding the cooking progress of the cooking appliance 1000 from the cooking appliance 1000.

According to an embodiment of the disclosure, the at least one processor 2200 may be configured to, in response to a communication reconnection with the cooking appliance 1000 after the second wireless communication signal is received, receive first power control information from the cooking appliance 1000 through the first communication interface 2300, the first power control information including a first power level value when the communication connection with the cooking appliance 1000 is released. According to an embodiment of the disclosure, the at least one processor 2200 may be configured to, based on the first power control information, control the inverter circuit 2113 to transmit power corresponding to the first power level value to the cooking appliance 1000.

According to an embodiment of the disclosure, the first power control information may further include duration information regarding the first power level value.

According to an embodiment of the disclosure, the first power level value may be determined based on recipe information being applied to the cooking appliance 1000 before the communication connection with the cooking appliance 1000 is released.

According to an embodiment of the disclosure, the at least one processor 2200 may be configured to receive second power control information obtained by adjusting the first power level value to a second power level value based on a temperature increase rate of the cooking appliance 1000. According to an embodiment of the disclosure, the at least one processor 2200 may be configured to, based on the second power control information, control the inverter circuit 2113 to transmit power corresponding to the second power level value to the cooking appliance 1000.

According to an embodiment of the disclosure, a wireless power transmission efficiency of the second cooking zone may be different from a wireless power transmission efficiency of the first cooking zone.

According to an embodiment of the disclosure, a method, performed by a wireless power transmission apparatus 2000 including a plurality of cooking zones, of outputting information regarding a cooking appliance 1000 may include: in response to release of a communication connection with the cooking appliance 1000 that has been located in a first cooking zone among the plurality of cooking zones, transmitting power for driving a communication interface 1030 of the cooking appliance 1000 (S510); in a case where a first wireless communication signal including identification information regarding the cooking appliance 1000 is received within a preset time after the communication connection is released, transmitting power from the plurality of cooking zones according to a plurality of different power transmission patterns (S520); receiving a second wireless communication signal from the cooking appliance 1000, the second wireless communication signal including the identification information regarding the cooking appliance 1000 and information regarding a second cooking zone corresponding to a power transmission pattern detected at a location of the cooking appliance 1000, among the plurality of power transmission patterns (S530); and based on the second wireless communication signal, outputting, through an output interface 2510 of the wireless power transmission apparatus 2000, the information regarding the second cooking zone in which the cooking appliance 1000 is currently located, among the plurality of cooking zones (S540).

According to an embodiment of the disclosure, the outputting of the information regarding the second cooking zone and the identification information regarding the cooking appliance 1000 may include, while the cooking appliance 1000 is located in the first cooking zone, displaying the identification information regarding the cooking appliance 1000 at a first location indicating the first cooking zone in a GUI screen, and in a case where the cooking appliance 1000 is moved from the first cooking zone to the second cooking zone, displaying the identification information regarding the cooking appliance 1000 at a second location indicating the second cooking zone in the GUI screen.

According to an embodiment of the disclosure, the method may further include: based on the identification information regarding the cooking appliance 1000 included in the second wireless communication signal, identifying whether an operation history of the cooking appliance 1000 is present within a preset time before the second wireless communication signal is received; and in a case where the operation history of the cooking appliance 1000 is present, outputting information regarding a cooking progress of the cooking appliance 1000 corresponding to a time when the communication connection with the cooking appliance 1000 is released.

According to an embodiment of the disclosure, the method may further include: in response to a communication reconnection with the cooking appliance 1000 after the second wireless communication signal is received, receiving first power control information from the cooking appliance 1000, the first power control information including a first power level value when the communication connection with the cooking appliance 1000 is released; and based on the first power control information, transmitting power corresponding to the first power level value to the cooking appliance 1000.

According to an embodiment of the disclosure, the method may further include: receiving second power control information obtained by adjusting the first power level value to a second power level value based on a temperature increase rate of the cooking appliance 1000; and based on the second power control information, transmitting power corresponding to the second power level value to the cooking appliance 1000.

According to an embodiment of the disclosure, a wireless power transmission efficiency of the second cooking zone may be different from a wireless power transmission efficiency of the first cooking zone.

According to an embodiment of the disclosure, a computer-readable recording medium may have stored therein a program for executing a method including: in response to release of a communication connection with the cooking appliance 1000 that has been located in a first cooking zone among the plurality of cooking zones, transmitting power for driving a communication interface 1030 of the cooking appliance 1000; in a case where a first wireless communication signal including identification information regarding the cooking appliance 1000 is received within a preset time after the communication connection is released, transmitting power from the plurality of cooking zones according to a plurality of different power transmission patterns; receiving a second wireless communication signal from the cooking appliance 1000, the second wireless communication signal including the identification information regarding the cooking appliance 1000 and information regarding a second cooking zone corresponding to a power transmission pattern detected at a location of the cooking appliance 1000, among the plurality of power transmission patterns; and based on the second wireless communication signal, outputting, through an output interface 2510 of the wireless power transmission apparatus 2000, the information regarding the second cooking zone in which the cooking appliance 1000 is currently located, among the plurality of cooking zones.

## Claims

1. A wireless power transmission apparatus (2000) comprising:
a plurality of cooking zones;
a communication interface (2300) configured to communicate with a cooking appliance (1000);
an output interface (2510) configured to display information regarding the cooking appliance (1000);
a wireless power transmitter (2100) including:
a plurality of working coils (2120) respectively corresponding to the plurality of cooking zones, and
an inverter circuit (2113) configured to drive the plurality of working coils (2120); and
at least one processor (2200) configured to:
in response to release of a communication connection with the cooking appliance (1000) that has been located in a first cooking zone among the plurality of cooking zones, control the inverter circuit (2113) to drive the plurality of working coils to transmit power to drive a communication interface (1030) of the cooking appliance (1000);
in response to receiving a first wireless communication signal including identification information regarding the cooking appliance from the cooking appliance through the communication interface of the wireless power transmission apparatus within a preset time after the communication connection is released, control the inverter circuit to drive the plurality of working coils to generate respectively corresponding magnetic fields according to a plurality of different power transmission patterns; and
in response to receiving a second wireless communication signal including the identification information regarding the cooking appliance and information regarding a second cooking zone among the plurality of cooking zones corresponding to one of the plurality of different power transmission patterns detected at a current location of the cooking appliance (1000),from the cooking appliance through the communication interface of the wireless power transmission apparatus, outputting, through the output interface (2510), the information regarding the second cooking zone.

2. The wireless power transmission apparatus of claim 1, wherein
the plurality of different power transmission patterns are differently set based on at least one of a duration of a power transmission interval, a duration of a power cut-off interval, or a power level.

3. The wireless power transmission apparatus of claim 1, wherein
the first wireless communication signal includes information indicating that a current location of the cooking appliance is not identifiable.

4. The wireless power transmission apparatus of claim 1, wherein
the at least one processor is further configured to control the output interface to:
while the cooking appliance is located in the first cooking zone, display the identification information regarding the cooking appliance at a first location indicating the first cooking zone in a graphical user interface (GUI) screen, and
in response to the cooking appliance being moved from the first cooking zone to the second cooking zone, display the identification information regarding the cooking appliance at a second location indicating the second cooking zone in the GUI screen.

5. The wireless power transmission apparatus of claim 1, wherein
the at least one processor is further configured to:
based on the identification information regarding the cooking appliance included in the second wireless communication signal, identify whether an operation history of the cooking appliance is present within a preset time before the second wireless communication signal is received, and
in response to the operation history of the cooking appliance being present, control the output interface to output information regarding a cooking progress of the cooking appliance corresponding to a time when the communication connection with the cooking appliance is released.

6. The wireless power transmission apparatus of claim 5, wherein
the information regarding the cooking progress of the cooking appliance includes at least one of a cooking menu, an elapsed cooking time, or a cooking stage when the communication connection with the cooking appliance is released.

7. The wireless power transmission apparatus of claim 5, further comprising:
a memory (2600) configured to store the information regarding the cooking progress of the cooking appliance,
wherein the at least one processor is configured to obtain the information regarding the cooking progress of the cooking appliance from the memory (2600).

8. The wireless power transmission apparatus of claim 5, wherein
the at least one processor is further configured to:
in response to a communication reconnection with the cooking appliance after the second wireless communication signal is received, receive the information regarding the cooking progress of the cooking appliance from the cooking appliance.

9. The wireless power transmission apparatus of claim 1, wherein
the at least one processor is further configured to:
in response to a communication reconnection with the cooking appliance after the second wireless communication signal is received, receive first power control information from the cooking appliance through the communication interface of the wireless power transmission apparatus, the first power control information including a first power level value when the communication connection with the cooking appliance is released, and
based on the first power control information, control the inverter circuit to drive the plurality of working coils transmit power corresponding to the first power level value to the cooking appliance.

10. The wireless power transmission apparatus of claim 9, wherein
the first power control information further includes duration information regarding the first power level value.

11. The wireless power transmission apparatus of claim 9, wherein
the first power level value is determined based on recipe information applied to the cooking appliance before the communication connection with the cooking appliance is released.

12. The wireless power transmission apparatus of claim 9, wherein
the at least one processor is further configured to:
receive second power control information obtained by adjusting the first power level value to a second power level value based on a temperature increase rate of the cooking appliance, and
based on the second power control information, control the inverter circuit drive the plurality of working coils to transmit power corresponding to the second power level value to the cooking appliance.

13. The wireless power transmission apparatus of claim 1, wherein
a wireless power transmission efficiency of the second cooking zone is different from a wireless power transmission efficiency of the first cooking zone.

14. A method of a wireless power transmission apparatus, the method comprising:
in response to release of a communication connection with a cooking appliance that has been located in a first cooking zone among a plurality of cooking zones of the wireless power transmission apparatus, transmitting power to drive a communication interface of the cooking appliance (S510);
in response to receiving a first wireless communication signal including identification information regarding the cooking appliance from the cooking appliance within a preset time after the communication connection is released, transmitting power respectively through the plurality of cooking zones according to a plurality of different power transmission patterns (S520); and
in response to receiving a second wireless communication signal including the identification information regarding the cooking appliance and information regarding a second cooking zone among the plurality of cooking zones corresponding to one of the plurality of different power transmission patterns detected at a current location of the cooking appliance, outputting, through an output interface of the wireless power transmission apparatus, the information regarding the second cooking zone.

15. The method of claim 14, wherein
the outputting of the information regarding the second cooking zone includes:
while the cooking appliance is located in the first cooking zone, displaying the identification information regarding the cooking appliance at a first location indicating the first cooking zone in a graphical user interface (GUI) screen, and
in response to the cooking appliance being moved from the first cooking zone to the second cooking zone, displaying the identification information regarding the cooking appliance at a second location indicating the second cooking zone in the GUI screen.
